(19) Europäisches Patentamt
European Patent Office
Office européen des brevets

(11) EP 2 293 583 A1

(12) # EUROPEAN PATENT APPLICATION
published in accordance with Art. 153(4) EPC

(43) Date of publication:
**09.03.2011 Bulletin 2011/10**

(21) Application number: **09769869.0**

(22) Date of filing: **18.06.2009**

(51) Int Cl.:
***H04N 13/00*** *(2006.01)* ***G06T 15/00*** *(2011.01)*
***H04N 5/93*** *(2006.01)*

(86) International application number:
**PCT/JP2009/002775**

(87) International publication number:
**WO 2009/157159 (30.12.2009 Gazette 2009/53)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **24.06.2008 JP 2008164080**
**30.10.2008 US 109576 P**

(71) Applicant: **Panasonic Corporation**
**Kadoma-shi**
**Osaka 571-8501 (JP)**

(72) Inventors:
- **OASHI, Masahiro**
  **Osaka-shi, Osaka 540-6207 (JP)**
- **OKUBO, Masafumi**
  **Osaka-shi, Osaka 540-6207 (JP)**
- **LEICHSENRING, Germano**
  **Osaka-shi, Osaka 540-6207 (JP)**
- **OTO, Hidetaka**
  **Osaka-shi, Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **RECORDING MEDIUM, REPRODUCING DEVICE, INTEGRATED CIRCUIT, REPRODUCING METHOD, AND PROGRAM**

(57) A plurality of contents and a BD-J object are recorded on a multi-layered BD-ROM. The plurality of contents include those that comprise a planar view video, and those that comprise a stereoscopic view video. A BD-J object includes an application management table and a GUI management table. The application management table is information specifying the application to be started up to the playback apparatus, when a specific content becomes targeted for playback among the plurality of contents. A flag in the configuration information of the GUI management table indicates whether reserving a plurality of plane memories is necessary for realizing a stereoscopic view of the graphics.

FIG. 22A

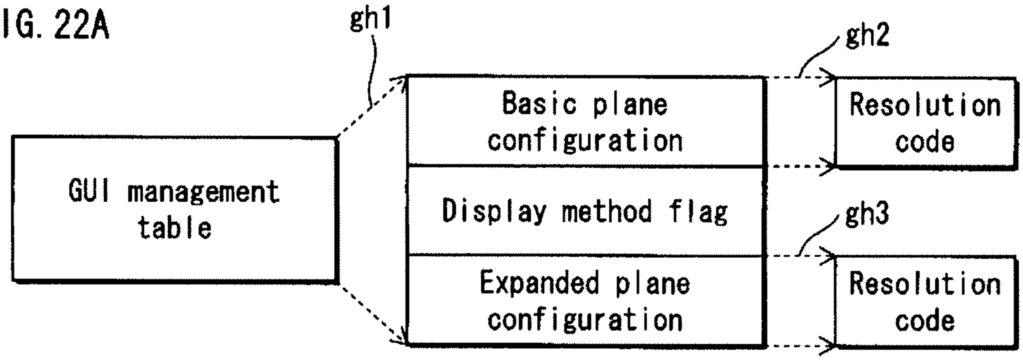


EP 2 293 583 A1

FIG. 22B

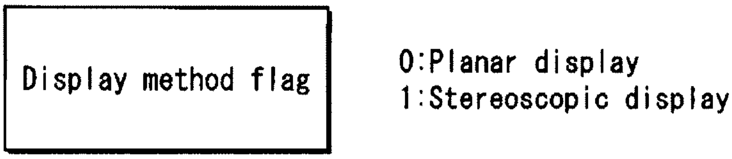


FIG. 22C

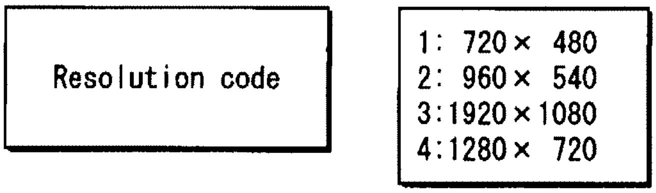

## Description

### [Technical Field]

The present invention relates to the technological field of stereoscopic playback.

### [Background Art]

Stereoscopic playback is technology for realizing a stereoscopic view by preparing images for two viewpoints, a right view and a left view. From a technological standpoint of determining how to show pictures corresponding to either the right or the left eye to the corresponding eye only, several types of technology have been put into practical use, starting with a successive disconnect method. The successive disconnect method is a method in which displaying a left view video and a right view video alternately in a time axis direction causes scenes viewed by the right and the left eye to overlap in the brain due to an afterimage effect in the eyes, thus causing the video to be perceived as stereoscopic. When using this method, since the left view video and the right view video are displayed alternately in a time axis direction, for example, instead of 24 frames of video per second that would normally be displayed in the case of a two-dimensional movie, 48 frames of video per second must be displayed as a total of the left and right view videos. Since such left and right view videos must be stored in separate memories and supplied to be composited, storing one frame worth of pixel data requires two memories (plane memories).

Note that one method for dynamically switching between a planar display and a stereoscopic display is a switching method described in Japanese Patent Application Publication No.2004-109330. The playback apparatus described in Japanese Patent Application Publication No.2004-109330 includes a key input unit, and a display switching unit for switching between a planar display (2D) and a stereoscopic display (3D). The display switching unit performs the switching between the planar display and the stereoscopic display according to a key input received by the key input unit.

### [Citation List]

[Patent Literature]

[Patent Literature 1]
Patent document 1: Japanese Patent Application Publication No.2004-109330

### [Summary of Invention]

### [Technical Problem]

Meanwhile, there is a demand for technology that facilitates user operations when playing back stereoscopic contents by starting up applications and drawing GUI in applications when the stereoscopic contents are played back. The reason is that, with respect to the use of preexisting BD-ROM contents, a high level of processing has been realized, namely causing contents and applications to run and causing the applications to perform GUI processing, and there is demand on the part of content creators to realize such processing for stereoscopic contents as well. However, since a graphics plane that is a plane memory for drawing GUI must be reserved separately from the plane memory (video plane) for realizing stereoscopic moving images, twice the number of video planes and graphics planes must be reserved compared to a case of playing back planar content. The necessary memory scale for the GUI for obtaining a resolution of image quality suitable for HDTV is also double the size, and this memory scale combined with the video plane for storing the video stream causes nearly the entire area of a memory device incorporated in a playback apparatus to be occupied by plane memory. Specifically, a resolution of 1920*1080 is necessary for image quality suitable for HDTV, and considering a bit length of an index per pixel to be 32 bits, the total capacity of the graphics plane is 8 megabytes (≈920*1080*32). Performing stereoscopic view strains resources since reserving respective graphics planes for right and left views requires using 16 megabytes of memory.

Meanwhile, there is a demand for technology that facilitates user operations when playing back stereoscopic contents by starting up applications and drawing GUI in applications when the stereoscopic contents are played back. The reason is that, with respect to the use of preexisting BD-ROM contents, a high level of processing has been realized, namely causing contents and applications to run and causing the applications to perform GUI processing, and there is demand on the part of content creators to realize such processing for stereoscopic contents as well. However, since a graphics plane that is a plane memory for drawing GUI must be reserved separately from the plane memory (video plane) for realizing stereoscopic moving images, twice the number of video planes and graphics planes must be reserved compared to a case of playing back planar content. The necessary memory scale for the GUI for obtaining a resolution of image quality suitable for HDTV is also double the size, and this memory scale combined with the video plane for storing the video stream causes nearly the entire area of a memory device incorporated in a playback apparatus to be occupied by plane memory. Specifically, a resolution of 1920*1080 is necessary for image quality suitable for HDTV, and considering a bit length of an index per pixel to be 32 bits, the total capacity of the graphics plane is 8 megabytes (≈1920*1080*32). Performing stereoscopic view strains resources since reserving respective graphics planes for right and left views requires using 16 megabytes of memory.

The stereoscopic switching described in the cited document is realized by the user actively and intentionally switching between stereoscopic view and planar view. When this technology is applied, unless the user actively and intentionally switches from stereoscopic view to planar view, the plane memory remains reserved for stereoscopic view. Therefore, the invention described in the cited document does not provide a solution for the above-described technological problem.

The aim of the present invention is to provide a recording medium that enables avoiding a state of insufficient resources when a plurality of contents that are partially stereoscopic contents, and partially planar contents are played back from the recording medium.

**[Solution to Problem]**

To solve the above problem, the recording medium of the present invention has a plurality of contents recorded thereon, the contents including a plurality of video data pieces, a management object, and one or more applications, wherein the video data is either video data for realizing a planar view or video data for realizing a stereoscopic view, the management object included in the contents includes an application management table and configuration information, the application management table instructs a playback apparatus which application is to be started up when a content including the application management table is targeted for playback, the configuration information instructs the playback apparatus to reserve a graphics plane in a memory device included in the playback apparatus, the graphics plane being an area in the memory device on which the application is to draw graphics at a resolution of the video data, and the configuration information includes a flag, a setting value of the flag indicating a number of graphics planes to be reserved, such that for stereoscopic view, the number of graphics planes indicated by the setting value of the flag is two.

**[Advantageous Effects of Invention]**

The flag in the configuration information piece indicates whether reserving a plurality of graphics planes for realizing stereoscopic graphics is necessary. Therefore, when playing back contents that do not require an additional graphics plane, the number of graphics planes to be reserved returns to one. Even when a graphics plane is added for stereoscopic contents, the added graphics plane does not remain reserved after playback, straining the available capacity in the memory. This structure enables stabilizing operations of applications. For this reason, when the target for playback is a BD-ROM on which only one of the contents is stereoscopic and the remaining contents are planar, this structure enables immediately releasing the plurality of graphics planes for stereoscopic view after playing back the stereoscopic content.

In the technology recited in patent document 1 that is the cited document, since the requirement for stereoscopic view is controlled by the user, control cannot be performed to reserve or forcibly release a plane memory. However, in the present invention, since reserving the plane memory can be realized intentionally on the authoring side, stable operation of the application can be realized.

**[Brief Description of Drawings]**

Figs.1A, 1B, and 1C illustrate a mode of use of the recording medium and the playback apparatus;
Fig.2 shows an internal structure of a BD-ROM;
Fig.3 shows an application format of a BD-ROM;
Fig.4 shows a process by which source packets that make up left view streams and right view streams are written to an AV data area;
Fig.5 shows relationships between physical units of a BD-ROM and source packets that make up one file extent;
Fig.6 shows correspondences between a plurality of numerical ranges into which packet IDs of TS packets may fit, and PES stream types of TS packets having packet IDs that fit in the respective numerical ranges;

Fig.7 shows an exemplary interleaving arrangement;
Fig.8 shows an exemplary internal structure of BaseView streams and EnhancedView streams for a stereoscopic view;
Fig.9 shows how images are shown when switching is performed between transparency and opacity of a pair of goggles at the timings in Fig.8;
Fig. 10 shows a stereoscopic image formed by an afterimage effect in the eyes;
Fig.1 shows an exemplary clip information file;
Figs.12A and B show an internal structure of an entry map table;
Fig. 3 shows registration of an entry point on an entry map;
Fig. 4 shows how entry maps corresponding to each of the left view and the right view are set;
Fig. 15 shows a data structure of PlayList information;
Fig. 1 shows an internal structure of a SubPath information table;
Fix. 17 shows what manner of playback segments are defined for the left view and the right view, respectively;
Fig.18 shows an internal structure of extension data in the PlayList information;
Fig.19 shows an internal structure of a video stream number table;
Fig.20 shows an internal structure of a JAR archive file;
Fig.21 shows an internal structure of a BD-J object;
Figs.22A, 22B, and 22C show an internal structure of a GUI management table;
Fig.23 shows correspondences between resolutions for a video plane and a graphics plane;
Figs.24A and 24B show settings and memory contents of a GUI management table;
Fig.25A shows a graphics plane reserved when a resolution code is 2, and Fig.25B shows a graphics plane reserved when the resolution code is 3;
Fig.26 shows temporal transitions between reserving a graphics plane and releasing the graphics plane;
Fig.27 shows a BD-J application writing graphics;
Fig.28 shows an exemplary stereoscopic video that is played back in a case of performing both playback of a BaseView stream and an EnhancedView stream, and GUI processing by the BD-J application;
Fig.29 shows an internal structure of the playback apparatus;
Fig.30 shows constituent elements of the units from a front end unit 105 to a back end unit 108;
Fig.31 shows a software layer model of the playback apparatus;
Fig.32 is a diagram in which an Index.bdmv and a BD-J object are written on a left side and a software layer model is written on a right side;
Fig.33 shows a BD-J application, video planes and graphics planes combined in a single software layer model drawing;
Fig.34 is a flowchart showing a procedure of processing performed by a module manager 42;
Fig.35 is a flowchart showing a procedure of playback of the PlayList information;
Fig.36 is a flowchart showing a procedure of processing performed by a plane controller;
Fig.37 is a flowchart showing a procedure of processing for GUI processing performed by the BD-J application; and
Fig.38 shows a frame precision animation execution unit 80.

**[Description of Embodiments]**

**[First Embodiment]**

An embodiment of a recording medium and a playback apparatus capable of solving the above problem is described below with reference to the drawings.
Fig.1A illustrates a mode of use of the recording medium and the playback apparatus. As shown in Fig.1A, a BD-ROM 101 that is an example of the recording medium, a playback apparatus 102, a television 103, and a pair of liquid crystal shutter goggles 104 together constitute a home theater system, and are provided for a user to use.
The BD-ROM 101 provides, for example, a motion picture work to the home theater system.
The playback apparatus 102 is connected to the television 103, and plays back the BD-ROM 101. A remote control is provided as an accessory to the playback apparatus 102. This remote control is a device for receiving operations from a user performed on a hierarchical GUI, and includes, for receiving the operations, a menu key that calls up a menu of GUI components, arrow keys for moving the focus of the GUI components in the menu, a determination key for performing a confirmation operation on a GUI component in the menu, a return key for returning to a higher level of the hierarchical menu, and a number keypad.
The television 103 provides a dialogical operation environment to the user by displaying a playback video of the motion picture work, displaying the menu etc.
The pair of liquid crystal shutter goggles 104 includes a liquid crystal shutter and a control unit, and realizes a stereoscopic view with use of a disparity in vision between the two eyes of the viewer. The liquid crystal shutter of the pair of liquid crystal goggles 104 is a shutter that uses a pair of liquid crystal lenses having a property of changing a light transparency ratio by changing an applied voltage. The control unit of the pair of liquid crystal shutter goggles 104 receives synchronization signals transmitted from the playback apparatus for switching between outputting a right view image and a left view image, and switches between a first state and a second state according to these synchronization signals.

Fig.1B shows the first state. The first state is a state in which the applied voltage on each side is adjusted so that light is not transmitted through the liquid crystal lens corresponding to the right view, and light is transmitted through the liquid crystal lens corresponding to the left view. The image for the left view can be viewed in this state.

Fig.1C shows the second state. The second state is a state in which the applied voltage on each side is adjusted so that light is not transmitted through the liquid crystal lens corresponding to the left view, and light is transmitted through the liquid crystal lens corresponding to the right view. The image for the right view can be viewed in this state.

In general, due to the difference in position between the right eye and the left eye, there is a slight difference between the image seen in the left eye view and the image seen in the right eye view. With use of this difference, humans can perceive visible images as stereoscopic. In view of this, when the pair of liquid crystal shutter goggles 104 is caused to synchronize the timings of switching between the first state and the second state to the timings of outputting images for the right view and images for the left view, users experience an illusion that a planar image appears to be stereoscopic. Next, the following describes time intervals for displaying the right view video and the left view video.

Specifically, there is a difference between the right view image and the left view image corresponding to the difference in human vision between right and left views, and switching between displaying each of these images at intervals of a short time causes planar images to appear as if stereoscopically displayed.

These intervals of a short time may be any extent of time that is sufficient for a human to see the illusion of a stereoscopic view by the above-described type of switching display. This concludes the description of the home theater system. The following describes the details of a BD-ROM.

Fig.2 shows an optical disk that is an example of the recording medium described in the present embodiment, and more specifically, the internal structure of the BD-ROM.

The first row shows the BD-ROM that is a multilayered optical disk. The second row shows, drawn out to extend horizontally, a spiral track that exists on the recording layers. This spiral track is treated as one continuous recording area. The continuous recording area is composed of a lead-in located in an inner circumference and a lead-out located in an outer circumference, and between the lead-in and the lead-out, there is a recording area of the first recording layer, a recording area of the second recording layer, and a recording area of the third recording layer.

The third row shows a file system area in the BD-ROM. The file system area is composed of a "volume management area" and a "logical address space".

The "volume management area" is an area in which file system management information is recorded for handling the recording area of the first recording layer, the recording area of the second recording layer, and the recording area of the third recording layer as one continuous file system space.

The "logical address space" is an address space in which sectors are indicated by consecutive logical block numbers (LBN). In other words, the recording area of the first recording layer, the recording area of the second recording layer, and the recording area of the third recording layer in the second row are included in one continuous logical address space.

The fourth row shows area allocation in the logical address spaces of the file system management area. A non-AV data recording area exists on the inner circumference side of the file system management area. Immediately following the non-AV data recording area, there is an AV data recording area.

The fifth row shows extents recorded in the non-AV data recording areas and AV data recording areas. The extents (labeled "EXT, EXT, EXT..." in the drawing) that constitute the AV file exist in the AV data recording area. The extents (labeled "EXT, EXT, EXT..." in the drawing) that constitute files other than AV files exist in the non-AV data recording area.

Fig.3 shows an application format of a BD-ROM.

The "BDMV directory" is a directory in which data that can be stored in the BD-ROM, such as AV contents and management information, are recorded. Under the BDMV directory, five sub directories (a JAR directory, a BDJO directory, a PLAYLIST directory, a CLIPINF directory, and a STREAM directory) exist. Also, two types of files (index.bdmv and MovieObject.bdmv) exist under the BDMV directory.

The index.bdmv is management information pertaining to the BD-ROM as a whole. After a disk is inserted into the playback apparatus, the index.bdmv is read first so that the disk is recognized uniquely by the playback apparatus. The index.bdmv also indicates correspondences between title numbers of a plurality of titles playable by the BD-ROM and BD-J objects respectively defining the playable titles.

The "MovieObject.bdmv" stores one or more movie objects. A movie object is a management object that stipulates a procedure for control to be performed by the playback apparatus in an operation mode (HDMV mode) that has a command interpreter as a controller. When one or more commands and a menu call or a title call are performed by the user on the GUI, the movie object includes a mask flag that stipulates whether to mask the call.

The "JAR directory" is a directory in which JAR files corresponding to archive files are arranged. Archive files are files obtained by collecting one or more class files, one or more data files, etc. into a single file. One or more class files, one or more data files, etc. can be collected into one file, for example by an archiver (not illustrated).

Here, a Java (registered trademark) archive file is described as an example of an archive file.

For example, the archive file stipulates a control procedure to be performed by the playback apparatus in an operation mode (BD-J mode) in which a Java virtual machine, which is a byte code interpreter included in the playback apparatus, is a main controller. The files stored in the JAR file are identified by a five digit number "zzzzz" and an extension "jar".

The "BDJO directory" is a directory that stores therein a file for a management object (BD-J object) that stipulates a procedure for control to be performed by the playback apparatus in an operation mode (BD-J mode) in which the Java virtual machine, which is a byte code interpreter, is the main controller. The files that store the BD-J objects are identified by a five digit number "zzzzz" and an extension "bdjo".

The "PLAYLIST directory" is a directory in which files are arranged for storing PlayList information including MainPath information that specifies a playback segment in the BaseView stream and SubPath information that specifies a playback segment in the EnhancedView stream. The files that store this PlayList information are identified by a five digit number "yyyyy" and an extension "mpls". Here, the BaseView stream is a stream that can realize a planar view of the video streams that form the left view and the right view. Meanwhile, the streams among the video streams that make up the right view and the left view that are not BaseView streams are referred to as "EnhancedView streams". Picture data that makes up the EnhancedView streams is compression encoded according to frame correlations with the picture data included in the BaseView stream. A corrected standard of MPEG-4 AVC/H.264 called Multiview Video Coding (MVC) is known as a method for video compression using the correlation between viewpoints in this way. Joint Video Team (JVT), which is a shared project of ISO/IEC MPEG and ITU-T VCEG, finished formulating the corrected standard of MPEG-4 AVC/H.264 called Multiview Video Coding (MVC) in July of 2008. MVC is a standard for encoding videos from a plurality of viewpoints as a group, and improves compression efficiency, compared to compression in which a plurality of viewpoints are independent, by using not only similarities in time direction of the videos, but also similarities between viewpoints for predicted encoding.

The "CLIPINF directory" is a directory in which files that store clip information (clip information files) are arranged. Clip information files are identified by a five digit number "xxxxx" and an extension "clpi". In the clip information files, there are entry maps corresponding to the video streams of the left view and the right view, respectively.

The extents included in the files in the directories described above are recorded in the non-AV data area.

The "STREAM directory" is a directory in which AV clip files that store planar video streams and AV clip files that store stereoscopic video streams are arranged. The files that store planar view video streams are identified by the five-digit identification number "xxxxx" and an extension "m2ts". The files that store stereoscopic video streams are identified by the five-digit identification number "xxxxx" and the extension "ilts".

The extents included in the BaseView stream files stored in the STREAM directory and the extents included in the EnhancedView stream files to be stored in the STREAM directory are recorded in the AV data recording area.

(Method of Recording Streams)

Fig.4 shows a process by which source packets, including left view streams and right view streams, are written to an AV data area. The first row of Fig.4 shows TS packets included in BaseView streams and EnhancedView streams.

As shown in the second row, a 4-byte TS_extra_header (shaded portions in the drawing) is attached to each 188-byte TS packet in the BaseView streams and the EnhancedView streams to form each 192-byte source packet. The TS_extra_header includes an Arrival_Time _Stamp that is information indicating the time at which the TS packet is input to the decoder.

The source packets in the BaseView streams and the EnhancedView streams include one or more "ATC_ Sequences" shown in the third row. The "ATC_Sequences" are arrangements of source packets in an ATS time axis, and do not include any "no arrival time-base discontinuity" in the Arrival_Time_Clocks referred to by the Arrival_Time_ Stamps. In other words, the "ATC_Sequence" is a sequence of source packets, where Arrival_Time_Clocks referred to by the Arrival_Time _Stamps included in the ATC_Sequence are continuous. The ATS is attached to the head of the TS packet and indicates the time to transfer to the decoder, as follows.

The ATC_Sequence becomes an AV clip and is recorded in a recording layer called xxxxx.m2ts.

The AV clip, similarly to a normal computer file, is divided into at least one file extension, and is recorded in an area on the recording layer. The third row shows the AV clip, and the fourth row diagrammatically shows how the AV clip is recorded in each layer. The file extents included in the files in the fourth row have a data length that is greater than or equal to a predetermined size (this size is referred to as S_EXT).

Fig.5 shows relationships between physical units of a BD-ROM and source packets that make up one file extent. As shown in the second row, a plurality of sectors are formed in the AV file recording area of a BD-ROM. The source packets included in the file extents, as shown in the first row, are grouped together in units of 32 each, and are written in three continuous sectors. A group formed from 32 source packets is 6144 bytes (=32*192), and this matches the three sector sizes 6144 bytes (=2048*3). The 32 source packets stored in the three sectors are called "Aligned Units", and writing to the BD-ROM is done in units of Aligned Units.

Error correction symbols are attached to the 32 units of the sectors in the third row, and make up the ECC blocks. The 32 complete source packets can be obtained as long as the playback apparatus accesses the BD-ROM in units of the Aligned Units. This concludes the description of the process of writing the AV clips to the BD-ROM.

Fig.6 shows correspondences between a plurality of numerical ranges into which packet IDs of TS packets may fit, and PES stream types of TS packets having packet IDs that fit in the respective numerical ranges.

A TS packet having a packet ID of 0x0100 corresponds to a program map (Program_map), and a TS packet having a packet ID of 0x1001 corresponds to a program clock reference (PCR).

A TS packet having a packet ID of 0x1011 corresponds to a BaseView stream, and a TS packet having a packet ID of 0x1012 corresponds to an EnhancedView stream.

A TS packet having a packet ID of 0x1100-111F corresponds to an audio stream.

TS packet sequences including BaseView and EnhancedView streams are interleaved. Fig.7 shows an exemplary interleaving arrangement. In the interleaving arrangement of Fig.7, the extents of BaseView and EnhancedView are recorded in the regularly repeating manner of "BaseView", "EnhancedView", "BaseView", "EnhancedView"....

The first row shows AV files, and the second row shows the extents EXT included in the AV files, EXT_L[i], EXT_L[i+1], EXT_R[i], EXT_R[i+1]. The third row shows the source packet sequence belonging to each extent, and the fourth row shows a sector sequence in the recording layer. Information indicating that the variables in brackets, [i] and [i+1], are to be played back as nth extents is shown here. This notation method illustrates that the two extents in which the variable [i] is indicated, that is, EXT_L[i] and EXT_R[i], are played back at the same time, and the two extents in which the variable [i+1] is indicated, that is, EXT_L[i+1] and EXT_R[i+1], are played back at the same time.

The extents EXT_L[i] and EXT_L[i+1] are made up of the source packet PID=0x1011. The dashed line arrows h1, h2, h3, and h4 indicate an attribution relationship specifying which one of the BaseView stream and the EnhancedView stream the extents EXT_L[i] and EXT_L[i+1] are attributed to. The attribute relationship indicated by the arrows h1 and h2 illustrate that the extents EXT_L[i] and EXT_L[i+1] are attributed to BaseView streams. The attribute relationship indicated by the arrows h3 and h4 illustrate that the extents EXT_R[i] and EXT_R[i+1] are attributed to EnhancedView streams.

The size of the extent EXT_L[i] is called SEXT_L[i], and the size of the extent EXT_R[i] is called SEXT_R[i].

The following describes how the sizes SEXT_L and SEXT_R are determined. Here, each extent is provided to the video decoder by being read alternately by two buffers, a right view read buffer and a left view read buffer, in the playback apparatus. Therefore, it is necessary to determine the sizes of SEXT_L and SEXT_R with consideration to the amount of time for buffering the right view read buffer and the left view read buffer. In other words, representing a transfer rate of transferring to the right view read buffer as Rmax1, the capacity of the right view read buffer must be determined so as to satisfy the following relationship.

Right view read buffer=Rmax*"time to fill left view read buffer along with a jump"

Here, a jump is synonymous with a disk seek operation. The reason is that continuous spaces that can be reserved for recording on the BD-ROM are limited, and BaseView streams are not necessarily limited to being recorded adjacent from each other, and may be recorded in widely scattered areas.

Next, consider the "time to fill left view read buffer along with a jump". The TS packet accumulation in the left view read buffer is performed at a transfer rate called Rud-Rmax2. This means a difference between an output rate from the left view read buffer Rmax2 and an input rate to the left view read buffer Rud. Then, the time taken to fill the left view read buffer becomes RB2/(Rud-Rmax2).

When reading data to the left view read buffer, since it is necessary to consider a jump time (T jump) from the right view video stream to the left view video stream, and a jump time (T jump) from the left view video stream to the right view video stream,

The time (2*T jump +RB2/(Rud-Rmax*2) is necessary for accumulation to the left view read buffer.

Representing the transfer rate of the right view read buffer as Rmax1, as the accumulation time to the left view read buffer, since all source packets in the right view read buffer must be output at the transfer rate called Rmax1, the size RB1 of the right view read buffer satisfies the following formula.

$$RB1 \geq Rmax1*[2*T\ jump+RB2/(Rud-Rmax2)]$$

By a similar procedure, the capacity RB2 of the left view buffer is obtained by the following formula.

$$RB \geq Rmax2*[2*T\ jump+RB1/(Rud-Rmax1)]$$

A specific value for the memory size of the right view buffer and the left view buffer is less than or equal to 1.5 megabytes, and the extent sizes SEXT_R and SEXT_L in the embodiment are set to be the same size as the sizes of the right view read buffer and the left view read buffer, or a size that is substantially equivalent thereto. This completes the description of how the BaseView streams and the EnhancedView streams are recorded. Next, the internal structure of the BaseView stream and the EnhancedView stream are described.

Fig.8 shows an exemplary internal structure of BaseView streams and EnhancedView streams for a stereoscopic view.

The BaseView stream and the EnhancedView stream include, for example, picture data. There are a plurality of types of picture data, such as I pictures, P pictures, and B pictures.

An I picture is one frame worth of picture data.

A P picture is picture data indicating a difference from a reference I picture.

A B picture is picture data generated based on the reference I picture and the P picture.

The second row of Fig.8 shows the internal structure of a BaseView stream. The BaseView stream includes picture data I1, P2, Br3, Br4, P5, Br6, Br7, and P9.

This picture data is decoded according to a DTS (Decoding Time Stamp: information indicating a start time of decoding by a decoder). The first row shows a left view image. The decoded picture data I1, P2, Br3, Br4, P5, Br6, Br7, and P8 are played back in the order of I1, Br3, Br4, P2, Br6, Br7, and P5 in accordance with the PTS, thereby achieving a display of the image for the left eye.

The fourth row shows the internal structure of the EnhancedView stream. The picture data pieces P1, P2, B3, B4, P5, B6, B7, and P8 are included in this secondary video stream. This picture data is decoded according to the DTS. The third row shows a right view image. By playing back the picture data P1, P2, B3, B4, P5, B6, B7, and P8 decoded thus, in the order of P1, B3, B4, P2, B6, B7, and P8 according to a PTS (Presentation Time Stamp: information indicating a video and audio presentation time), the right view image is played back.

The fifth row shows how the state of the shutter goggles 104 changes. As shown in the fifth row, the liquid crystal shutter for the right eye is closed when the left-view image is viewed, and the liquid crystal shutter for the left eye is closed when the right-eye image is viewed.

These primary and secondary video streams have been compressed by an inter-picture predictive encoding that makes use of the redundancy between the viewpoints, as well as by an inter-picture predictive encoding that makes use of the redundancy in a time axis direction. The pictures of the right-eye view video stream have been compressed by referring to the pictures of the planar/left-eye view video stream for the same display time.

For example, the first P picture in the EnhancedView stream refers to the I picture in the BaseView stream, the B picture in the EnhancedView stream refers to the Br picture in the BaseView stream, and the second P picture in the EnhancedView stream refers to the P picture in the BaseView stream.

Fig.9 shows how images are shown when switching is performed between transparency and opacity of a pair of goggles at the timings in Fig.8. Here, a frame display period is 1/24 second, and when the transparency/opacity of the right view and the left view in the goggles is changed to once every 1/48 seconds, the pictures for the right view and the left view appear in alternation.

Fig.10 shows a stereoscopic video formed by an afterimage effect in the eyes.

This completes the description of the internal structure of the BaseView stream and the EnhancedView stream. The following describes clip information files.

<Clip Information Files>

Fig. 11 shows one example of the clip information file. Each clip information file is management information for an AV clip. The clip information files are in one to one correspondence with the AV clips, and are each composed of stream attribute information and an entry map.

A lead line zh1 shows a close up of an internal structure of a stream attribute table. As shown by the lead line, in the stream attribute table, a piece of attribute information for each stream included in an AV clip is registered for each PID. The attribute information includes different information for each BaseView stream and EnhancedView stream.

A lead line zh2 shows a close up of an internal structure of the BaseView stream. As shown by the lead line, codec, resolution, aspect ratio, and frame rate are specified as BaseView stream attribute information of the TS packet PID=0x1011.

The following describes the internal structure of the entry map table.

The entry map table is a table showing a relationship between a source packet number of an arbitrary source packet and a PTS on an STC time axis, from among STC time axes specified with use of a packet ID.

The STC time axis is a time axis defined in MPEG2-TS indicating a decode time and a display time. One source packet section that does not include a system time-base discontinuity, which is based on the STC (System Time Clock) that indicates the system standard time for the AV streams, is called a "STC Sequence".

Fig.12A shows the internal structure of the entry map table. A lead line eh1 shows a close up of the internal structure of the entry map table.

As shown by the lead line eh1, there is an entry map for a BaseView stream composed of a TS packet whose PID=0x1011, and an entry map for an EnhancedView stream composed of a TS packet whose PID=0x1012. In this way, there are entry streams for each one of packetized elementary streams composed of a plurality of types of packets. In the entry maps, information made up of a pair of a PTS and an SPN is called an "entry point". An entry point is a piece of information for correlating, for a PTS and SPN pair, a display method flag (an "is_angle_change" flag) indicating whether decoding from the SPN is possible. Also, a value that is incremented for each entry point from a start point of 0 is called an "entry point ID" (hereinafter referred to as "EP_ID").

With use of this entry map, the playback apparatus can specify a source packet position corresponding to an arbitrary point on the time axis of a video stream. For example, when performing a special playback operation such as fast forward or rewind, it is possible to efficiently perform processing without analyzing an AV clip by specifying and selecting an I picture registered in the entry map and playing back the selected I picture. Also, entry maps are made for each multiplexed video stream in the AV clip, and are managed with use of PIDs.

The lead line eh2 shows a close up of an internal structure of the entry map of PID=0x11011. The entry map is composed of an entry point corresponding to EP_ID=0, an entry point corresponding to EP_ID=1, an entry point corresponding to EP_ID=2, and an entry point corresponding to EP_ID=3. The entry point corresponding to EP_ID=0 is composed of an is_angle_change flag set to on, an SPN=3, and a PTS=80000. The entry point corresponding to EP_ID=1 is composed of an is_angle_change flag set to off, an SPN=1500, and a PTS=270000.

The entry point corresponding to EP_ID=2 is composed of an is_angle_change flag set to off, an SPN=3200, and a PTS=360000. The entry point corresponding to EP_ID=3 includes an is_angle_change flag set to off, an SPN=4800, and a PTS=450000.

Fig.12B shows which source packet to designate according to the plurality of entry points in the entry map corresponding to the TS packet PID=0x1011 shown in Fig.12A. The entry map corresponding to EP_ID=0 indicates SPN=3, and this source packet number corresponds to PTS=80000. The entry map corresponding to EP_ID=1 indicates SPN=1500, and this source packet number is correlated to PTS=270000.

The entry map corresponding to EP_ID=2 indicates the source packet of SPN=3200, and this source packet number is correlated to PTS=360000. The entry map corresponding to EP_IP=3 indicates the source packet of SPN=4800, and this source packet number is correlated to PTS=450000.

Fig.13 shows registration of an entry point on an entry map. The first row shows a time axis stipulated by an STC sequence. The second row shows an entry map in clip information. The third row shows source packet sequences in the STC sequence.

The arrows te1, te2, te3, and te4 diagrammatically show a correspondence relationship between the playback points t1, t11, t21, and t31 in the STC time axis and respective entry points. The arrows sh1, sh2, sh3, and sh4 diagrammatically show a correspondence relationship between SPN=n1, n11, n21, and n31 and respective entry points.

When the entry map specifies a source packet of SPN=n1 from among the ATC sequences, in the PTS of the entry map, PTS=t1 is set in the STC sequence. In this case, with use of the time PTS=t1, the playback apparatus is caused to execute random access from SPN=n1 in the ATC sequence. Also, if the source packet SPN=n21 is specified among the ATC sequences, the entry map sets, in the PTS of the entry map, PTS=t21 of the STC sequence. In this case, with use of the time point PTS=t21, the playback apparatus is caused to execute random access from SPN=n21 in the ATC sequence.

Fig.14 shows how entry maps corresponding to each of the left view and the right view are set. According to the correspondences in Fig.14, a source packet number in the STC sequence is recorded as the source packet number of each entry map, and a PTS in the STC sequence is recorded as the PTS of each entry map. The entry maps indicate how the source packets correspond to the time axis.

The arrows th1, th2, th3, and th4 diagrammatically show the correspondence between playback time points t1 and t2 on the STC time axis and the entry points. The arrows sh1, sh2, sh3, and sh4 diagrammatically show the correspondences between the SPN=n1, n11, n8, and n18 in the ATC sequence.

The fifth row shows extents of a left view and a right view recorded by interleaving, and is the same as the drawings shown before. The fourth row shows entry maps corresponding respectively to PID=0x1011 and PID=0x1012. The entry map corresponding to PID=0x1011 includes an entry point indicating n1 and an entry point corresponding to n8. These entry points indicate correspondences between n1 and n8, and t1 and t2 on the STC time axis. The entry map corresponding to PID=0x1012 includes an entry point indicating n11 and an entry point indicating n18. These entry points show correspondences between n1 and n18, and t1 and t2 on the STC time axis.

Accordingly, even when left and right view extents that are to be played back at the same time point on the time axis are recorded in widely separated positions in the AV data recording area, by using entry maps corresponding respectively to the extents, source packets at the start of the right view extent and the left view extent may be uniquely accessed with use of the corresponding PTS.

This concludes the description of the clip information files. Next, the details of the PlayList information are described.

Fig.15 shows a data structure of PlayList information. In Fib.15, the PlayList information shown by the lead line mp1 includes MainPath information, a SubPath information table, and extension data.

First, MainPath information is described. The lead line mp1 shows a close up of the internal structure of the MainPath information. As shown by the arrow mp1, a MainPath is defined by a plurality of PlayItem information pieces #1...#m. The Play Item information defines one logical playback section that makes up the MainPath. The structure of the PlayItem information is shown in close up by the lead line mp2. As shown by the lead line, the PlayItem information is constituted from sets of a "Clip_Information_file_name" that indicates a file name of playback section information of an AV clip belonging to the IN point and Out point of the playback section, a "Clip_codec_identifier" that indicates an encoding method of an AV clip, an "is_multi_angle" that indicates whether a PlayItem is a multi-angle, a "connection_condition" that indicates a connection state between the PlayItem (the current PlayItem) and the PlayItem that is immediately previous to the current PlayItem (previous PlayItem); a "ref_to_STC_id[0]" uniquely indicating an STC_Sequence targeted by the PlayItem, an "In_time" that is time information indicating a start point of the playback section, an "Out_time" that is time information indicating an end point of the playback section, an "UO_mask_table" indicating which user operation is to be masked in the PlayItem, a "PlayItem_random_access_flag" indicating whether to permit random access during the PlayItem, a "still_mode" indicating whether to continue static display of a last picture after playback of the PlayItem has ended, an "STN_table", a "BaseView_indicator", and a "multi_clip_entry". Among these, the items that are playback paths are the pair of the "In_time" that is time information indicating a start point of the playback section, and the "Out_time" that is time information indicating an end point of the playback section. Playback path information is composed of this pair of "In_time" and "Out_time".

The STN_table (StreamNumber_table) is a table in which pairs composed of a stream entry, including a packet ID, and a stream attribute are allocated to a logical stream number. The order of the stream entry and stream attribute pairs in the STN_table indicates a priority ranking of the corresponding streams.

When a BaseView_indicator is 0, a BaseView is Left, and when the BaseView_indicator is 1, the BaseView is Right.

Fig.16 shows an internal structure of a SubPath information table. The lead line su1 shows a close up of the internal structure of the SubPath information. As shown by the lead line su1, the SubPath information table includes a plurality of SubPath information pieces 1, 2, 3...m. These SubPath information pieces are a plurality of instances derived from one class structure, and the internal structures are shared. The lead line su2 shows a close up of the shared internal structure of the SubPath information. As shown by the lead line, the SubPath information pieces include a SubPath_type indicating a SubPath classification, and one or more SubPlayItem information pieces (...SubPlayItem information #1 to #m...). The lead line su3 shows a close up of the internal structure of the SubPlayItem. As shown by the lead line, the SubPlayItem information is composed of a "Clip_information_file_name", a "Clip_codec_identifier", a "ref to_STC_id[0]", a "SubPtayItem_In_Time", a " SubPlayItem_Out_time", a "sync_PlayItem_id", and a "sync_start_PTS_of_PlayItem". The following describes an internal structure of a SubPlayItem.

The "Clip_information_file_name" is information that uniquely specifies a SubClip corresponding to a SubPlayItem by filling in a file name of the clip information.

The "Clip_codec_identifier" indicates an encoding method of the AV clip.

The "ref_to_STC_id[0]" uniquely indicates an STC_Sequence targeted by the SubPlayItem.

The "SubPlayItem_In-time" is information indicating a start point of the SubPlayItem on the playback time axis of a SubClip.

The "SubPlayItem_Out_time" is information indicating an end point of the SubPlayItem on the playback time axis of the SubClip.

The "sync_PlayItem_id" is information that uniquely identifies a PlayItem, from among the PlayItems in the MainPath, to be synchronized with the SubPlayItem. The SubPtayItem_In_time exists on the playback time axis of the PlayItem designated by the sync_PlayItem_id.

The "sync_start_PTS_of_PlayItem" indicates where, on a playback time axis of the PlayItem specified by the sync_PlayItem_ id, a start point of the SubPlayItem specified by the "SubPlayItem" exists, at a time precision of 45 KHz.

Fig.17 shows what type of playback section is defined for each of the left view and the right view. Fig.17 has been constructed based on Fig.14, and in the time axis of the second row of Fig. 14 on which Fig.17 is based, the In_ Time and the Out_Time of a Play Item is drawn. On the time axis of the first row, the In_Time and Out_Time of a SubPlayItem is drawn. The third through the fifth rows are identical to the third through the fifth rows of Fig.14. The I pictures of the left view and the right view are at the same point on the time axis.

The left view and the right view are correlated by the PlayItem information, and the SubPlayItem information.

The following describes the extension data. Fig.18 shows an internal structure of extension data in the PlayList information. A lead line et1 shows a close up of the internal structure of the extension data. As shown by this lead line, the extension data is composed of STN_table_extensions corresponding respectively to the PlayItem information pieces #1 to #N. The lead line et2 shows a close up of an internal structure of an STN_table_extension corresponding to the PlayItem information piece #1. As shown by this lead line, the STN_table_extension corresponding to the PlayItem information piece #1 includes the "video stream number table".

Fig.19 shows an internal structure of a video stream number table.

The video stream number table includes N pairs e1 of enhanced_view_is_available flags and depth is available flags, and N pairs f1 of stream_entries and stream_attributes. These pairs are correlated to stream numbers 1 to N, and an enhanced_view_is_available flag can uniquely specify one of the pairs with use of a stream number from 1 to N. The pairs of stream_entry and stream_attribute can also be uniquely specified with use of a stream number from 1 to N.

A "Stream_entry" includes a "ref to_stream_PID_of main_Clip", a "video_format", and a "frame_rate".

The order of these stream_entries in these tables indicates a priority order of stream selection when the playback apparatus selects a stream. In other words, the playback apparatus preferentially selects the streams whose entries are highest in the table.

When the "enhanced_view_is_available" flag is on, and the playback apparatus is set to EnhancedView, a packet ID of 0x1011 and a packet ID of 0x1012 are written in the "ref_to_stream_or_MainClip".

A "content" in the present specification is also called a "title", and refers to a unit containing a PlayList information piece managed with use of a certain title number, a video stream and a BD-J object described later that are multiplexed in an AV clip with reference to the PlayList information, and one or more applications for which startup is permitted as indicated by the BD-J object.

This completes the description of the PlayList information.

<JAR Directory>

The following describes a JAR directory. The JAR directory stores JAR archive files (XXXXX.JAR).

JAR archive files are files created according to the specifications described in http://java(TM).sun.com/j2se/1.4.2/docs/guide/jar/jar.html. The JAR archive files store a plurality of files in a directory structure. Fig.20 shows the internal structure of a JAR archive file.

In this directory structure, a "XXXX.class" and a "XXXXX.PNG" are present immediately below the root directory, and a "MANIFEST.MF" file, a "SIG-BD.SF" file, a "SIG-BD.RSA" file, and a "bd.XXXX.perm" file are present in the META-INF directory.

The XXXX.class (class file) stores byte codes obtained by compiling class structures written in an object-oriented language such as Java language. This class file defines a BD-J application, and is executable on a Java™ virtual machine. MANIFEST.MF corresponds to a digital certificate, and the SIG-BD.SF file stores the hash value of the MANIFEST.MF file. The SIG-BD.RSA file is a file storing a digital certificate chain and signature information. The bd.XXXX.perm is a permission request file and stores information pertaining to a permission that indicates which files are allowed to be accessed by the BD-J application being executed.

The BD-J application defined by the class file in the JAR archive file is a Java™ Xlet that is controlled by the application manager via an Xlet interface. The Xlet interface has the following four states: "loaded", "paused", "active", and "destroyed".

In addition, the Java™ application implements the HAVi framework designed according to GEM 1.0.2 with the use of a standard Java library for displaying image data in JFIF (JPEG), PNG, and other formats. The HAVi framework is a GUI framework containing the remote control navigation functionality according to GEM 1.0.2. The Java™ application executes, in synchronism with video display, display of buttons based on the HAVi framework, display of text, and online display (the contents of BBS). Users are allowed to interact with the display by operating a remote controller.

The PNG file in Fig.20 stores, for example, animation data used for the GUI by the BD-J application.

This concludes the description of the JAR files.

Next, the BD-J object is described. Fig.21 shows an internal structure of the BD-J object. As shown in Fig.21, the BD-J object includes an "application management table", a "GUI management table", and a "PlayList management table".

Next, the constituent elements of these are described.

The "application management table" is a table for causing application signaling, that specifies a title as a life cycle, to be performed on the playback apparatus. A lead line bj1 shows a close up of an internal structure of the application management table. As shown by this lead line, the application management table includes "application identifiers" that specify applications to be run when a title corresponding to the BD-J object becomes the current title, and "control codes". The control codes indicate, when set to AutoRun, that the application is to automatically start up after being loaded to the heap memory, and when set to Present, that after being loaded to the heap memory, the application is to wait for a call from another application, then start up.

The GUI management table is a management table used when the application in operation performs an operation on the GUI, and includes configuration information for executing a GUI display, font data used for the GUI, and a mask flag stipulating, when a user has performed a call such as a menu call or a title call on the GUI, whether to mask the call. This configuration information is information instructing the playback apparatus to reserve, on the memory device included in the playback device, a graphics plane of a scale corresponding to the resolution of the video stream to be played back, for the application to be started up indicated by the application management table in the BD-J object to draw graphics on.

A lead line bj2 shows a close up of an internal structure of the PlayList management table. The PlayList management table includes a designation of a PlayList to be automatically played back when the title corresponding to the BD-J object becomes the current title. Also, when the title corresponding to the BD-J object becomes the current title, the PlayList management table specifies PlayLists that can be selected by applications that can be caused to operate.

The following describes the details of the internal structure of the GUI management table.

Fig.22A shows the internal structure of the GUI management table. The lead line gh1 shows a close up of the structure of the GUI management table. As shown by the lead line gh1, the GUI management table includes a "basic plane configuration", a "display method flag", and an "expanded plane configuration". The "basic plane configuration" indicates a graphics plane configuration for reserving a plane for graphics to be composited with a BaseView stream (BaseView graphics). The "expanded plane configuration" indicates a graphics plane configuration for reserving a plane for graphics to be composited with an EnhancedView stream (EnhancedView graphics). In the present application, the basic plane configuration and the expanded plane configuration are referred to collectively as "configuration information". The lead lines gh2 and gh3 show the settings of the basic plane configuration and the expanded plane configuration. As shown by the lead lines, resolution codes are set in both the basic plane configuration and the expanded plane configuration.

Fig.22B shows bit assignments of display method flags. A bit assignment of "0" indicates that since the GUI is to be displayed in planar view, a single plane memory for graphics (graphics plane) is to be reserved. A bit assignment of "1" indicates that since the GUI is to be displayed in stereoscopic view, a plurality of graphics planes are to be reserved.

Fig.22C shows the meanings of the resolution codes. When the resolution code is set as "1", the scale of the graphics plane to be reserved is 720*480 pixels. When the resolution code is set as "2", the scale of the graphics plane to be reserved is 960*540 pixels. When the resolution code is set as "3", the scale of the graphics plane to be reserved is 1920*1080 pixels. When the resolution code is set as "4", the scale of the graphics plane to be reserved is 1280*720 pixels.

Fig.23 shows correspondences between resolutions for a video plane and a graphics plane. The left side shows the resolution of the video plane, and the right side shows the resolution of the graphics plane. The arrow in the middle shows a combination of the resolution of a permitted video plane, and the resolution of the permitted graphics plane. As shown by the arrow kw1, if the resolution code of the video plane is 720*480 pixels, the setting of the resolution code of 720*480 pixels is permitted as the resolution code of the graphics plane.

As shown by the arrows kw2 and kw3, if the resolution of the video plane is 1920*1080, the resolution code of 960*540 pixels and the resolution code of 1920*1080 pixels are permitted as the resolution code of the graphics plane.

As shown by the arrow kw4, if the resolution code of the video plane is 1280*720 pixels, the setting of the resolution code of 1280*720 pixels is permitted as the resolution code of the graphics plane.

Fig.24A shows settings of a GUI management table, and contents of a memory.

In the GUI management table, when the display method flag is set to "0", the plane memory corresponding to the resolution code in the basic plane configuration is reserved in the memory. Here, if the resolution code in the basic plane configuration is horizontal pixel number=WidthB, vertical pixel number=HeightB, a plane memory having a scale of WidthB*HeightB is reserved. Meanwhile, if the display method flag is "0", the expanded graphics plane is not reserved.

Fig.24B shows settings of a GUI management table, and contents of a memory. In the GUI management table, when the display method flag is set as "1 ", a plane memory corresponding to the resolution code of the basic plane configuration, and a plane memory corresponding to a resolution code in the expanded plane configuration, are reserved in the memory. Here, if the resolution code in the basic plane configuration is horizontal pixel number=WidthB, and vertical pixel number=HeightB, a plane memory having a scale of WidthB*HeightB is reserved. Here, if the resolution code in the expanded plane configuration is horizontal pixel number=WidthE, and horizontal pixel number=HeightE, a plane memory having a scale of WidthE*HeightE is reserved.

Fig.25A shows a graphics plane reserved when the resolution code "2" is used. The graphics plane reserved when the resolution code "2" is used is a 32-bit area that is 960*540 pixels. In other words, the graphics plane decoded by the resolution code "2" has a resolution of 960*540, and has a memory allocation that can store 32 bits of RGB values for each pixel.

Fig.25B shows a graphics plane reserved when the resolution code "3" is used. The graphics plane reserved when the resolution code "3" is used is an 8-bit area that is 1920*1080 pixels. This means that the graphics plane decoded by the resolution code "3" has a resolution of 1920*1080, and has a memory allocation that can store 32 bits of RGB values for each pixel.

The application determines the positions at which to write the graphics by considering, as a reference, a coordinate system of resolution codes stipulated by configuration information in the GUI management table. Specifically, among the pixels of the resolution codes 1920*1080 and 720*480, the coordinates at which to write the graphics are stipulated by a coordinate system that has the upper left pixel as an origin point.

Fig.26 shows temporal transitions between reserving a graphics plane and releasing the graphics plane. The first row shows video content, and the second row shows a time axis. The third row shows an internal structure of a BD-J object, and the fourth row shows content of a memory device. As shown in the second row, titles #1 and #3 are planar contents, and title #2 is a stereoscopic content. The display method flag is set to "0"in the GUI management table for the BD-J object corresponding to titles #1 and #3. Also, the display method flag is set to "1"in the GUI management table for the BD-J object corresponding to title #2.

The temporal transitions of reserving the graphics plane according to the above-described conditions are shown in the fourth row. In the fourth row, at a timing at which the current title becomes the title #1, the graphics plane in the memory device is cleared, and thereafter, the basic graphics plane is reserved in the memory device. When the current title becomes the title #2, the graphics plane in the memory device is cleared, and thereafter, the basic graphics plane and the expanded graphics plane are reserved in the memory device.

When the current title becomes title #3, the basic graphics plane and the expanded graphics plane are cleared, and only the basic graphics plane is reserved.

The expanded graphics plane is reserved in the memory device only in the period when the current title is title #2, and the expanded graphics plane is released when the current title becomes title #3. Therefore, the capacity of the memory device is not long occupied by the graphics plane.

This concludes the description of the GUI management table. The following describes the details of GUI processing by the BD-J application.

<Realization of Animation>

Representative graphics drawn by a BD-J application in GUI processing are menus and animation. A plurality of button elements are present in a menu, and the individual button elements have the states of normal state, focus state, and active state. By pressing a directional key on a remote control, a button can be switched to a focus state, and when the Enter key is pressed on a remote control, the BD-J application executes processing corresponding to the button in the current focus state.

The animation is realized by successively overwriting graphics in a certain time interval over graphics that are already written. The following describes graphics writing that realizes the realization of animation.

In the graphics plane, graphics for forming an animation are managed with use of numerical values for graphics management, and images of the graphics data corresponding to these numerical values are displayed for only a fixed time on the screen. Meanwhile, during that fixed time, new graphics are generated on the application side. When the fixed time period has passed, the stored content of the graphics plane is overwritten by the newly generated graphics data. In this overwriting, the numerical values for graphics management are updated. For example, the animated display of the graphics is realized by this type of operation, in other words, by repeating a series of operations such as "generation of graphics by the application", "update of generated graphics", "overwriting the graphics", and "update of the numerical values for graphics management".

Also, changing the number of times of repeating the series of operations in a unit of time (for example, once per second)(hereinafter referred to as "execution speed of the application") enables increasing the number of timings at which the stored content is updated for each unit time. As a result, this enables increasing or decreasing responsiveness at which the GUI is displayed by the drawing of graphics in response to an input.

In addition to this processing, to realize a stereoscopic view of graphics at the time of viewing stereoscopically, the positions of writing the graphics to the coordinates are displaced. This enables realizing stereoscopic graphics.

Fig.27 shows writing of graphics by a BD-J application. When the display method flag is "1", the expanded graphics plane is added. The BD-J application writes graphics respectively to the basic graphics plane and the expanded graphics plane.

Writing to the basic graphics plane and the expanded graphics plane with displacement of one piece of graphics data to the right or left in this way causes the graphics to appear to rise above the video.

Fig.28 shows an exemplary stereoscopic video that is played back in a case of performing both playback of a BaseView stream and an EnhancedView stream, and GUI processing by the BD-J application. Since graphics are written on the basic graphics plane and the expanded graphics plane, respectively, menus and animation in a stereoscopic video appear stereoscopic.

This completes the description of the BD-J object and the GUI management table.

Fig.29 shows an internal structure of the playback apparatus. The main components of the playback apparatus in Fig.29 are a front end unit 105, a system LSI 106, a memory device 107, and a back end unit 108.

The front end unit 105 is a data input source.

In Fig.30, to be described later, the front end unit 105 includes, for example, a BD-ROM drive 109 and a local storage 110.

The system LSI 106 includes a logical element, and forms a playback apparatus core.

In Fig.30, the system LSI 106 includes, for example, an MPU 21, a plane controller 17, a demultiplexer 6, a video decoder 7a, a video decoder 7b, an audio decoder 9, a color conversion unit 18a, a color conversion unit 18b, a composite unit 19a, and a composite unit 19b. The system LSI may be formed on one chip, or a plurality of chips.

The memory device 107 is constituted from an array such as a memory element of an SDRAM, etc.

In Fig.30, the memory device 107 includes, for example, a read buffer 1, a read buffer 2, a heap memory 31, a dynamic scenario memory 30, a static scenario memory 13, a byte code interpreter, a command interpreter, a built-in ROM 22, a playback engine 14, a player status/setting register (PSR) set 12, a basic graphics plane 15, an expanded graphics plane 16, a basic video plane 8a, and an expanded video plane 8b.

For example, when using a bank memory method in the memory device 107, since the areas in the memory device are recognized as being unified memory spaces, when the BD-J application is in operation, the areas of the relevant memory devices are provided for use to the BD-J application as a resource. A plurality of plane memories are mapped to a portion of the memory space in the CPU.

The back end unit 108 is an interface for connecting internal units of the playback apparatus to another apparatus.

In Fig.30, the back end unit 108 includes, for example, an HDMI transmission/reception unit 10.

As described above, the front end unit 105 includes, for example, a BD-ROM drive 109 and a local storage 110.

The BD-ROM drive 109 performs loading and ejection of a BD-ROM, and reads, according to an instruction from a system LSI 106, an extent included in a BaseView stream and an extent included in an EnhancedView stream from the BD-ROM.

The BD-ROM drive 109 includes, for example, a semiconductor laser (not illustrated), a collimated lens (not illustrated), a beam splitter (not illustrated), a field lens (not illustrated, a condenser lens (not illustrated), and an optical head (not illustrated) including a light detector (not illustrated). An optical beam emitted from the semiconductor laser condenses light on an information sheet of an optical disk via the collimated lens, the beam splitter, and the field lens. The condensed optical beam is reflected/refracted on an optical disk, and condensed by the light detector via the field lens, the beam splitter, and the condenser lens. A signal generated according to the amount of light in the light condensed by the light detector corresponds to data read from the BD-ROM.

The local storage 110 includes a built-in medium and a removable medium, and is used for storing data to be used for downloaded additional content and applications, etc. The storage area of the additional content is divided between each BD-ROM, and areas that can be used by the application for storing data are divided between each application. Also, the built-in medium and the removable medium store merge management information specifying rules for merging that stipulate how to merge the downloaded additional content with the data on the BD-ROM.

The built-in medium is, for example, a writable recording medium such as a hard disk drive or a memory built into the playback apparatus.

The removable medium is, for example, a portable recording medium, and preferably is a portable semiconductor memory card such as an SD card.

Describing a semiconductor memory card as an example of a removable medium, the playback apparatus includes a slot (not illustrated) for inserting the removable medium in the playback apparatus, and an interface (for example a memory card I/F) for reading the removable medium inserted in the slot. When the semiconductor memory card is inserted in the slot, the removable medium is electrically connected to the playback apparatus, and with use of an interface (for example, the memory card I/F), the data recorded on the semiconductor memory card can be converted to electrical signals and read.

<Detailed Structure of Playback Apparatus>

The following describes the constituent elements in the units from the front end unit 105 to the back end unit 108 in further detail. Fig.30 shows the constituent elements of the units from the front end unit 105 to the back end unit 108. As shown in Fig.30, such constituent elements include read buffers 1 and 2, the demultiplexer 6, the video decoders 7a and 7b, basic video planes 8a and 8b, the audio decoder 9, an HDMI transmission/reception 10, the playback state/setting register set 12, a static scenario memory 13, a playback control engine 14, a basic graphics plane 15, an expanded graphics plane 16, the plane controller 17, the color conversion units 18a and 18b, the composite units 19a and 19b, the MPU 21, a ROM 22, a static scenario memory 30, and a heap memory 31.

The read buffer 1 is a buffer for temporarily storing a source packet included in an extent in a BaseView stream read from a BD-ROM drive, and after the transfer speed has been adjusted, transferring the source packet to the demultiplexer 6, and has the scale of "RB1" described above.

The read buffer 2 is a buffer for temporarily storing a source packet included in an extent in an Enhanced View stream read from a BD-ROM drive, and after the transfer speed has been adjusted, transferring the source packet to the demultiplexer 6, and has the scale of "RB2" described above.

The demultiplexer 6 is constituted from a source packet demultiplexer and a PID filter, and if an extent included in a BaseView stream and an extent included in an EnhancedView stream are transferred via the read buffers 1 and 2, the TS packet in the BaseView video stream and the TS packet in the EnhancedView video stream are detached from the extent, and are transferred to the video decoder 7a and the video decoder 7b.

The video decoder 7a decodes TS packets in the BaseView stream output from the demultiplexer 6, and writes pictures in an uncompressed format to a basic video plane 8a.

The video decoder 7b decodes TS packets in the BaseView stream output from the demultiplexer 6, and writes pictures in an uncompressed format to an expanded video plane 8b.

The basic video plane 8a is a memory for storing pictures included in the BaseView stream in the uncompressed format.

The expanded video plane 8b is a memory for storing pictures included in the EnhancedView stream in the uncompressed format.

The audio decoder 9 decodes the audio stream output from the demultiplexer 6, and outputs uncompressed-format audio data.

The HDMI transmission/reception unit 10, for example, is a unit that includes an interface that is compliant with HDMI standards (HDMI: High Definition Multimedia Interface), and performs transmission and reception in a manner compliant with HDMI standards between the playback apparatus and an apparatus (in the present example, a television 103), that is connected by HDMI. Picture data stored in the basic video plane 8a and the expanded video plane 8b, and uncompressed audio data that has been decoded by the audio decoder 13, are transmitted to the television 103 via the HDMI transmission/reception unit 10. The television 103 stores information indicating whether, for example, the television 103 is adapted for stereoscopic display, information pertaining to the resolution at which planar display can be performed, and information pertaining to the resolution at which stereoscopic display can be performed. When a request is received from the playback apparatus via the HDMI interface, the television 103 transmits to the playback apparatus, as a reply, requested necessary information (for example, information pertaining to whether the television 103 is adapted for stereoscopic display, information pertaining to a resolution at which stereoscopic display can be performed). In this way, by performing transmission via the HDMI transmission/reception unit 10, information pertaining to whether the television 103 is adapted for stereoscopic display can be acquired from the television 103.

The player status/setting register (PSR) set 12 is an area in which a player status of a PlayList, or arbitrary information used by the contents, can be stored. The player status of the PlayList represents information such as a type of AV data that is being used from among various types of AV data information written in the PlayList, or which position (time) of the PlayList is being played back. When the player status of the PlayList changes, the playback control engine 14 stores the changed player status in the PSR set 12. Also, a value specified by the application can be stored according to an instruction from an application executed by a command interpreter that is an operation agent of HDMV mode or a Java platform that is an operation agent of BD-J mode, and the stored value can be transmitted to the application. The following describes the representative PSRs.

PSR4 indicates a current title number, and is set to be a value between 1 and 100.

PSR5 indicates a current chapter number, is set to be a value between 1 and 999, and indicates to the playback apparatus that a chapter number is invalid by being set as 0xFFFF

PSR6 indicates a current PlayList number, and is a value between 0 and 999.

PSR7 indicates a current Play Item number, and is a value between 0 and 255.

PSR8 indicates a current playback point (current PTM) with 45 KHz time precision by being set to a value between 0 and 0xFFFFFFFF This completes the description of the PSRs. The static scenario memory 13 is a memory for storing current PlayList information and current clip information. The current PlayList information refers to information targeted for current processing from among the plurality of PlayList information pieces that can be accessed from the built-in media drive and the removable media drive. The current clip information refers to information targeted for current processing from among the plurality of PlayList information pieces that can be accessed from the BD-ROM, the built-in media drive, and the removable media drive.

The playback control engine 14 performs AV playback functions and PlayList playback functions in accordance with function calls from a command interpreter that is an operation agent of HDMV mode, and from the Java platform that is the operation agent of BD-J mode. AV playback functions are functional operations that follow DVD player and CD player operations, and include the following types of processing: Playback Start, Playback Stop, Pause, Stop Pause, Still Off, Fast Forward (with specification of the speed), Rewind (with specification of the speed), Audio Change, SubTitle Change, and Angle Change. The PlayList playback functions are the functions Playback Start and Playback Stop in the current PlayList, among the AV playback functions listed above that are performed according to current PlayList information and current clip information.

The basic graphics plane 15 is a plane memory that is reserved in accordance with basic plane configuration information in the BD-J object.

The expanded graphics plane 16 is a plane memory that is reserved, in accordance with expanded plane configuration information in the BD-J object, when the display method flag is "1", that is, is set to stereoscopic display (set to "on").

The plane controller 17 controls, in accordance with a display plane switching instruction, whether to cause planar view display to be performed by outputting an image formed by compositing graphics data in the basic graphics plane with picture data in the basic video plane, or whether to cause stereoscopic display to be performed by outputting an image formed by compositing graphics data in the basic graphics plane and picture data in the basic video plane as the left view video, and outputting an image formed by compositing graphics data in the expanded graphics plane and picture data in the expanded video plane as the right view video. When performing stereoscopic display, switching is performed at a predetermined short time interval between the image formed by compositing the basic graphics plane and the basic video plane, and the image formed by compositing the expanded graphics plane and the expanded video plane.

The color conversion unit 18a, with use of a color look-up table, converts pixel codes stored in the basic graphics plane 15 to Y, Cr, and Cb.

The color conversion unit 18b, with use of the color look-up table, converts pixel codes stored in the expanded graphics plane 16 to Y, Cr, and Cb.

The composite unit 19a composites pixels of uncompressed-format picture data stored in the basic video plane 8a with pixels of expanded graphics in the basic graphics plane 15.

The composite unit 19b composites pixels of uncompressed-format picture data stored in the expanded video plane 8b and pixels of expanded graphics in the expanded graphics plane 16.

The MPU 21 forms a core of computer architecture in the playback apparatus. The MPU 21 fetches native code stored in the ROM 22 and decodes the native code, and in accordance with the native code, executes the processing of the playback apparatus.

In the ROM 22, a built-in program of the playback apparatus is stored in advance.

The dynamic scenario memory 30 is a memory, in which a current dynamic scenario is stored in advance, that is provided for the processing of the command interpreter that is the operation agent of HDMV mode, and the Java platform that is the operation agent of BD-J mode. The current dynamic scenario refers to a scenario that is targeted for current execution from among an Index.bdmv, a BD-J object, and a movie object recorded on a BD-ROM, the built-in media or the removable media.

The heap memory 31 is a stack area in which byte codes of system applications, byte codes of BD-J applications, system parameters used by system applications, and application parameters used by BD-J applications are arranged.

This concludes the description of the internal structure of the playback apparatus. The following describes the details of the software layer model of the playback apparatus.

Fig.31 shows a software layer model in the playback apparatus. In the software layer module, three operation agents are present in the MPU 21, namely an HDMV module, a BD-J module, and a mode management module. The operation agents perform control of the Index.bdmv, the BD-J object, and the movie object present in the dynamic scenario memory 30.

The following describes the HDMV module, the BD-J module, and the mode management module.

The command interpreter 40 that is an exemplary HDMV module is a DVD virtual player that is an operation agent of HDMV mode, and is an execution agent of HDMV mode. The command interpreter that is an operation agent of HDMV mode decodes a navigation command in a scenario program, and executes the navigation command. Since the navigation commands are written in a syntax that is similar to DVD-Video, playback control similar to DVD-Video can be executed by executing the relevant navigation command.

The BD-J platform 41 is a Java platform that is an operation agent of BD-J mode, and fully implements Java2 Micro-Edition (J2ME) Personal Basis Profile (PBP 1.0) and Globally Executable MHP specification (GEM1.0.2) for package media targets.

The module manager 42 that is an exemplary mode management module holds the index.bdmv read out from any of the BD-ROM, the built-in medium, and the removable mediums, and performs mode management and branch control. The mode management by the module manager 42 is an assignment of a module, namely, specifying whether to cause a dynamic scenario to be executed by the command interpreter 40, or the BD-J module.

This concludes the description of the three modules, namely the command interpreter 40, the BD-J module, and the module manager 42. Next, the following describes the internal structure of the BD-J platform unit 41.

The BD-J module is constituted from a middleware 35, a byte code interpreter 32, and a system application present on a heap memory 31. In the system application on the heap memory, from among class libraries included in a class loader 33, an application manager 34, and a middleware 35, such elements that are arranged in the heap memory 31 and executed, for example, are present. The following describes these constituent elements.

The byte code interpreter 32 causes the MPU 21 to execute the BD-J application stored in the heap memory 31 by converting byte codes in the system application to native code.

The class loader 33 is one system application. The class loader 33 reads byte code from a class file present in a JAR archive file, and performs loading of the BD-J application by storing the byte code in the heap memory 31.

The application manager 34 is one system application. The application manager 34 performs application signaling of the BD-J application such as starting up the BD-J application and ending the BD-J application according to the application management table in the BD-J object.

The middleware 35 is an operating system for built-in software, and is constituted from a kernel and a device drive. The kernel provides playback apparatus-unique functions to the BD-J application in response to an Application Programming Interface (API) call from the BD-J application. Also, the kernel realizes hardware control such as starting up an interference handler by an interference signal.

The areas of the memory device are managed by the middleware 35, for example as memory pool management functions and heap area management functions. Memory pool management functions manage empty memory areas, allocate a requested memory size to an application as necessary, and when use has ended, returns to a state of being accumulated in the memory. In heap area management, a memory pool is set in an empty area of the memory, and provides a necessary size of memory in response to the requirements of a task.

This concludes the description of the BD-J platform unit 41. Next, an improvement of the BD-J platform unit 41 for drawing GUI processing is described.

When a certain title becomes the current title, the BD-J platform 41 instructs the plane controller 17 to perform drawing, according to the configuration information written in the GUI management table corresponding to the current title.

At this time, when performing planar view display, the BD-J platform 41 instructs the plane controller 17 only to perform drawing to the basic graphics plane. When performing stereoscopic display, the BD-J platform 41 instructs the plane controller 17 to perform graphics drawing for the left view to the basic graphics plane, and to perform graphics drawing for the right view to the expanded graphics plane. The graphics drawing for the left view is performed by rendering the viewpoint position of the left view position of a viewer, and the graphics drawing for the right view is performed by rendering the viewpoint position of the right view position of a viewer.

This concludes the description of the improvements of drawing by the BD-J platform unit 41.

Fig.32 is a diagram in which an Index.bdmv and a BD-J object are written on a left side and a software layout model is written on a right side. The arrows indicate how the constituent elements of the Index.bdmv and the BD-J object are handed over. The arrow near the circled number "1" diagrammatically indicates reading of the title number and the operation mode object ID by the module manager 42. The arrow near the circled number "2" diagrammatically indicates reading of the application management table by the application manager. The arrow near the circled number "3" diagrammatically shows reading of the PlayList management table by the playback control engine 14, and the arrow near the circled number "4" diagrammatically indicates reading of the GUI management table by the plane controller 17.

When performing planar display, the plane controller 17 instructs the composite unit 19a to composite the basic graphics plane 15 and the basic video plane 8a, and output the result of the composition. When performing stereoscopic display, the plane controller 17 instructs the composite unit 19a to composite the basic graphics plane 15 and the basic video plane 8a and output the result of the composition, and instructs the composite unit 19b to composite the expanded graphics plane 16 and the expanded video plane 8b, and output the result of the composition.

Fig.33 shows a BD-J application, a video plane, and a graphics plane on a software layer model drawn in one drawing. A plurality of graphics constituting an animation are expanded in the memory. The arrows diagrammatically indicate writing by the BD-J application. In other words, Fig.33 illustrates that the BD-J application writes one cell of the animation, and graphics corresponding to the one cell, in the basic graphics plane and the expanded graphics plane.

The following describes a case of implementing the application manager 37 as software. Fig.34 is a flowchart showing a procedure for processing performed by the module manager 42. The processing procedure in Fig.34 includes a main loop constituted from step Sal - step S2 - step S3 - step S4. Step S1 is a judgment as to whether a new current title has been selected. If the selection has been made, in step S7, all of the graphics planes in the memory device are released and processing proceeds to step S8.

Step S8 is a judgment as to whether there is a PlayList management table in the BD-J object corresponding to the current title. If there is not a PlayList management table, playback of the PlayList written in the PlayList management table in the previous title is stopped (step S9).

If there is a PlayList management table, and if there is an AutoPlay PlayList in the PlayList management table that is not written in the PlayList management table of the previous title and is written in the PlayList management table of the current title, playback of the AutoPlay PlayList is started (step S10).

] In step S11, a judgment is performed as to whether there is a GUI management table in the BD-J object corresponding to the current title. Step S12 is a judgment step performed when there is a GUI management table, in which a GUI management table configuration is set in the plane controller and initialization is executed (S12).

Step S15 is a judgment as to whether there is an application management table in the BD-J object corresponding to the current title. If the table is present, a Java(TM) application is started up that does not specify a previous title as a life cycle, does specify a current title as a life cycle, and has an AutoRun attribute (step S16). If the table is not present, any application that does specify the previous title as a life cycle and does not specify the current title as a life cycle is stopped (step S17).

Thereafter, a judgment is performed as to whether the start-up of the Java(TM) application is successful (YES in step S18), and if the start-up is successful (YES in step S18), a procedure (step S19) is realized in which the playback images of the AutoPlay PlayList are converted to a quarter (1/4).

Meanwhile, if step S18 is NO, a loop made up of steps S23, S24, S16, and S18 is executed. The control variable in the loop processing is a restart counter. The restart counter is a counter that stipulates a number of times the application has been restarted. The restart counter is reset when the flowchart is started up, and in step S23, a judgment is performed as to whether the value is 0. When the value is not 0, the restart counter in step S24 is decremented. According to the loop processing of the steps S23, S24, S26, S18, and S19, as long as the restart counter is not 0, the startup of the AutoRun application is repeated. According to this repetition, the start-up of the application is guaranteed.

Step S2 is a judgment as to whether the status is such that the main application is not being executed. If the main application is not being executed, the judgment of step S5 is performed. Step 5 is a judgment as to whether the application has ended normally. If the judgment has ended abnormally, the processing of step S21 and step S22 are performed. If the judgment has ended normally, processing returns to the main loop of steps S1 to S4, and the processing of steps S21 through S22 is not executed.

Step S21 is a judgment as to whether the AutoPlay PlayList is being played back. If the judgment is affirmative, the playback control engine is instructed to change the playback screen of the AutoPlay PlayList to full screen (step S22). Thereafter, processing proceeds to step S23. By proceeding to step S23, the loop processing of steps S14 to S17 is executed even at the time of an abnormal end. Accordingly, restarting the application is repeated until the value of the restart counter reaches 0.

Step S4 is a judgment as to whether the BD-ROM is present in the BD drive 1, and if the BD-ROM is present, an end instruction is issued to all of the applications (step S6).

Fig.35 is a flowchart showing a procedure of playback of the PlayList information.

In step S31, the current PlayItem number is initialized to "1", and processing proceeds to the loop from step S32 to S42. This loop performs the processing from steps S32 to S40 on the current PlayItem numbers, and increment processing on the current PlayItem number is repeated until the current PlayItem number reaches the last PlayItem number (YES in step S42). Steps S32 to S40 are as follows.

In step S32, the current PlayItem.In _Time and current PlayItem.Out_Time are converted to Start_SPN[i] and End_SPN [i].

The BaseView stream is selected (step S33), the current stream number of the selected stream is written to the PSR (step S34), the SubPlayItem corresponding to the current stream number is specified (step S35), and the specified SubPlayItemIn_Time and SubPlayItemOut_Time are converted to End_SPN[j] (step S36).

An extent is specified that belongs to the read range [i] for reading the TS packet [i] of a packet ID [i] from the Start_SPN[i] to the extension data [i] (step S37), and an extent is specified that belongs to the read range for reading the TS packet [j] of a packet ID [j] from the Start_SPN[j] to the extension data [j] (step S38). In step S39, the extents belonging to the read ranges [i] and [j] are sorted in ascending order by address, and in step S40, the drive is instructed to successively read the extents belonging to the read ranges [i] and [j] with use of the sorted addresses.

Fig.36 is a flowchart showing a procedure of processing performed by a plane controller. In step S51, in basic plane configuration information in the GUI management table of the BD-J object, (number of horizontal pixels * number of vertical pixels * byte number of each pixel) of plane memory is reserved on the RAM, and processing proceeds to steps S52 and S53. Step S52 is a step of judging whether a stereoscopic processing ability is present in the television 103 that is connected to the playback apparatus via HDMI. Step S53 is a step of judging whether the display method flag of the BD-J object is "1". If either judgment is "No", plane control for planar view is performed. If the judgment of both steps is "Yes", a judgment is made that stereoscopic display is possible, and in step S54, a plane memory having a byte number of vertical pixels*horizontal pixels*1 pixel is reserved on the RAM in the expanded plane configuration information in the GUI management table of the BD-J object, and processing proceeds to step S55. Step S55 is a step of monitoring whether a display period of 1/48 second has passed, and if so, the judgment of step S55 is affirmative, and the processing from steps S56 to S60 is executed. Specifically, the video plane and graphics plane targeted for display are determined (step S56), one line worth of pixel data stored in the graphics plane is read, and converted to Y, Cr, and CB (step S59). The processing of compositing the one line worth of Y, Cr, and CB read from the video plane with each pixel (step S60) is repeated for all lines in the graphics plane and the video plane (step S57, S58).

Note that although in the present embodiment, step 52 is an inquiry as to whether the television 103 that is the receiving device connected to the playback apparatus has processing power for stereoscopic view, instead, a user interface may be provided in the playback apparatus 102, and the user may perform a setting in advance as to whether to perform stereoscopic output.

Fig.37 is a flowchart showing a procedure of processing for GUI processing performed by the BD-J application. In step S71, a scaling factor of the graphics is determined based on a resolution in the configuration information and a resolution of the graphics in the animation data, and in step S72, the BD-J application waits for the display period of the BaseView graphics to pass. When the period has passed, in step S73, a pair of coordinates ((X,Y)) for displaying BaseView graphics is calculated with use of the determined scaling factor (step S73). The BaseView graphics are written to the coordinates (XB, YB) on the basic graphics plane (step S74).

Step S75 is a judgment as to whether the display method flag is on, and if the display method flag is set to "0" (that is, off), processing returns to step S72.

If the display method flag is set to "1" (that is, on), the BD-J application waits for the display period of the EnhancedView graphics to pass. When the display period has passed, in step S77, a pair of coordinates ((X,Y)) for displaying EnhancedView graphics is calculated with use of the determined scaling factor (step S77), and writes the enhanced view graphics to the expanded graphics plane coordinates (XE, YE) (step S78). Thereafter, processing returns to step S72.

When embodied as described above, since the display method flags of configuration information in the GUI management table indicate whether it is necessary to reserve a plurality of plane memories (a plurality of image planes and a plurality of video planes) for realizing a stereoscopic view of the graphics, when playing back content for which additional plane memory is not necessary, the scale of the plane memory corresponding to each of the image planes and video planes to be reserved return to one (that is to say, reserving the basic video plane and basic graphics respectively is sufficient). When a switch is made from playback in which a title including a planar content becomes the current title and is played back, to playback in which a title including a stereoscopic content becomes the current title and is played back, even when a plane memory is added for the stereoscopic content, thereafter, when switching back again from playback in which a title including a stereoscopic content becomes the current title and is played back to playback in which a title including a planar content becomes the current title and is played back, the added plane memory does not remain reserved after playback, straining the available capacity in the memory. This enables stabilizing the operation of the application. When targeting for playback a BD-ROM for which, among many contents, stereoscopic playback is realized for only one content, and only planar playback can be realized for the other contents, after playing back the stereoscopic contents, the plurality of plane memories for stereoscopic view can immediately be released.

### [Second Embodiment]

The present embodiment relates to an improvement of the invention, in which an API that realizes an application is provided in middleware. The API is provided to a BD-J application by means of a frame precision animation execution unit.

Fig.38 shows a frame precision animation execution unit 80.

When a current title switches, the frame precision animation execution unit 80 uses configuration information in the GUI management information in the BD-J object as a reference for drawing animation to the coordinate system indicated in the configuration information. When a functional call is performed that specifies a display rate between a file path that specifies a file in which animation data is stored, and a display rate in the animation, the frame precision animation execution unit plays back the individual graphics included in the animation data at the designated display rate, and composites the graphics with moving images. At this time, when writing to the expanded graphics plane, while shifting the position of writing the graphics in consideration of a difference in viewpoint, the animation data is written to the basic graphics plane and the expanded graphics plane.

If an API call occurs, since writing of the graphics is performed while shifting the respective coordinates to which the graphics are written in the basic graphics plane and the expanded graphics plane, a stereoscopic view of the graphics is possible.

According to the present embodiment, since the frame precision animation execution unit is caused to adjust the writing position, the processing load on the BD-J application can be reduced.

(Remarks)

This concludes the description of the best modes of embodying the present invention known by the applicant at the time of filing the present application. However, regarding the following technological topics, further improvements and modifications may be added. Please note that whether to implement the embodiments in the manner described, or to use any of the improvements/modifications, is at the arbitrary discretion of the one implementing the invention.

(Expression of Resolution and Display Method Flags)

The GUI management table in the BD-J object is preferably realized as a resolution code and a resolution code that is integrated with display method flags. For example, when attempting to reserve a plane memory of HD image quality having a scale of 1920*1080 for stereoscopic playback, a resolution code of HD3D_1920*1080 is written in the GUI management table. When attempting to reserve a plane memory of HD image quality having a scale of 1280*1080 for stereoscopic playback, a resolution code of HD3D_1280*1080 is written in the GUI management table. When the resolution and the display method flags are written with this type of description, the playback apparatus preferably reserves a plane memory having the same resolution on the memory device for stereoscopic playback.

(Implementation as Recording Apparatus)

The playback apparatus 102 includes a local storage including a built-in media drive and a removable medium. Since it is anticipated in this structure that the writing will be performed to the built-in media drive and the removable medium, the playback apparatus described in the present specification can be said to have a dual function as a recording apparatus. When the playback apparatus 102 fulfils the function of a recording apparatus, the writing of management objects is performed according to the following two modes.

i) When the playback apparatus 102 has a function of playing back a virtual package, writing of the BD-J object that is a management object is performed as follows. That is, when the BD-ROM is loaded, according to a request from an application, additional content corresponding to the BD-ROM is acquired from a WWW server via a network. The acquired additional content includes a BD-J object that is written in the GUI management table. In the playback apparatus 102, a control unit that performs recording control, according to a request from the application, writes the acquired BD-J object to a local storage. By doing this, the contents recorded on the BD-ROM are combined with the additional contents recorded in the local storage, thereby enabling constructing the virtual package.

Here, in the BD-ROM, an identifier of a disk root certificate, an identifier of an organization to which BD-ROM contents have been distributed, and a BD-ROM identifier have been recorded, and an area in which the additional contents are to be stored are specified by a file path including a disk root certificate identifier, an organization identifier, and a BD-ROM identifier.

The application writes the file path that specifies the area in which the additional content is to be stored by transferring the file path to the control unit.

When the local storage has a file system that limits the names of directories and files to 255 characters or less, the file path used for writing to the local storage includes file names and extensions in a 8.3-format file system in which directory names are 8 characters or less and file names and extension names are three characters or less.

ii) When the playback apparatus 102 has a function of being provided with an on-demand manufacturing service or an electronic sales service (MODEST), the BD-J object that is a management object is written in the following manner.

When the playback apparatus 102 is provided with a BD-J object via the on-demand manufacturing service or the electronic sales service, under a root directory in the removable medium, a default directory and a MODEST directory have been created, and under the MODEST directory, a BDMV directory has been created. The MODEST directory is a first MODEST directory, which is the MODEST directory that is created when a service is received for the first time. When the user receives a service two or more times, the control unit of the playback apparatus 102 creates the MODEST directory corresponding to services from the second time onward.

As described above, upon acquiring a BD-J object in which a GUI management table is written, the control unit writes a start-up program to the default directory, and writes the BD-J object to the BDMV directory under the MODEST directory. This start-up program is a first program to be executed when the recording medium is loaded in the recording apparatus 102. The start-up program causes a menu to be displayed on the playback apparatus 102, the menu being for receiving an operation selecting a BDMV directory from the user. The start-up program causes a root change function to be executed on the playback apparatus 102. When the selection operation is performed by the user on the menu, the root change function causes the MODEST directory to which the selected BDMV directory belongs to be recognized as the root directory. The root change function enables executing playback control, by the same control procedure as playing back the BD-ROM, based on the acquired BD-J object.

(Java (TM) Application)

The BD-J application may be, for example, an Electronic Commerce (EC) client application, or may be an online game played against opponents on the Internet. Furthermore, by working together with a search engine, various online services can be provided to the user.

(Units for Integrating the GUI Table)

Although in the embodiment, the GUI management object is provided in the BD-J object, the invention may be configured so as to provide the GUI management table to correlate PlayList information and PlayItem information, and so that the timing at which the current PlayList becomes the current PlayItem or when the current PlayItem becomes the specified PlayItem, the plane memory is released, and plane memories for stereoscopic playback and for planar playback may be reserved. This enables the area of the memory device to be managed with more precise time accuracy.

(Video Stream for Stereoscopic View)

Recording left view and right view video streams on a BD-ROM is only one example. Playback may also be provided by recording on the BD-ROM, for each picture, as an EnhancedView video stream, a video stream indicating per pixel depth values.

(Package to be Implemented)

When implementing an application execution apparatus, the following BD-J Extensions are preferably implemented in the application execution apparatus. The BD-J Extensions include various packages that have been specialized for providing functions exceeding GEM [1.0.2] to a Java (TM) format. Packages to which BD-J Extensions are provided are as follows.

- org.bluray.media
  This package provides specialized functions to be added to the Java (TM) Media FrameWork. Control for angles, audio, and subtitle selection are added to the package.
- org.bluray.ti
  This package includes a structure for referring to an API for operating by mapping "services" to "titles" according to GEM [1.0.2] and referring to title information from a BD-ROM, and a structure for selecting a new title.
- org.bluray.application
  This package includes an API for managing life cycles of applications. Also, this package includes an API for referring to necessary information for signaling when executing applications.
- org.bluray.ui
  This package includes a class that defines a constant number for key events specialized in the BD-ROM, and realizes synchronization with the video playback.
- org.bluray.vfs
  This package provides a binding scheme for binding contents that are recorded on the BD-ROM (on-disk contents) and contents in the Local Storage that are not recorded on the BD-ROM (off-disk contents) and playing back the contents seamlessly, regardless of the location of the contents.

The Binding Scheme correlates contents on the BD-ROM (AV clips, subtitles, BD-J applications) with related contents in the Local Storage. This Binding Scheme realizes seamless playback regardless of the location of the contents.

(Control Performed by the Plain Controller)

When the memory device is structured as an SDRAM, it is necessary, as processing of the plane controller, to perform characteristic control for accessing the SDRAM.

The SDRAM includes a ROW address decoder that outputs a ROW address output at time-divided address pins to a memory array, a COLUMN address decoder that outputs a COLUMN address output at time-divided address pins to a memory array, a page data buffer that holds one page length worth of data read from the memory array, and outputs the one page length worth of data at the address pins. Since the SDRAM uses a condenser as a storage element, natural discharge occurs. For this reason, it is necessary in the SDRAM to perform refresh on the storage elements, and additional circuits must be added for performing refresh.

When a picture is stored in the SDRAM, the plane controller forms a command by combining the states of RAS, CAS, WE, CS, and CKE, and by combining the command and a combination of the addresses, reading and writing are performed. For example, when using a burst transfer mode, an activated command is issued, and a ROW address is issued at the address pin of the SDRAM. After a delay of a fixed time period, a READ command is issued, and the COLUMN address is issued at the address pin.

(Programming Language Application Range)

It is described in the embodiments that Java (TM) language is used as the virtual machine programming language. However, the language is not limited to Java (TM), and other programming languages, such as B-Shell, Perl Script, and ECMA Script, which are used in UNIX (TM) OS and the like, may also be used.

(Changing to Multidrive)

The above-described embodiments describe a BD-ROM as an example of a recording medium, and a BD-ROM drive as an example of a specific device fulfilling a function of reading data from the BD-ROM. However, a BD-ROM is merely one example, and it is also possible to perform the operations described in the above embodiments when an optical disk medium such as BD-R, BD-RE, DVD, or CD is used as the recording medium, data having the above-described data structure is stored on such recording medium, and there is a drive device capable of reading such recording medium.

The recording media of the embodiments includes all types of package media such as optical disks, semiconductor memory cards, etc. The recording media of the embodiments described, as an example, an optical disk (for example, a preexisting read-only optical disk such as a BD-ROM or a DVD-ROM). However, the present invention is not limited to this. For example, it is possible to implement the present invention by writing 3D contents, including data that is necessary for implementing the present invention and has been broadcast or distributed over a network, with use of a terminal device fulfilling a function of writing 3D contents (for example, the function may be included in the playback apparatus, or may be included in an apparatus other than the playback apparatus), on a writable optical disk (for example, a preexisting writable optical disk such as BD-RE or DVD-RAM).

Also, it is possible to implement the present invention when the recording medium is, besides an optical disk, for example, a removable medium such as an SD memory card (semiconductor memory card).

When a BD-ROM is used, for example, data in the read buffer 1 and the read buffer 2 is transferred to the heap memory 31, the dynamic scenario memory 30, and the static scenario memory 13 via the BD-ROM drive 109 shown in Fig.30. In contrast, when a semiconductor memory is used instead of a BD-ROM, the data in the read buffer 1 and the read buffer 2 is transferred to the heap memory 31, the dynamic scenario memory 30, and the static scenario memory 13 via an interface for reading data in the semiconductor memory card (a memory card I/F).

More specifically, when a semiconductor memory card is inserted in a slot (not illustrated) in the playback apparatus 102, the playback apparatus 102 and the semiconductor memory card are electrically connected via the memory card I/F. The data recorded on the semiconductor memory card need only be transferred, via the memory card I/F, to the read buffer 1, the read buffer 2, the heap memory 31, the dynamic scenario memory 30, and the static scenario memory 13.

From a standpoint, for example, of improving the confidentiality of data and copyright protection, there are cases in which portions of the data recorded on the BD-ROM are encoded as necessary.

For example, the encoded data of the data recorded on the BD-ROM may be, for example, data corresponding to a video stream, data corresponding to an audio stream, or data corresponding to a stream that includes both video and audio.

The following describes deciphering of encoded data that is among the data recorded on the BD-ROM.

In the playback apparatus, data corresponding to a key necessary for deciphering encoded data on the BD-ROM (for example, a device key) is recorded in the playback apparatus in advance.

Meanwhile, data corresponding to the key necessary for deciphering encoded data (for example, an MKB (media key block) corresponding to the device key) and data in which the key itself, for deciphering the encoded data, is encoded (for example an encoded title key corresponding to the device key and the MKB), is recorded on the BD-ROM. Here, the device key, the MKB, and the encoded title key correspond to each other, and furthermore correspond to an identifier (for example, a volume ID) written in an area that cannot be normally copied on the BD-ROM (an area called BCA). If this combination is not correct, the code cannot be deciphered. Only if the combination is correct, the key necessary for deciphering the code (for example, a decoded title key obtained by decoding the encoded title key based on the device key, the MKB and volume key, can be elicited, and with use of the key necessary for the encoding, the encoded data can be deciphered.
When the inserted BD-ROM is played back in the playback apparatus, encoded data cannot be played back unless the BD-ROM includes a device key that is paired with a title key or MKB (or corresponds to a title key or MKB). The reason is that the key necessary for deciphering the encoded data (the title key) is itself encoded when recorded on the BD-ROM (as an encoded title key), and if the combination of the MKB and the device key is not correct, the key necessary for deciphering the code cannot be elicited.

On the other hand, the playback apparatus is configured so that, if the combination of the encoded title key, MKB, device key, and volume ID is correct, the video stream is decoded, for example with use of the key necessary for deciphering the code (the decoded title key obtained by decoding the encoded title key based on the device key, the MKB and the volume ID), and the audio stream is decoded by the audio decoder.
Although in the present embodiments, a BD-ROM is described as an example of a recording medium, the recording medium is not limited to being a BD-ROM, and the present invention can be implemented even when using, for example, a readable/writable semiconductor memory (for example, a semiconductor memory card having a nonvolatile property such as an SD card).

For example, the playback apparatus may be configured to record data corresponding to data recorded on the BD-ROM on a memory card with use of digital distribution, and to play back the data from the semiconductor memory card. When distributing the necessary data with use of digital distribution and recording the distributed data, it is preferable to distribute the data after having performed partial or entire decoding of the distributed data as necessary, and leaving data that is necessary for the semiconductor memory card in an encoded state.
The following describes operation using, for example, digital distribution, for recording data (distributed data) corresponding to the data described in the above embodiments on the semiconductor memory.

The operations described above may be configured to be performed by the playback apparatus described in the embodiments, or by a terminal apparatus dedicated to recording distributed data on a semiconductor memory that is separate from the playback apparatus in the embodiments. Here, an example of the playback apparatus performing the operations is described. Also, an SD card is described as an example of the recording destination.

When recording distributed data to the SD memory card inserted in the slot of the playback apparatus, first, transmission is requested of the distributed data to a distribution server (not illustrated) that accumulates the distributed data. The playback apparatus reads, from the SD memory card, information for uniquely identifying the SD memory card that is inserted at the playback apparatus at this time (for example, a specific identification number assigned individually to the particular SD memory card, more specifically, a serial number of the SD memory card, etc.), and transmits the read identification information to the distribution server along with the distribution request.

This identification information for uniquely identifying the SD memory card corresponds to, for example, the above-described volume ID.

Meanwhile, in the distribution server, decoding is performed so that necessary data among the data that is distributed (video streams, audio streams, etc.) can be deciphered with use of the key that is necessary for deciphering the code (for example, the title key), and the necessary data is stored in the server.

For example, a private key is stored in the distribution server, and the distribution server is configured so that different public keys are dynamically created to correspond respectively to the semiconductor memory card-specific identification numbers.

Also, the distribution server is configured so that encoding is possible towards the key that is necessary for deciphering the encoded data itself (the title key) (in other words, configured so that an encoded title key can be generated).
The generated public key information includes information corresponding to the above-described MKB, volume ID, and encoded title key. If the combination of, for example, the semiconductor memory card-specific identification number, the actual public key included in the public key information described later, and the device key recorded in advance in the recording apparatus, is correct, the key necessary for deciphering the code (for example, the title key obtained by decoding the encoded title key based on, for example, the device key, the MKB, and the semiconductor memory card-specific identification number) is acquired, and with use of this acquired key (title key) necessary for deciphering the code, decoding of the encoded data can be performed.
Next, the playback apparatus records the received public key information and distributed data in the recording area of the semiconductor memory card inserted in the slot.

Next, the following describes an exemplary method for decoding and playing back encoded data, from among the data included in the public key information recorded in the recording area of the semiconductor memory card and the data included in the distribution data.

The received public key information is, for example, recorded on a device list indicating the public key itself (for example, the MKB and the encoded title key), signature information, the semiconductor memory card-specific identification number, and information pertaining to a device to be invalidated.

The signature information includes, for example, hash values of the public key information.

In the device list, information is recorded pertaining to, for example, an apparatus that is possibly performing unauthorized playback. This is for example a device key, an identification number of the playback apparatus, or an identification number of a decoder in the playback apparatus recorded in advance on the playback apparatus, information for uniquely specifying the device, a part included in the apparatus, or a function (program) of the apparatus possibly performing unauthorized playback.

The following description pertains to playback of encoded data from among the distribution data recorded in the recording area of the semiconductor memory card.

First, a check is performed pertaining to whether the encoded key itself may be operated before decoding the encoded data with use of the public key itself.

Specifically, the following checks are performed:

(1) whether there is a match between the semiconductor memory identification information included in the public key information and the specific identification number stored in advance on the semiconductor memory card,
(2) whether there is a match between a hash value of the public key information calculated in the playback apparatus, and a hash value included in the signature information, and
(3) whether, based on information indicated in the device list included in the public key information, the playback apparatus performing playback is possibly performing unauthorized playback (for example, by checking whether the device key included in the device list matches the device key stored in the playback apparatus in advance).
These checks may be performed in any order.

Control is performed so that the playback apparatus does not decode the encoded data if any of the following is satisfied, in the above-described checks 1 to 3: i) the semiconductor memory-specific identification information included in the public key information does not match the specific identification number stored in advance on the semiconductor memory card, ii) the hash value of the public key information calculated in the playback apparatus does not match the hash value included in the signature information, or iii) a judgment is made that the playback apparatus performing the playback is possibly performing unauthorized playback.
Also, a judgment is made that the combination of the semiconductor memory-specific identification number, the public key included in the public key information, and the device key recorded in advance in the playback apparatus, is correct if i) the semiconductor memory card-specific identification information included in the public key information matches the specific identification number saved on the semiconductor memory card in advance, (ii), the hash value of the public key information calculated in the playback apparatus matches the hash value included in the signature information, and (iii) a judgment is made that the playback apparatus is not possibly performing unauthorized playback. When the combination is judged to be correct, the encoded data is deciphered with use of the key necessary for deciphering the code (based on a device key, the MKB and the semiconductor memory-specific identification number).
For example, when the encoded data is a video stream and an audio stream, the video decoder decodes (decodes) the video stream with use of the key necessary for deciphering the code (the title key obtained by decoding the encoded title key), and the audio decoder decodes (decodes) the audio stream with use of the key necessary for deciphering the code.
According to this type of structure, for any playback apparatus, parts, function (program), etc. that is possibly performing unauthorized use at the time of electronic distribution, information for the identification of such is provided to the device list, and if distribution is attempted, since playback decoding with use of public key information (the public key) can be suppressed on the playback apparatus side if information is included that is indicated in the device list, even if the combination of the semiconductor memory-specific identification number, the public key included in the public key information, and the device key recorded in the playback apparatus in advance, is correct, since control can be performed so that the deciphering of the encoded data is not performed, use of distributed data on an unauthorized device can be suppressed.
Also, it is preferable to use a structure in which the semiconductor memory card-specific identifier recorded in advance on the semiconductor memory card is stored in a highly confidential recording area. The reason is that when the specific number recorded on the semiconductor memory card (for example, in the example of an SD memory card, the SD memory card serial number, etc.) has been altered, illegal copying is facilitated. The reason is that different specific identification numbers are allocated to different semiconductor memory cards, but if the specific identification numbers are altered to be the same, the judgment in (1) becomes meaningless, and there is a possibility of illegal copying, corresponding to the number that was altered, being performed.

Accordingly, it is preferable for the information that is the semiconductor memory card-specific identification number to be recorded in a high-confidentiality recording area.

To realize this type of structure, for example by providing a recording area (called a second recording area) that is separate from the recording area (called a first recording area) that stores normal data as recording areas for recording high-confidentiality data that is semiconductor memory card-specific identifiers), and providing a control circuit for accessing the recording area, access to the second recording area can be made only via the control circuit.

For example, the data recorded in the second recording area has been encoded and recorded. For example, a circuit for decoding the encoded data is built into the control circuit. When there is access of the data in the second recording area via the control circuit, the structure need merely be such that the code is decoding and the decoded data is returned. Also, if the control circuit stores information of a storage location of data recorded in the second recording area, and there is a request to access the data, the corresponding storage location of the data need merely be specified, and the data read from the specified storage location be returned.

Upon issuing an access request to the data recorded in the second recording area to the control circuit via the memory card I/F (for example, semiconductor memory-specific identification number), applications that operate in the playback apparatus that request recording to the semiconductor memory card with use of digital distribution, the control circuit that received the request reads the data recorded in the second recording area and returns the data to the application operating in the playback apparatus. Along with the semiconductor memory card-specific identification number, the distribution request for the necessary data need only be requested from the distribution server, and the public key information sent from the distribution server and the corresponding request for distribution of the data, may be recorded to the first recording area.

Also, an application operating in the playback apparatus, that requests recording on the semiconductor memory card with use of digital distribution, before issuing the request to the control circuit via the memory card I/F to access the data recorded on the second recording area (for example, the semiconductor memory card-specific identification numbers), preferably checks in advance whether the application has been altered. For example, a digital certificate compliant with preexisting X.509 specifications may be used in the check for alteration.

Also, access to the distribution data recorded in the first recording area of the semiconductor memory card need not necessarily be access via a control circuit on the semiconductor memory card.

(Implementation as a Program)

The application program described in the embodiments can be made as described below. First, the software developer, with use of a programming language, writes a source program to realize the content of the flowcharts and the functional structural elements. When writing the source program that embodies the content of the flowcharts and the functional structural elements, the software developer uses the class structures, variables, array variables, and external function calls to write the program in accordance with the syntax of the programming language.

The written source programs are given as files to a compiler. The compiler translates the source programs and creates an object program.

The translation by the compiler is made up of the processes of syntax analysis, optimization, resource allocation, and code generation. Syntax analysis involves performing lexical analysis and semantic analysis of the source programs, and converting the source programs to an intermediary program. Optimization involves performing operations to divide the intermediary program into basic blocks, analyze the control flow of the intermediary program, and analyze the data flow of the intermediary program. In resource allocation, to improve suitability with a command set of a targeted processor, variables in the intermediary program are allocated to a register or a memory in a targeted processor. Code generation is performed by converting the intermediary commands in the intermediary program into program code, and obtaining an object program.

The object program generated here is made up of one or more program codes for executing, on a computer, the steps of the flowcharts and the various processes carried out by the functional structural elements in the embodiments. Here, program code may be any of various types such as native code of a processor or JAVA byte code. There are various formats for realization of the steps by the program code. If it is possible to use external functions to realize the steps, call texts that call such functions become program code. Also, there are cases in which a program code for realizing one step is attributed to separate object programs. In a RISC processor in which command types are limited, the steps of the flowcharts may be realized by combining calculation operation commands, logical calculation commands, branch instruction commands, etc.

When the object programs have been created, the programmer starts up a linker. The linker allocates the object programs and library programs to memory spaces, combines the object programs and library programs into one, and generates a load module. The load module generated thus is anticipated to be read by a computer, and causes the computer to execute the processing procedures and functional structural components shown in the flowcharts. The programs may be provided to users by being recorded on a recording medium that is readable by a computer.

(Singular Implementation of the LSI)

The system LSI is obtained by implementing a bare chip on a high-density substrate and packaging them. The system LSI is also obtained by implementing a plurality of bare chips on a high-density substrate and packaging them, so that the plurality of bare chips have an outer appearance of one LSI (such a system LSI is called a multi-chip module).

The system LSI has a QFP (Quad Planar view Package) type and a PGA (Pin Grid Array) type. In the QFP-type system LSI, pins are attached to the four sides of the package. In the PGA-type system LSI, a lot of pins are attached to the entire bottom.

These pins function as an interface with other circuits. The system LSI, which is connected with other circuits through such pins as an interface, plays a role as the core of the playback apparatus 101.

Such a system LSI can be embedded into various types of devices that can play back images, such as a television, game machine, personal computer, one-segment mobile phone, as well as into the playback apparatus 102. The system LSI thus greatly broadens the use of the present invention.

When an elementary buffer, video decoder, audio decoder, and graphics decoder are integrated into a system LSI, it is desirable that the system LSI conforms to the Uniphier architecture.

A system LSI conforming to the Uniphier architecture includes the following circuit blocks.

- Data Parallel Processor (DPP)

The DPP is an SIMD-type processor where a plurality of elemental processors perform a same operation. The DPP achieves a parallel decoding of a plurality of pixels constituting a picture by causing operating units, respectively embedded in the elemental processors, to operate simultaneously by one instruction.

- Instruction Parallel Processor (IPP)

The IPP includes: a local memory controller that is composed of instruction RAM, instruction cache, data RAM, and data cache; processing unit that is composed of instruction fetch unit, decoder, execution unit, and register file; and virtual multi processing unit that causes the processing unit to execute a parallel execution of a plurality of applications.

- MPU Block

The MPU block is composed of: peripheral circuits such as ARM core, external bus interface (Bus Control Unit: BCU), DMA controller, timer, vector interrupt controller; and peripheral interfaces such as UART, GPIO (General Purpose Input Output), and sync serial interface.

- Stream I/O Block

The stream I/O block performs data input/output with the drive device, hard disk drive device, and SD memory card drive device which are connected onto the external busses via the USB interface and the ATA packet interface.

- AV I/O Block

The AV I/O block, which is composed of audio input/output, video input/output, and OSD controller, performs data input/output with the television and the AV amplifier.

- Memory Control Block

The memory control block performs reading and writing from/to the SD-RAM connected therewith via the external buses. The memory control block is composed of internal bus connection unit for controlling internal connection between blocks, access control unit for transferring data with the SD-RAM connected to outside of the system LSI, and access schedule unit for adjusting requests from the blocks to access the SD-RAM.

The following describes a detailed production procedure. First, a circuit diagram of a part to be the system LSI is drawn, based on the drawings that show structures of the embodiments. And then the constituent elements of the target structure are realized using circuit elements, ICs, or LSIs.

As the constituent elements are realized, buses connecting between the circuit elements, ICs, or LSIs, peripheral circuits, interfaces with external entities and the like are defined. Further, the connection lines, power lines, ground lines, clock signals and the like are defined. For these definitions, the operation timings of the constituent elements are adjusted by taking into consideration the LSI specifications, and bandwidths necessary for the constituent elements are reserved. With other necessary adjustments, the circuit diagram is completed.

After the circuit diagram is completed, the implementation design is performed. The implementation design is a work for creating a board layout by determining how to arrange the parts (circuit elements, ICs, LSIs) of the circuit and the connection lines onto the board.

After the implementation design is performed and the board layout is created, the results of the implementation design are converted into CAM data, and the CAM data is output to equipment such as an NC (Numerical Control) machine tool. The NC machine tool performs the SoC implementation or the SiP implementation. The SoC (System on Chip) implementation is a technology for printing a plurality of circuits onto a chip. The SiP (System in Package) implementation is a technology for packaging a plurality of circuits by resin or the like. Through these processes, a system LSI of the present invention can be produced based on the internal structure of the playback apparatus 101 described in each embodiment above.

It should be noted here that the integrated circuit generated as described above may be called IC, LSI, ultra LSI, super LSI or the like, depending on the level of the integration.

It is also possible to achieve the system LSI by using the FPGA (Field Programmable Gate Array). In this case, a lot of logic elements are to be arranged lattice-like, and vertical and horizontal wires are connected based on the input/output combinations described in LUT (Look-Up Table), so that the hardware structure described in each embodiment can be realized. The LUT is stored in the SRAM. Since the contents of the SRAM are erased when the power is off, when the FPGA is used, it is necessary to define the Config information so as to write, onto the SRAM, the LUT for realizing the hardware structure described in each embodiment.

In the embodiment, the invention is realized by middleware and hardware corresponding to the system LSI, hardware other than the system LSI, an interface portion corresponding to the middleware, an interface portion to intermediate between the middleware and the system LSI, an interface portion to intermediate between the middleware and the necessary hardware other than the system LSI, and a user interface portion, and when integrating these elements to form the playback apparatus, particular functions are provided by operating the respective elements in tandem.

Appropriately defining the interface corresponding to the middleware and the interface for the middleware and the system LSI enables parallel, independent development of the user interface portion, the middleware portion, and the system LSI portion of the playback apparatus respectively, and enables more efficient development. Note that there are various ways of dividing up the respective interface portions. For example, when the described video recorder 7a, video recorder 7b, audio decoder 9, color conversion unit 18a, color conversion unit 18b, composite unit 19a, and composite unit 19b are included on a chip in the system LSI 106, development of an interface portion between the middleware to control these units and the middleware corresponding to these units is performed when developing the chip. After completion, including the developed middleware and interface portion in a storage unit such as a memory of the playback apparatus, along with integrating the chip into the playback apparatus, enables performing development of the playback apparatus and the chip in parallel, thereby improving development efficiency.

Versatility is improved when the same interface portion is used regardless of the type of developed chip and the middleware pertaining to the developed chip.

Needless to say, the portion structured as a system LSI in the above description is not limited to being structured as an LSI, and may instead be configured with use of a signal processing circuit that includes corresponding functions to those to be included in the system LSI.

**[Industrial Applicability]**

The recording medium, playback apparatus and playback method of the present invention, which enables dynamically switching between a planar display and a stereoscopic display, is especially likely to be used in a movie industry concerned with the creation of AV contents, and a commercial equipment industry concerned with manufacture of equipment to perform such processing. For example, the present invention can be used as a BD-ROM disk, a BD-ROM player, etc.

**[Reference Signs List]**

| | |
|---|---|
| 1 | read buffer |
| 2 | read buffer |
| 6 | demultiplexer |
| 7a,b | video decoder |
| 8a,b | video plane |
| 9 | audio decoder |
| 10 | HDMI transmission/reception unit |
| 12 | playback state/setting register set |
| 13 | static scenario memory |

| | |
|---|---|
| 14 | playback control engine |
| 15 | basic graphics plane |
| 16 | enlarged graphics plane |
| 17 | plane controller |
| 18a,b | color conversion unit |
| 19a,b | composite unit |
| 21 | MPU |
| 22 | ROM |
| 30 | dynamic scenario memory |
| 31 | heap memory |
| 101 | BD-ROM |
| 102 | playback apparatus |
| 103 | television |
| 104 | goggles |
| 105 | front end unit |
| 106 | system LSI |
| 107 | memory device |
| 108 | back end unit |
| 109 | BD-ROM drive |
| 110 | local storage |

**Claims**

**1.** A recording medium on which a plurality of contents are recorded, the contents including a plurality of video data pieces, a management object, and one or more applications, wherein
the video data is either video data for realizing a planar view or video data for realizing a stereoscopic view,
the management object included in the contents includes an application management table and configuration information,
the application management table instructs a playback apparatus which application is to be started up when a content including the application management table is targeted for playback,
the configuration information instructs the playback apparatus to reserve a graphics plane in a memory device included in the playback apparatus, the graphics plane being an area in the memory device on which the application is to draw graphics at a resolution of the video data, and
the configuration information includes a flag, a setting value of the flag indicating a number of graphics planes to be reserved, such that for stereoscopic view, the number of graphics planes indicated by the setting value of the flag is two.

**2.** The recording medium of claim 1, wherein
an index table is further recorded,
the video data pieces included in the contents are video streams,
the contents further include PlayList information that shows a playback order of the video streams and is managed with use of title numbers,
the index table shows each of the title numbers of the contents in correspondence with the management objects, and
the startup instruction to start up an application indicated by the application management table is performed when the playback apparatus selects a title number corresponding to the management object as a current title number.

**3.** The recording medium of claim 1, wherein
the video data for realizing the planar view includes moving picture data that forms the planar view, and
the video data for realizing the stereoscopic view includes right view moving picture data and left view moving picture data.

**4.** The recording medium of claim 1, wherein
a scale of the graphics plane to be reserved is expressed by a resolution code,
the resolution code indicates a number of horizontal pixels and a number of vertical pixels for the graphics to be stored in the graphics plane, and
when two graphics planes are to be reserved, the configuration information piece includes two resolution codes for the two graphics planes.

**5.** A playback apparatus comprising:

a memory device;
a reading unit operable to read a content from a plurality of contents recorded on a recording medium;
a playback unit operable to play back the read content;
an execution unit operable to, when a specified content among the plurality of contents is targeted for playback, start up and execute an application indicated by an application management table in a management object included in the content targeted for playback, and
a control unit operable to reserve, in the memory device, in accordance with configuration information in the management object, a graphics plane for the application to write graphics on, wherein
the application management table instructs a playback apparatus which application is to be started up when a content including the application management table is targeted for playback,
the configuration information includes a flag and information instructing the playback apparatus to reserve a graphics plane in a memory device included in the playback apparatus, the graphics plane being an area on which the application is to draw graphics at a resolution of the video data, and
the control unit reserves two graphics planes for stereoscopic view in the memory device when the flag indicates that two graphics planes are to be reserved.

**6.** The playback apparatus of claim 5, wherein
an index table is further recorded,
the video data pieces included in the contents are video streams,
the contents further include PlayList information that shows a playback order of the video streams and is managed with use of title numbers,
the index table shows each of the title numbers of the contents in correspondence with the management objects,
the execution unit includes a class loader operable to, when a title number corresponding to a management object is selected as a current title number, load an application indicated by the application management table to a heap memory.

**7.** The playback apparatus of claim 5, wherein
the two graphics planes include a right view graphics plane and a left view graphics plane, the graphics include graphics for a right view and graphics for a left view,
the application writes the graphics for the right view in the right view graphics plane and the graphics for the left view in the left view graphics plane, and
a position at which the graphics for the right view are written and a position at which the graphics for the left view are written are offset in correspondence with a difference in view between a right eye and a left eye.

**8.** The playback apparatus of claim 7, wherein
the video data for the stereoscopic view includes right view moving picture data and left view moving picture data, and the reading unit reads the plurality of video data pieces,
further comprising:

a video decoder operable to obtain the right view moving picture data and the left view moving picture data by decoding the plurality of read video data pieces,
a right view video plane operable to store individual picture data pieces that constitute the right view moving picture data, and
a left view video plane operable to store individual picture data pieces that constitute the left view moving picture data, wherein

the graphics written in the right view graphics plane are composited with the picture data stored in the right view video plane, and
the graphics written in the left view video plane are composited with the graphics in the left view video plane.

**9.** The playback apparatus of claim 5, wherein
a scale of the graphics plane to be reserved is expressed by a resolution code,
the resolution code indicates a number of horizontal pixels and a number of vertical pixels for the graphics to be stored in the graphics plane,
the control unit reserves, in the memory device, a graphics plane of a scale indicated by the resolution code,
when the flag indicates that two graphics planes are to be reserved, the configuration information includes two resolution codes for two graphics planes.

**10.** An integrated circuit that can be incorporated in a playback apparatus that plays back any of a plurality of contents recorded on a recording medium, comprising:

a reception unit operable to receive an input of a management object read from the recording medium,
an execution unit operable to, when a specified content among the plurality of contents is targeted for playback, start up and execute an application indicated by an application management table in a management object included in the content, and
a control unit operable to reserve, in the memory device included in the playback apparatus, in accordance with configuration information in the management object, a graphics plane for the application to write graphics on, wherein
the application management table instructs the playback apparatus which application is to be started up when a content including the application management table is targeted for playback,
the configuration information includes a flag and information instructing the playback apparatus to reserve a graphics plane in the memory device included in the playback apparatus, the graphics plane being an area on which the application is to draw graphics at a resolution of the video data, and
the control unit reserves two graphics planes for stereoscopic view in the memory device when the flag indicates that two graphics planes are to be reserved.

**11.** A playback method for playing back contents on a computer that includes a memory device, comprising:

a reading step of reading a content from a plurality of contents recorded on a recording medium;
a playback step of playing back the read content;
an execution step of starting up and executing, when a specified content among the plurality of contents is targeted for playback, an application indicated by an application management table in a management object included in the content targeted for playback, and
a control step of reserving, in the memory device of the computer, in accordance with configuration information in the management object, a graphics plane for the application to write graphics on, wherein
the application management table instructs the computer which application is to be started up when a content including the application management table is targeted for playback,
the configuration information includes a flag and information instructing the computer to reserve a graphics plane in a memory device included in the playback apparatus, the graphics plane being an area on which the application is to draw graphics at a resolution of the video data, and
two graphics planes for stereoscopic view are reserved in the memory device in the control step when the flag indicates that two graphics planes are to be reserved.

**12.** A program for causing contents to be played back on a computer that includes a memory device, comprising the steps of:

a reading step of reading a content from a plurality of contents recorded on a recording medium;
a playback step of playing back the read content;
an execution step of starting up and executing, when a specified content among the plurality of contents is targeted for playback, an application indicated by an application management table in a management object included in the content targeted for playback, and
a control step of reserving, in the memory device of the computer, in accordance with configuration information in the management object, a graphics plane for the application to write graphics on, wherein
the application management table instructs the computer which application is to be started up when a content including the application management table is targeted for playback,
the configuration information includes a flag and information instructing the computer to reserve a graphics plane in a memory device included in the playback apparatus, the graphics plane being an area on which the application is to draw graphics at a resolution of the video data, and
two graphics planes for stereoscopic view are reserved in the memory device in the control step when the flag indicates that two graphics planes are to be reserved.

FIG. 1A

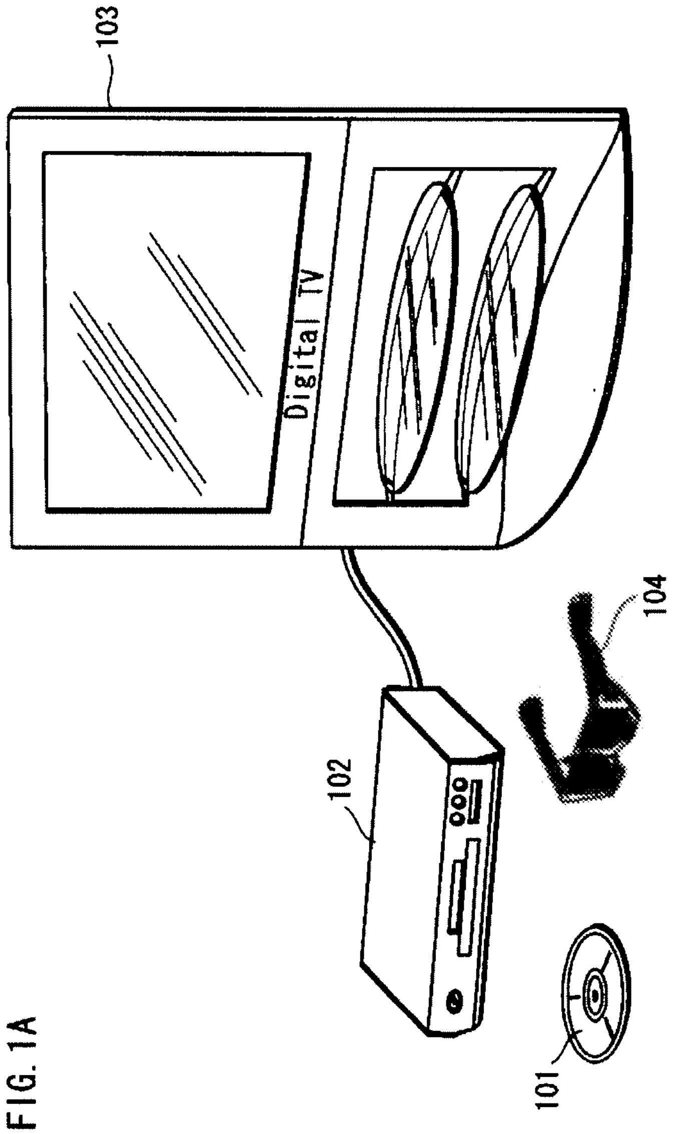


FIG. 1B

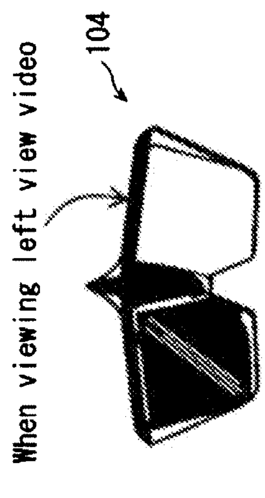


FIG. 1C

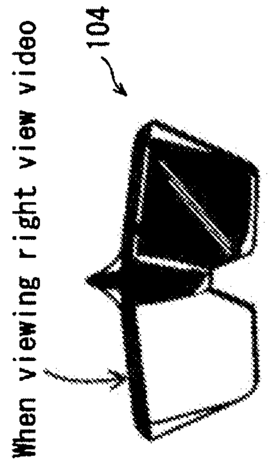

FIG. 2

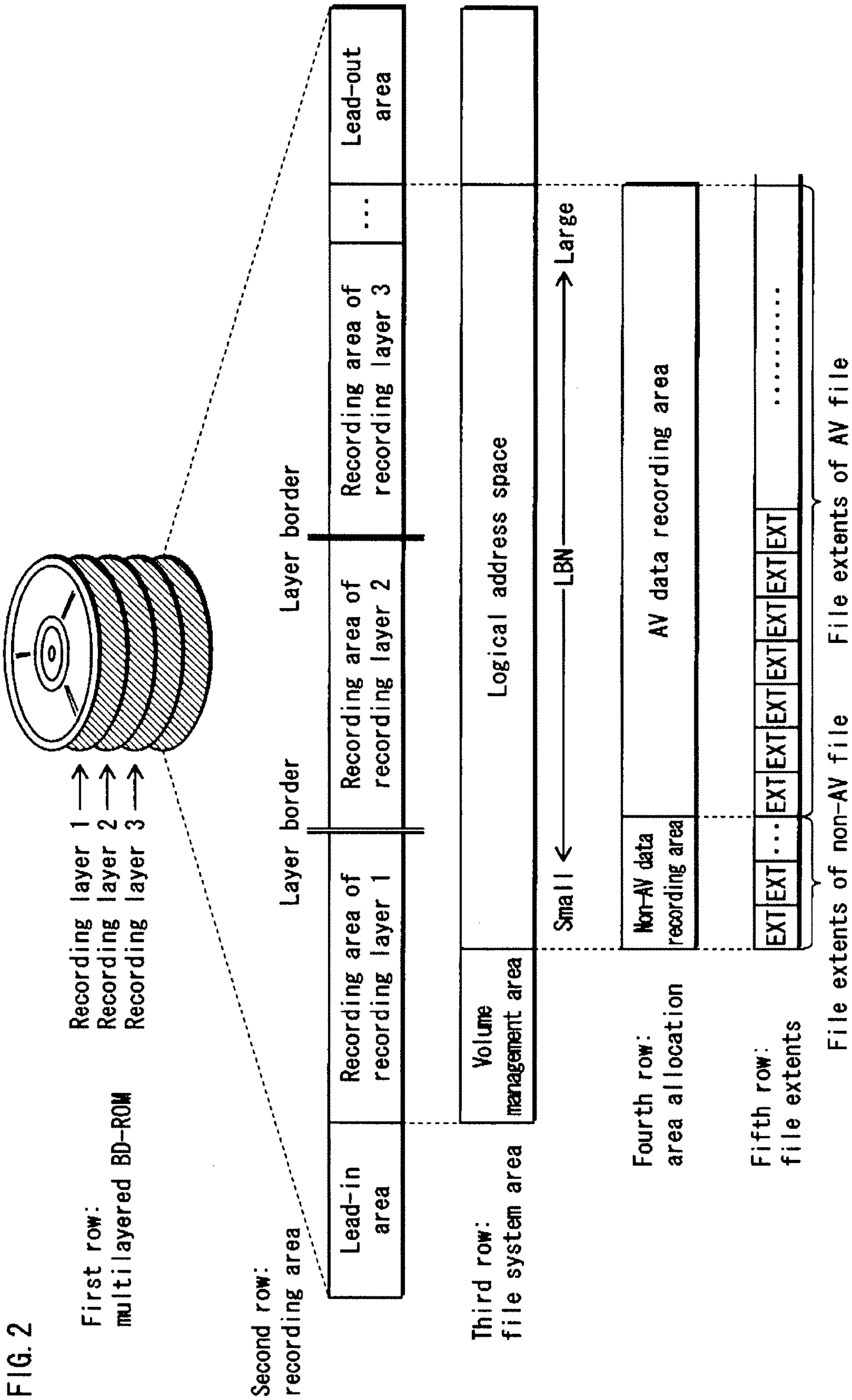

First row: multilayered BD-ROM
Recording layer 1
Recording layer 2
Recording layer 3
Second row: recording area
Lead-in area
Recording area of recording layer 1
Layer border
Recording area of recording layer 2
Layer border
Recording area of recording layer 3
...
Lead-out area
Third row: file system area
Volume management area
Logical address space
Small
LBN
Large
Fourth row: area allocation
Non-AV data recording area
AV data recording area
Fifth row: file extents
EXT EXT ... EXT EXT EXT EXT EXT EXT EXT EXT ..........
File extents of non-AV file
File extents of AV file

FIG. 3

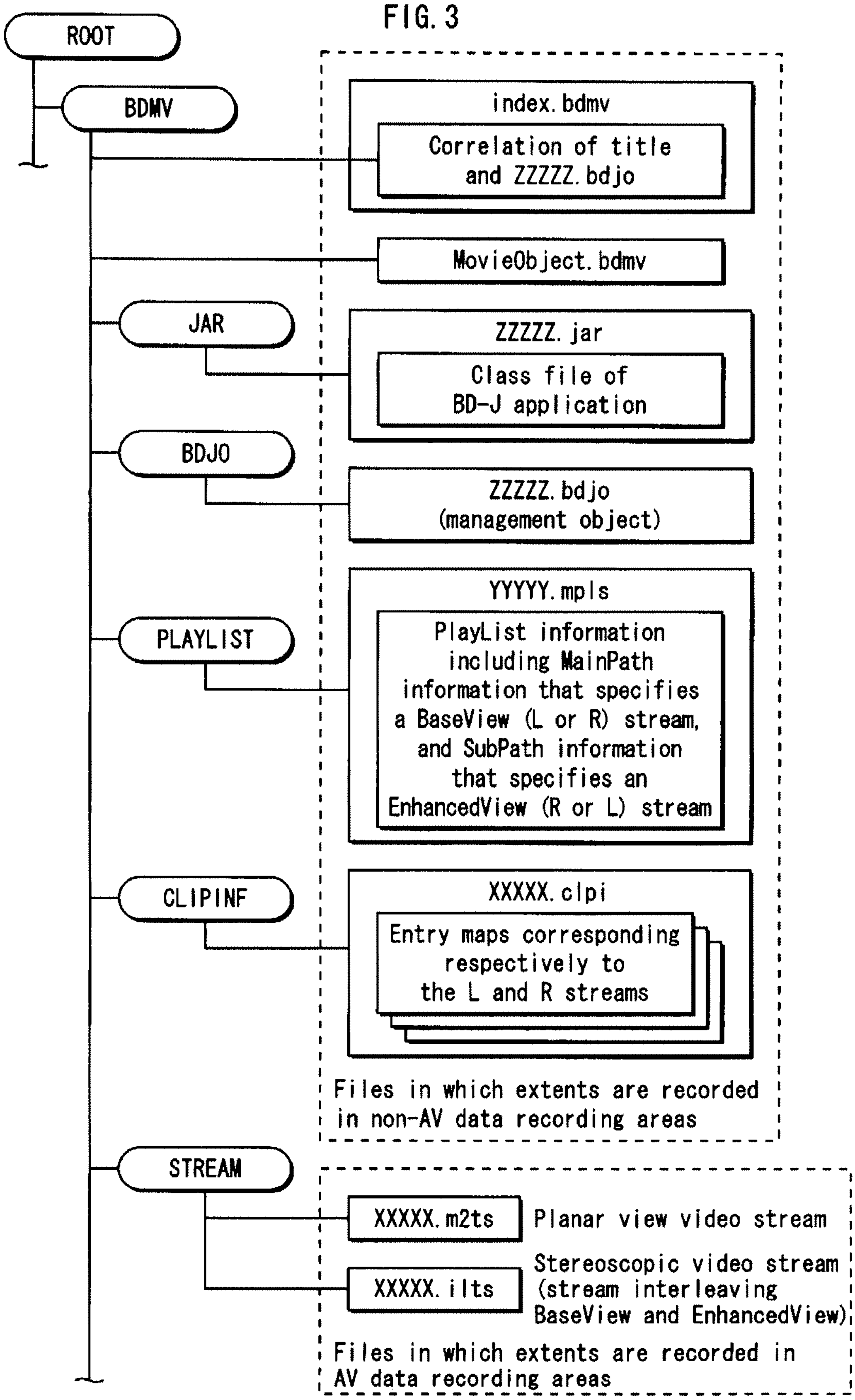
ROOT
BDMV
index.bdmv
Correlation of title and ZZZZZ.bdjo
MovieObject.bdmv
JAR
ZZZZZ.jar
Class file of BD-J application
BDJO
ZZZZZ.bdjo (management object)
PLAYLIST
YYYYY.mpls
PlayList information including MainPath information that specifies a BaseView (L or R) stream, and SubPath information that specifies an EnhancedView (R or L) stream
CLIPINF
XXXXX.clpi
Entry maps corresponding respectively to the L and R streams
Files in which extents are recorded in non-AV data recording areas
STREAM
XXXXX.m2ts
Planar view video stream
XXXXX.ilts
Stereoscopic video stream (stream interleaving BaseView and EnhancedView)
Files in which extents are recorded in AV data recording areas

FIG. 4

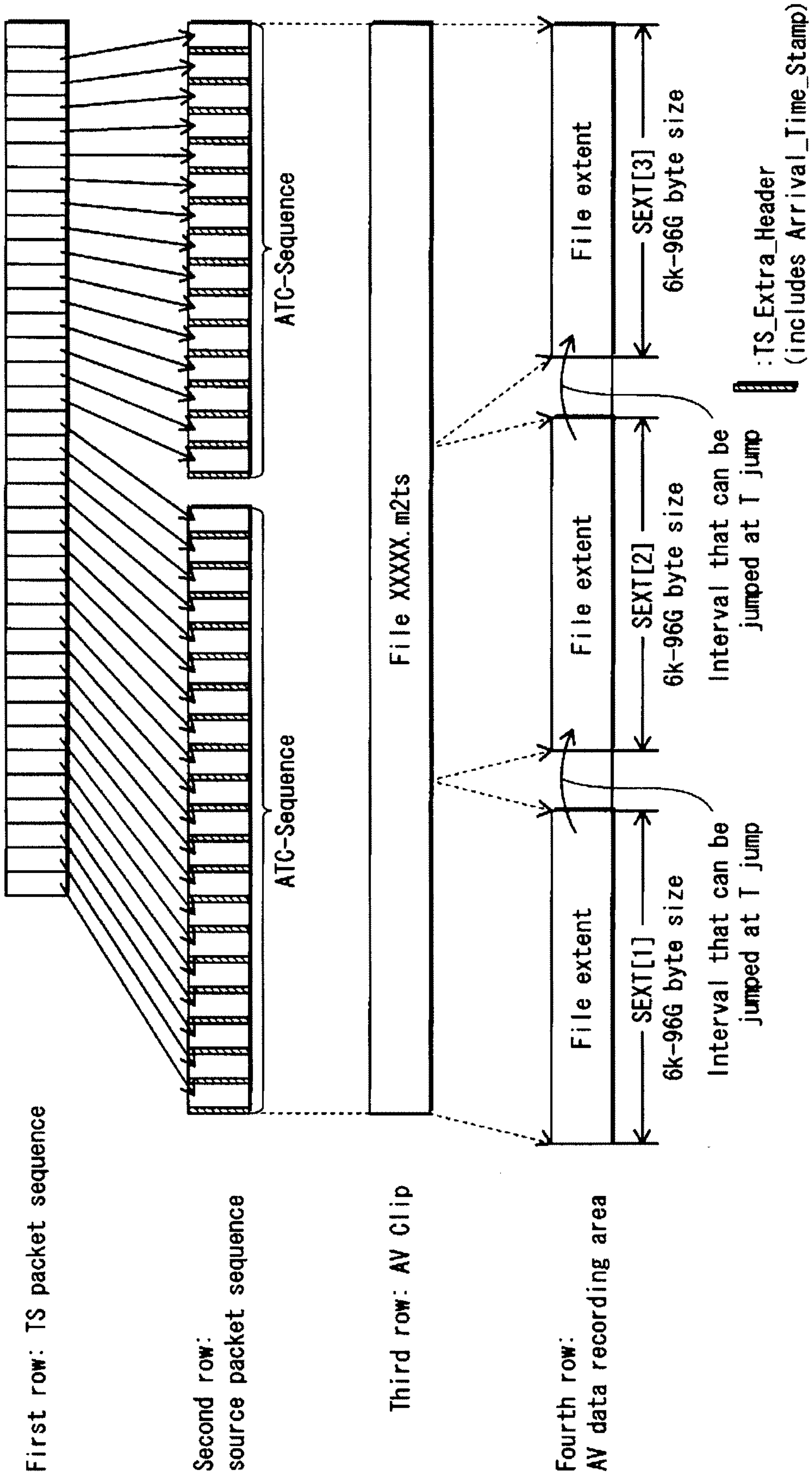
First row: TS packet sequence
Second row:
source packet sequence
ATC-Sequence
ATC-Sequence
Third row: AV Clip
File XXXXX.m2ts
Fourth row:
AV data recording area
File extent
File extent
File extent
SEXT[1]
SEXT[2]
SEXT[3]
6k-96G byte size
6k-96G byte size
6k-96G byte size
Interval that can be
jumped at T jump
Interval that can be
jumped at T jump
:TS_Extra_Header
(includes Arrival_Time_Stamp)

FIG. 5

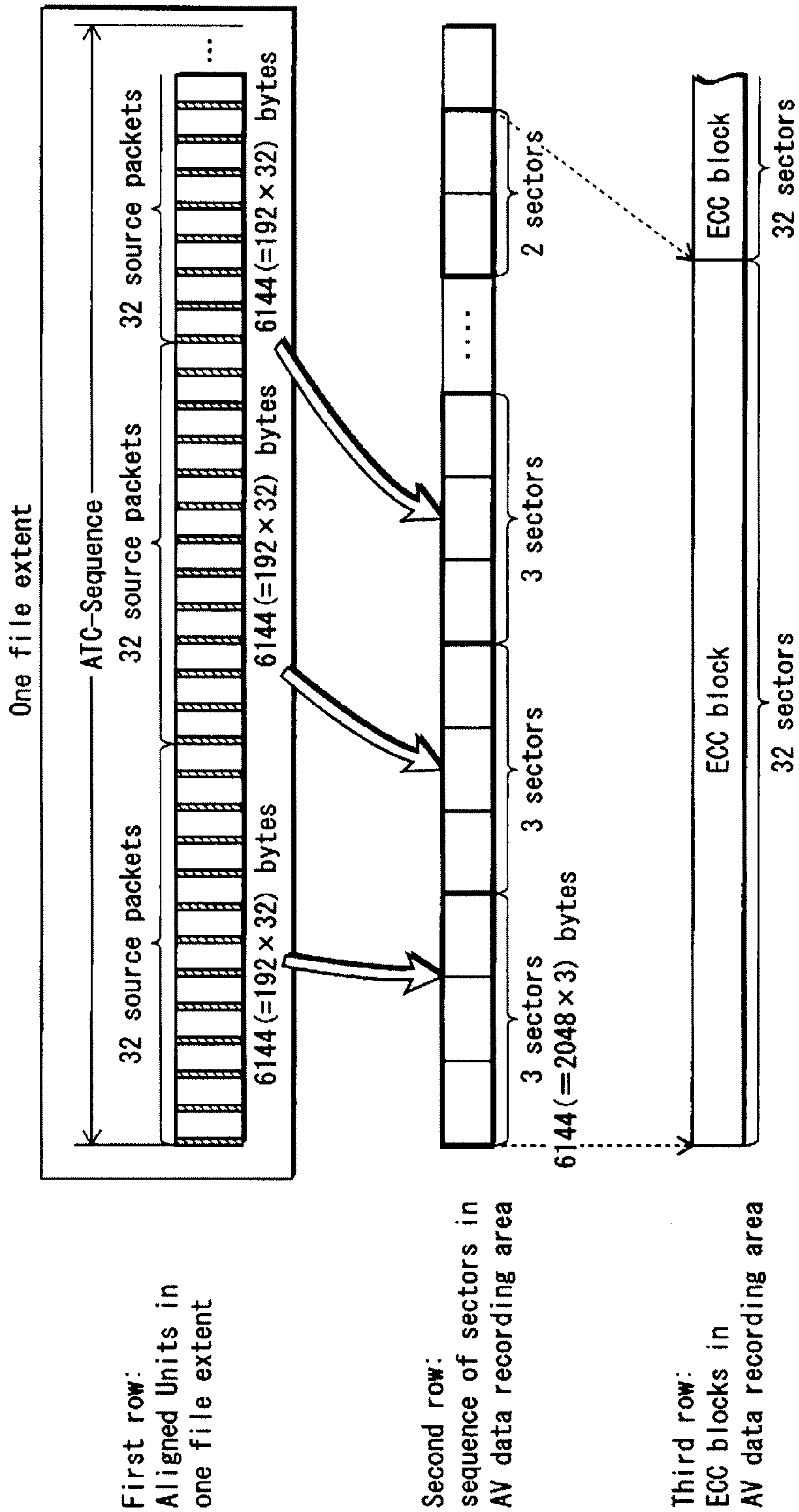

One file extent
ATC-Sequence
32 source packets
32 source packets
32 source packets
6144(=192×32) bytes
6144(=192×32) bytes
6144(=192×32) bytes
3 sectors
3 sectors
3 sectors
2 sectors
6144(=2048×3) bytes
ECC block
ECC block
32 sectors
32 sectors
First row: Aligned Units in one file extent
Second row: sequence of sectors in AV data recording area
Third row: ECC blocks in AV data recording area

FIG. 6

| PID range | Types of PES stream |
|---|---|
| 0x0100 | Program map |
| 0x1001 | PCR |
| 0x1011 | Video BaseView (L or R) |
| 0x1012 | Video EnhancedView (R or L) |
| 0x1100-111F | Audio |

FIG. 7

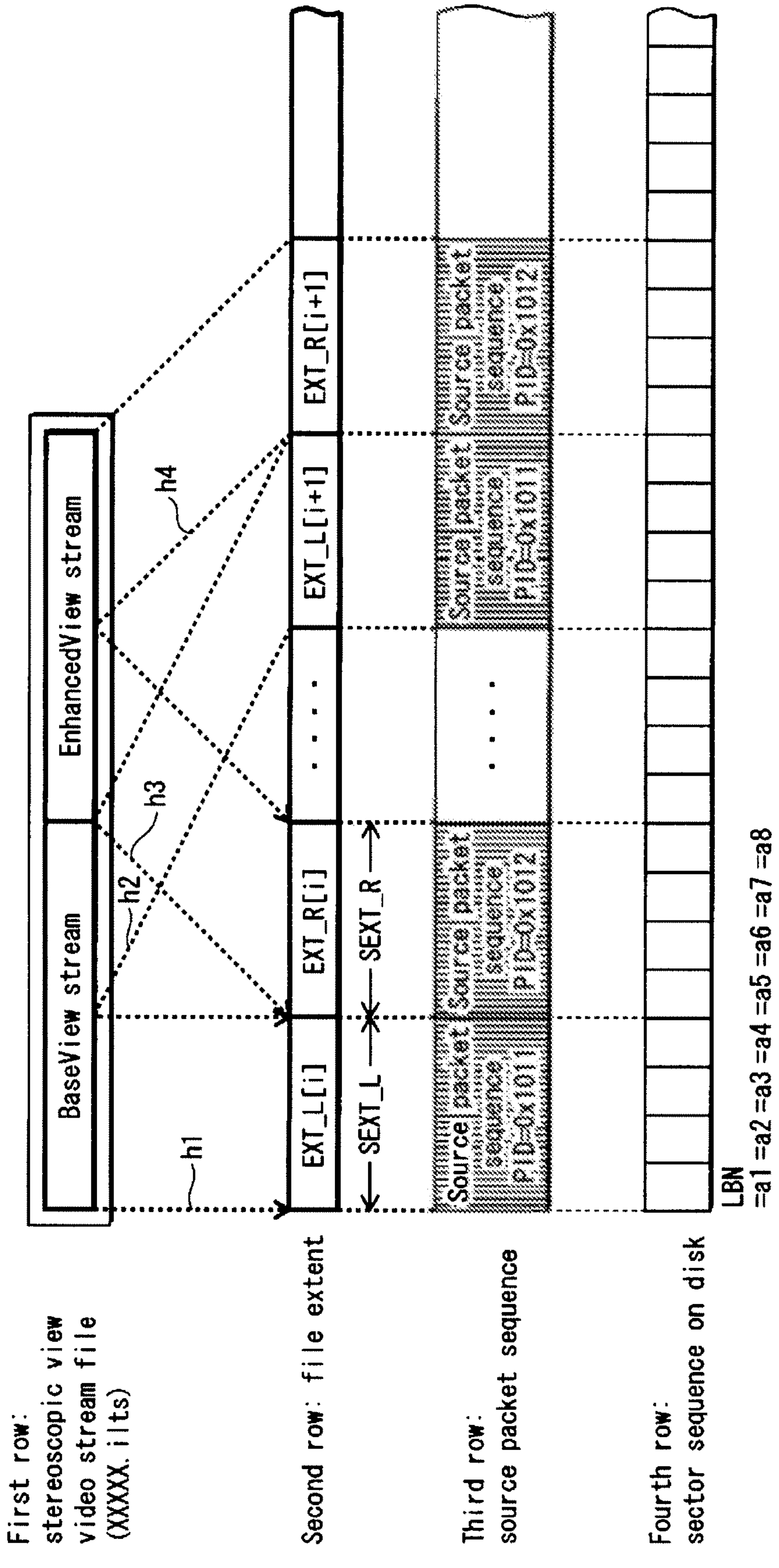
First row:
stereoscopic view
video stream file
(XXXXX.ilts)
BaseView stream
EnhancedView stream
h1
h2
h3
h4
Second row: file extent
EXT_L[i]
EXT_R[i]
EXT_L[i+1]
EXT_R[i+1]
SEXT_L
SEXT_R
Third row:
source packet sequence
Source packet sequence PID=0x1011
Source packet sequence PID=0x1012
Source packet sequence PID=0x1011
Source packet sequence PID=0x1012
Fourth row:
sector sequence on disk
LBN
=a1 =a2 =a3 =a4 =a5 =a6 =a7 =a8

FIG. 8

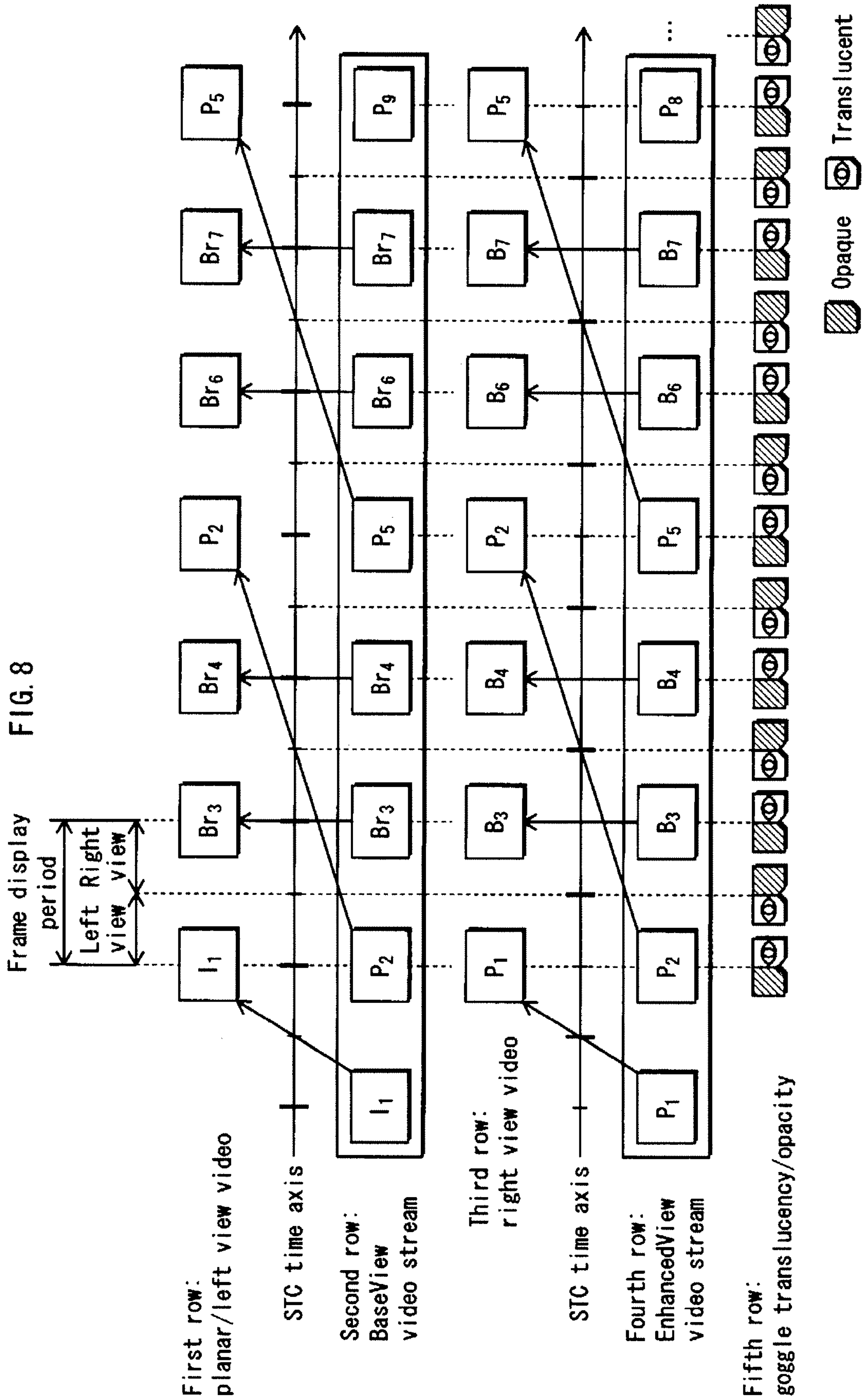
Frame display period
Left view
Right view
First row: planar/left view video
STC time axis
Second row: BaseView video stream
Third row: right view video
STC time axis
Fourth row: EnhancedView video stream
Fifth row: goggle translucency/opacity
Opaque
Translucent
I1
P2
Br3
Br4
P2
Br6
Br7
P5
I1
P2
Br3
Br4
P5
Br6
Br7
P9
P1
P2
B3
B4
P2
B6
B7
P5
P1
P2
B3
B4
P5
B6
B7
P8

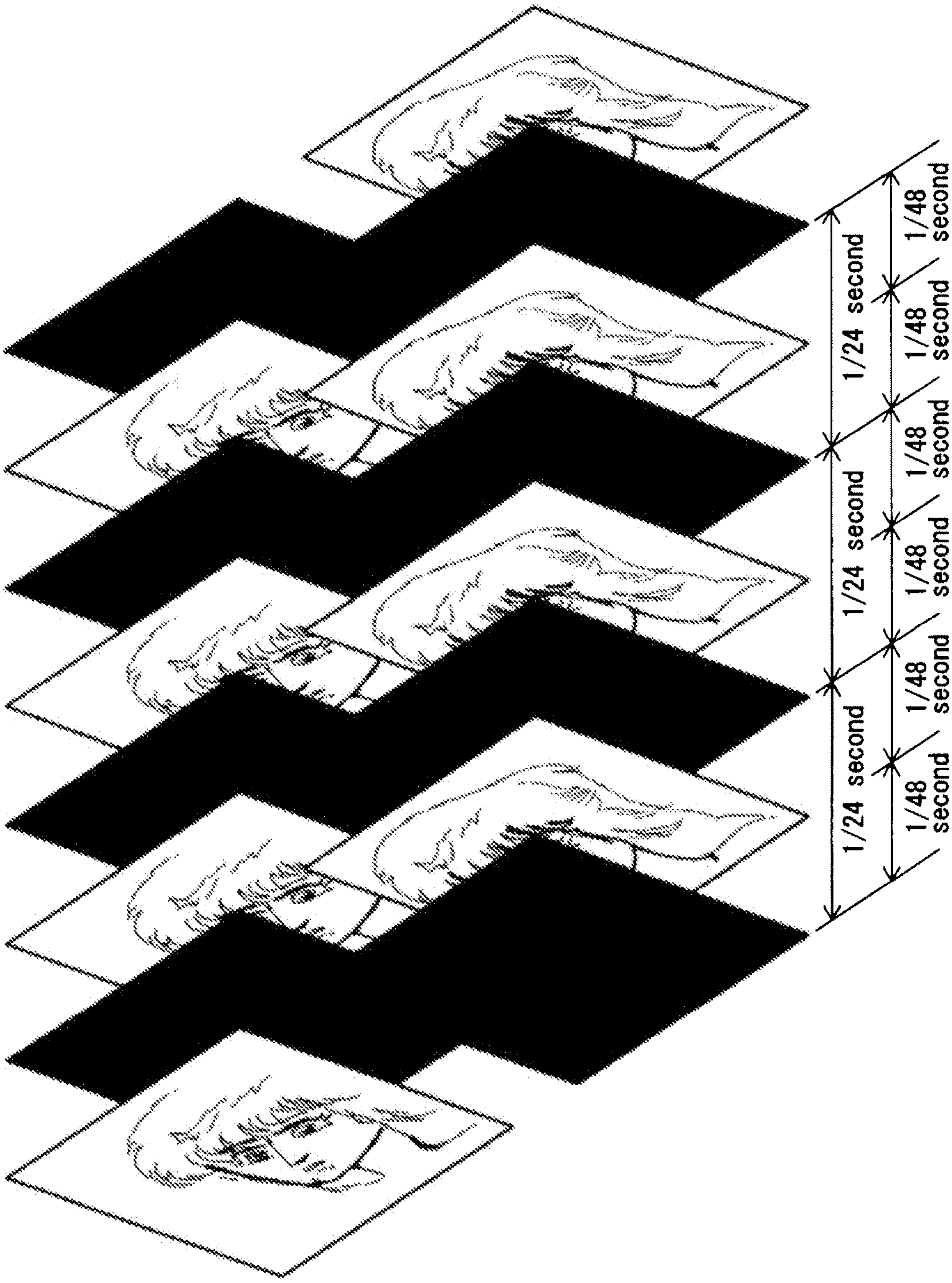
1/24 second
1/24 second
1/24 second
1/48 second
1/48 second
1/48 second
1/48 second
1/48 second
1/48 second

FIG. 9

FIG. 10

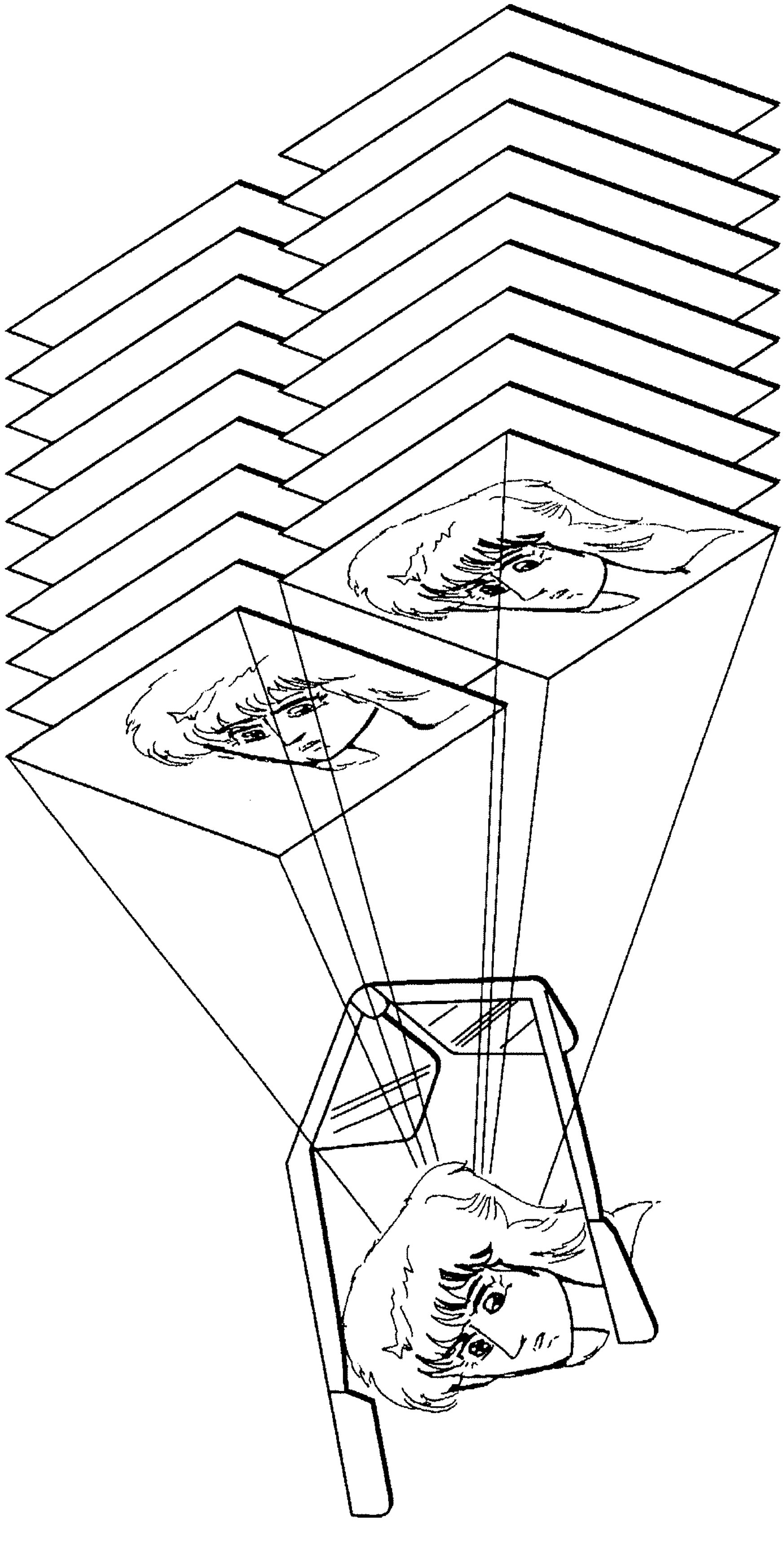

FIG. 11

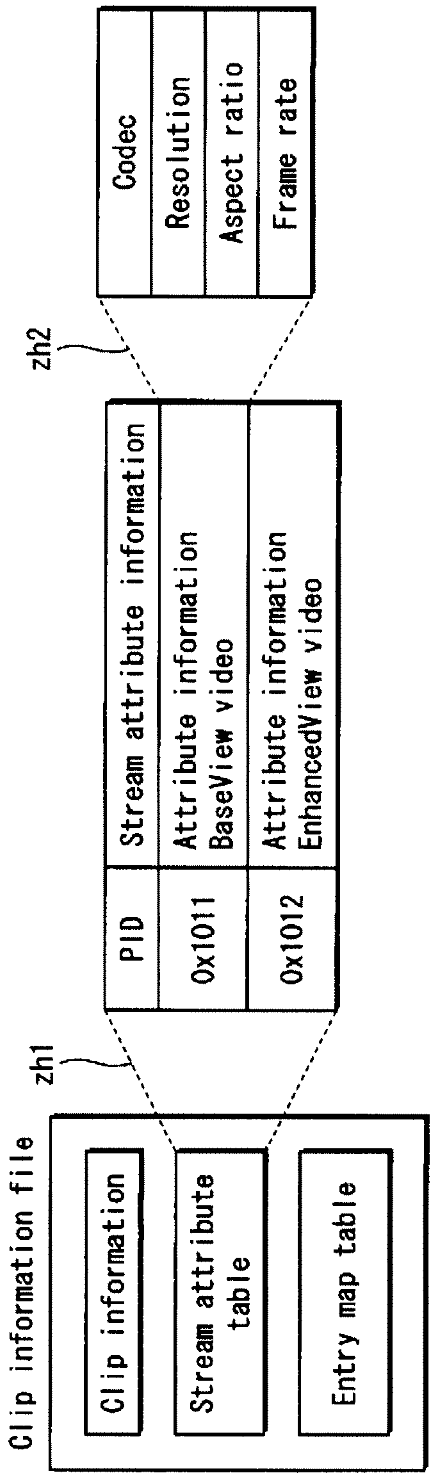
Clip information file
Clip information
Stream attribute table
Entry map table
zh1
PID
Stream attribute information
0x1011
Attribute information BaseView video
0x1012
Attribute information EnhancedView video
zh2
Codec
Resolution
Aspect ratio
Frame rate

FIG. 12A

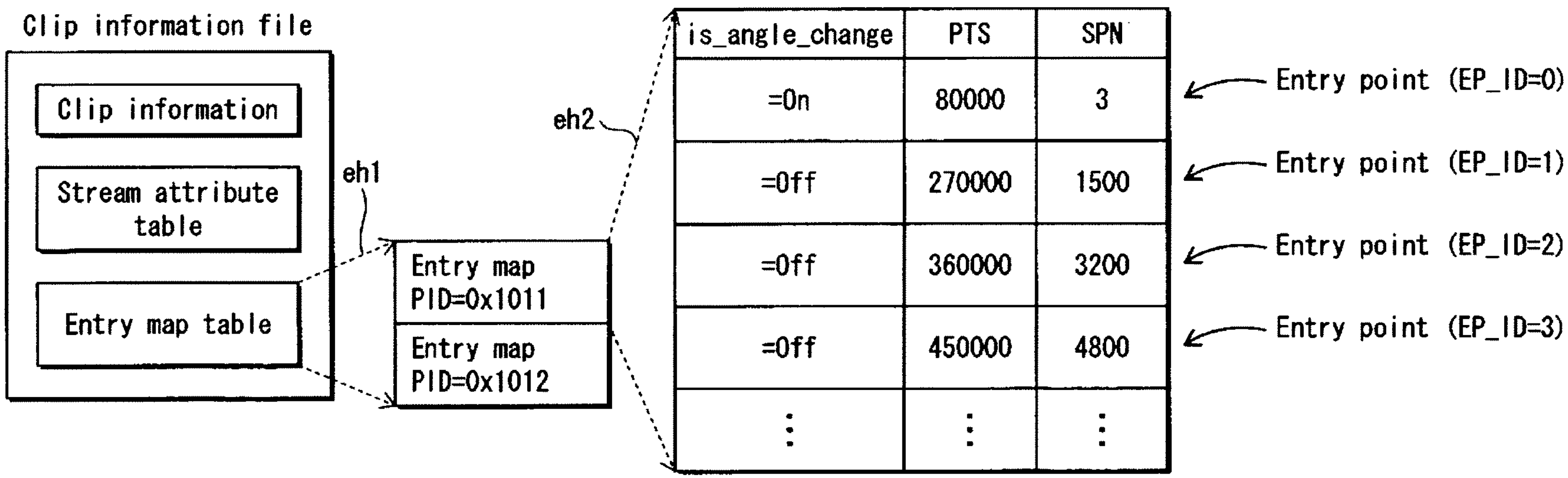


FIG. 12B

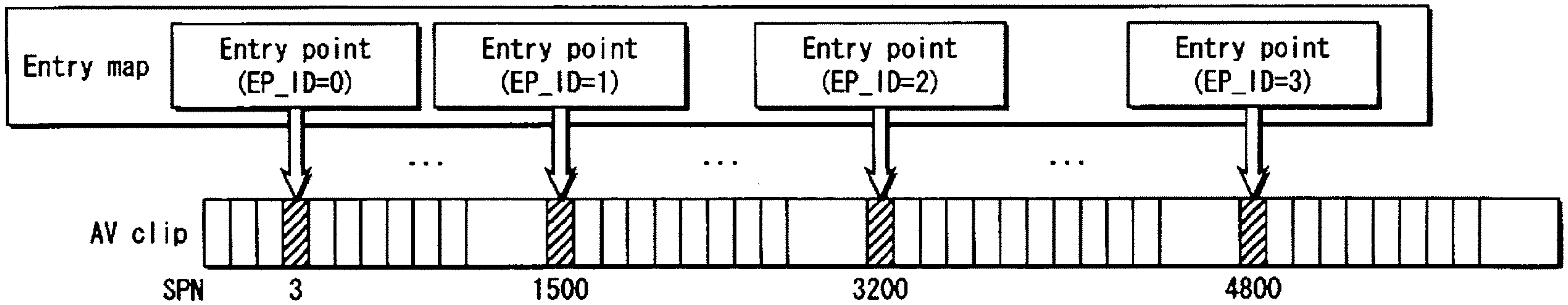

FIG. 13

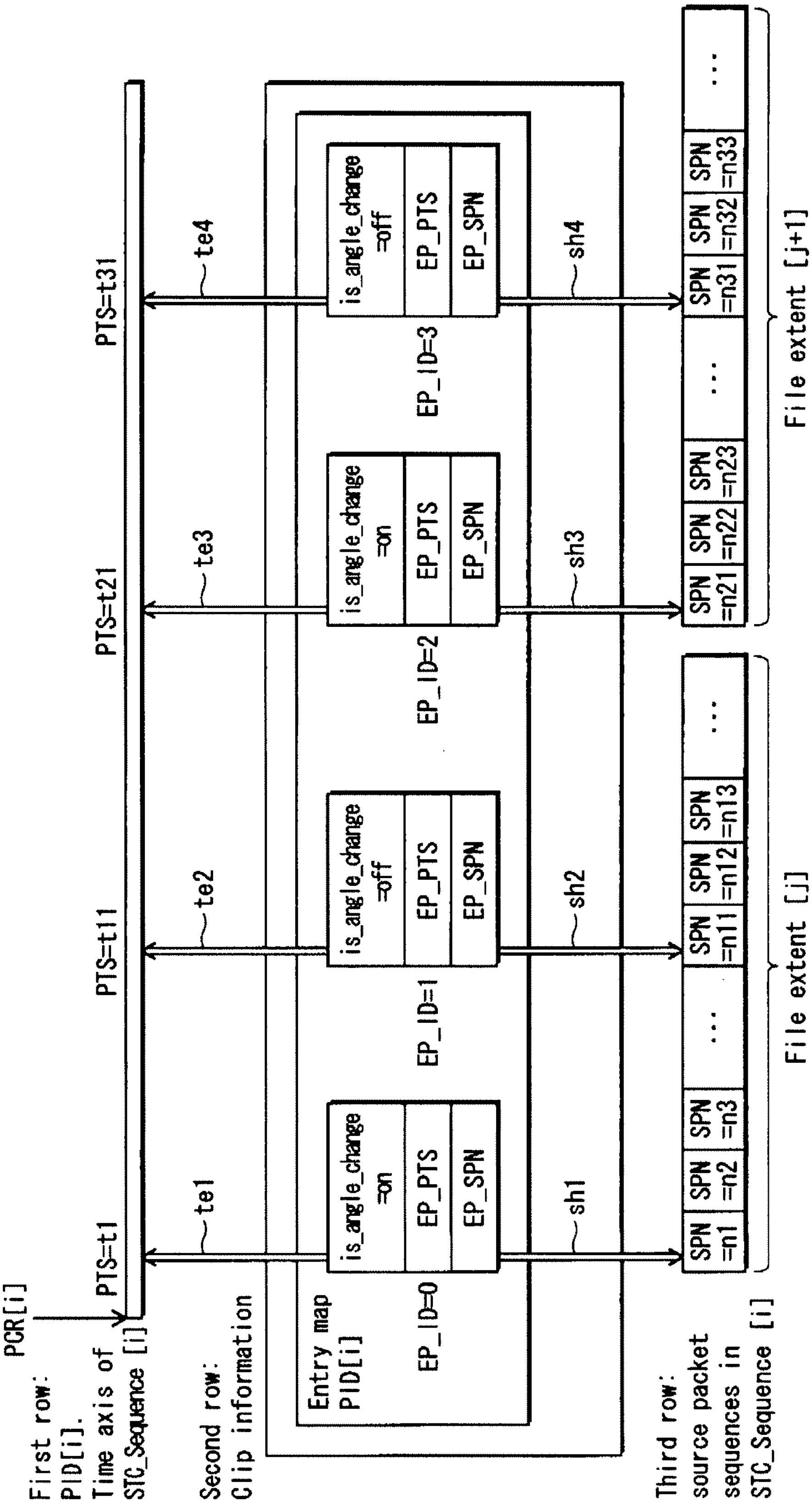
First row: PID[i]. Time axis of STC_Sequence [i]
PCR[i]
PTS=t1
PTS=t11
PTS=t21
PTS=t31
te1
te2
te3
te4
Second row: Clip information
Entry map PID[i]
EP_ID=0
EP_ID=1
EP_ID=2
EP_ID=3
is_angle_change =on
is_angle_change =off
is_angle_change =on
is_angle_change =off
EP_PTS
EP_SPN
sh1
sh2
sh3
sh4
Third row: source packet sequences in STC_Sequence [i]
SPN =n1
SPN =n2
SPN =n3
...
SPN =n11
SPN =n12
SPN =n13
...
SPN =n21
SPN =n22
SPN =n23
...
SPN =n31
SPN =n32
SPN =n33
...
File extent [j]
File extent [j+1]

FIG. 14

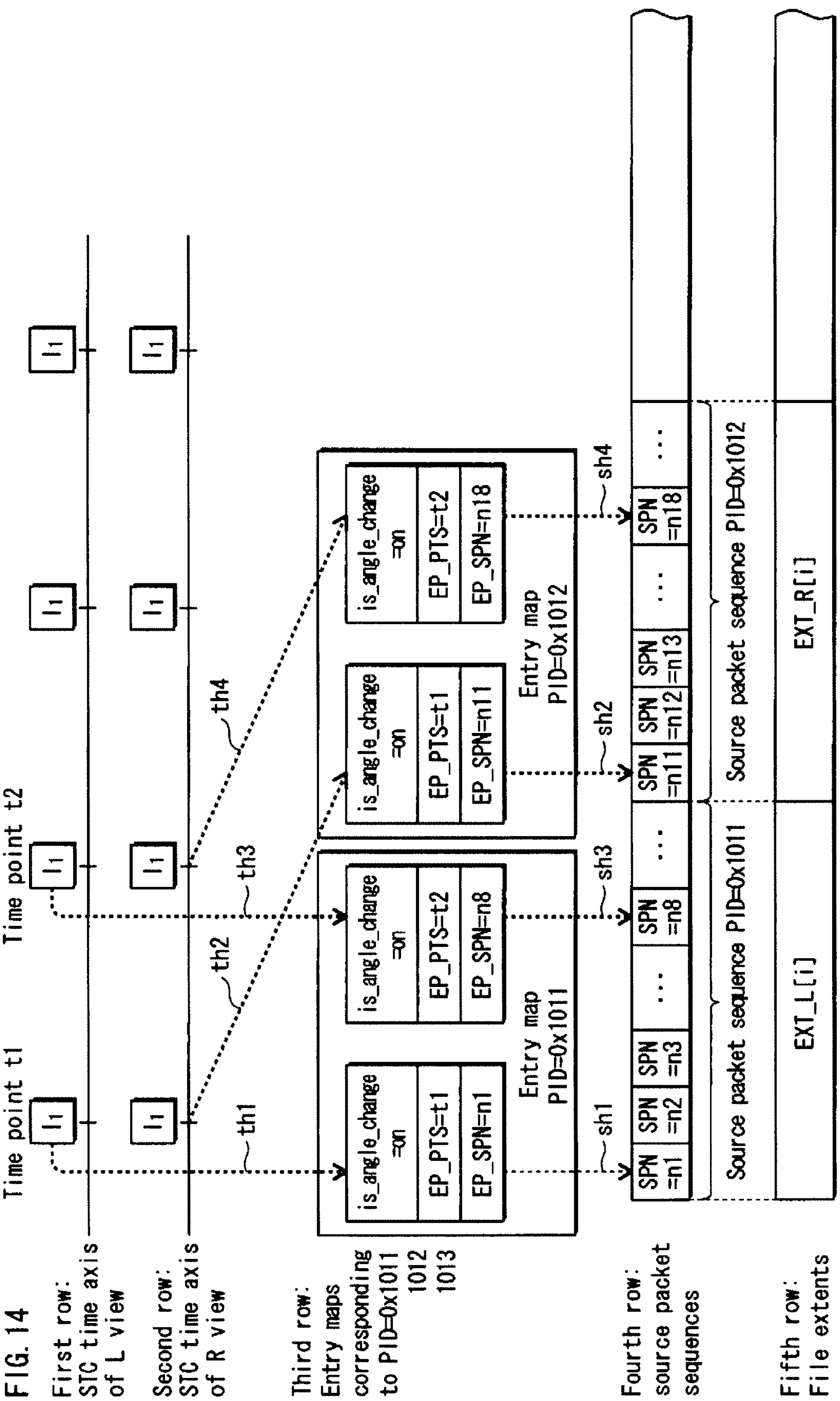
First row: STC time axis of L view
Second row: STC time axis of R view
Third row: Entry maps corresponding to PID=0x1011 1012 1013
Fourth row: source packet sequences
Fifth row: File extents
Time point t1
Time point t2
I1
th1
th2
th3
th4
is_angle_change =on
EP_PTS=t1
EP_SPN=n1
EP_PTS=t2
EP_SPN=n8
EP_SPN=n11
EP_SPN=n18
Entry map PID=0x1011
Entry map PID=0x1012
sh1
sh2
sh3
sh4
SPN =n1
SPN =n2
SPN =n3
SPN =n8
SPN =n11
SPN =n12
SPN =n13
SPN =n18
...
Source packet sequence PID=0x1011
Source packet sequence PID=0x1012
EXT_L[i]
EXT_R[i]

FIG. 15

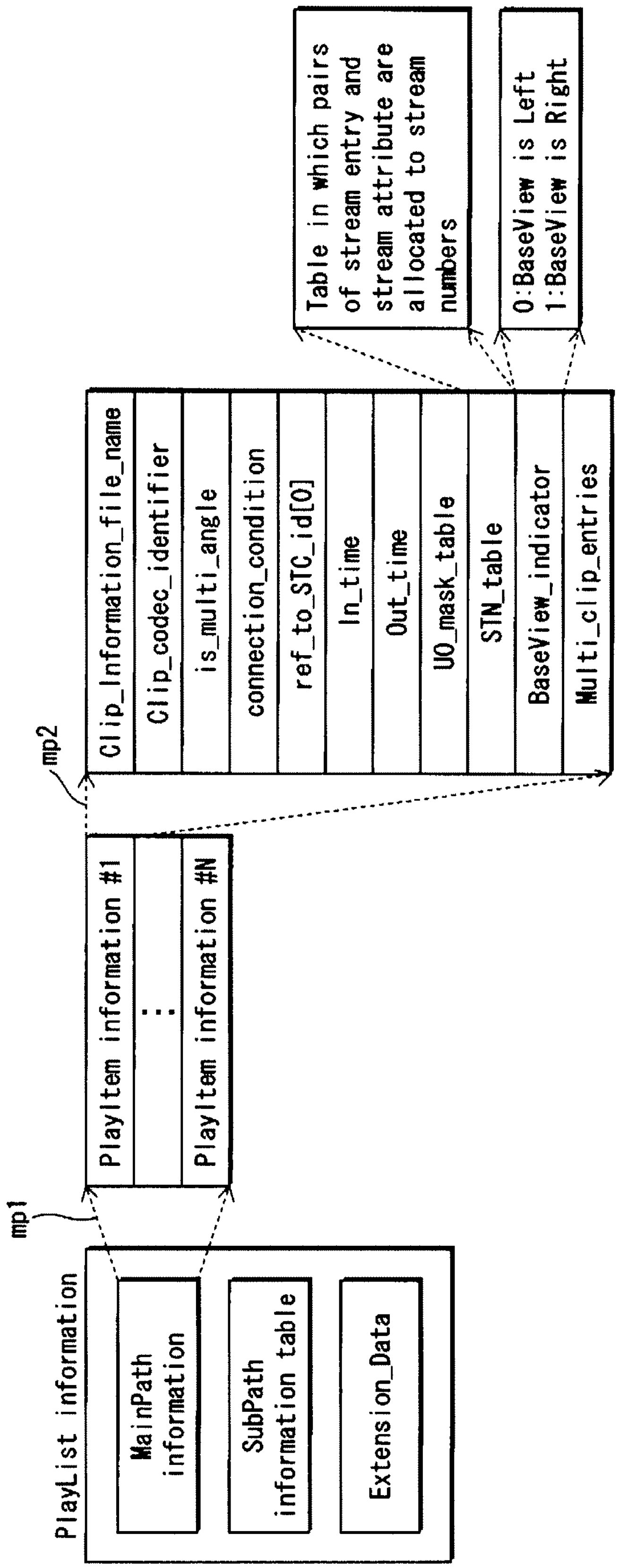
PlayList information
MainPath information
SubPath information table
Extension_Data
mp1
PlayItem information #1
:
PlayItem information #N
mp2
Clip_Information_file_name
Clip_codec_identifier
is_multi_angle
connection_condition
ref_to_STC_id[0]
In_time
Out_time
UO_mask_table
STN_table
BaseView_indicator
Multi_clip_entries
Table in which pairs of stream entry and stream attribute are allocated to stream numbers
0:BaseView is Left
1:BaseView is Right

FIG. 16

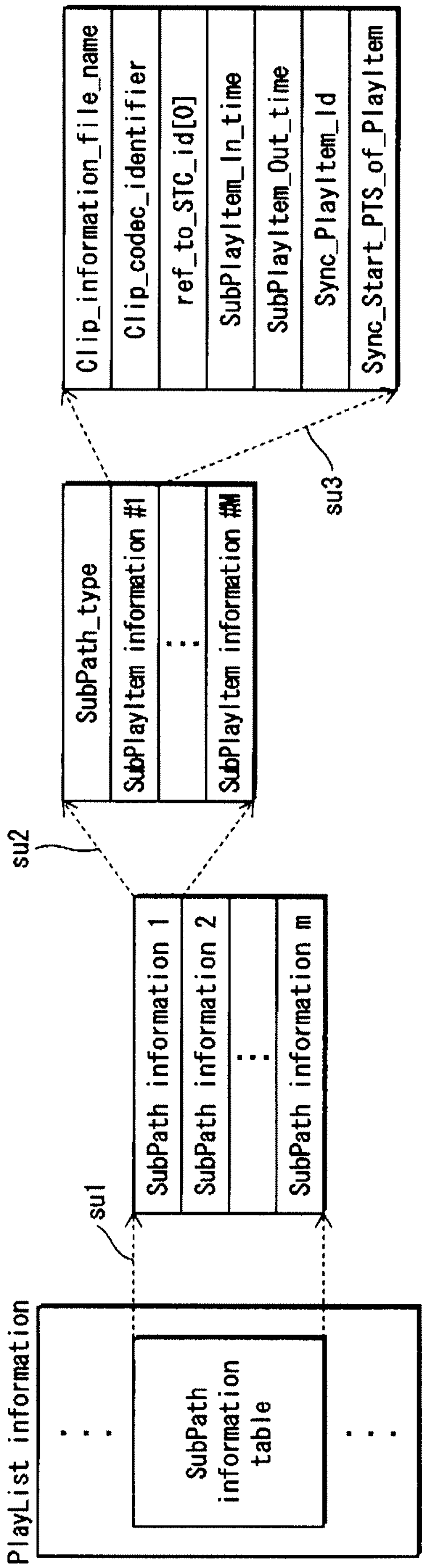
PlayList information
SubPath information table
su1
SubPath information 1
SubPath information 2
SubPath information m
su2
SubPath_type
SubPlayItem information #1
SubPlayItem information #M
su3
Clip_information_file_name
Clip_codec_identifier
ref_to_STC_id[0]
SubPlayItem_In_time
SubPlayItem_Out_time
Sync_PlayItem_Id
Sync_Start_PTS_of_PlayItem

FIG. 17

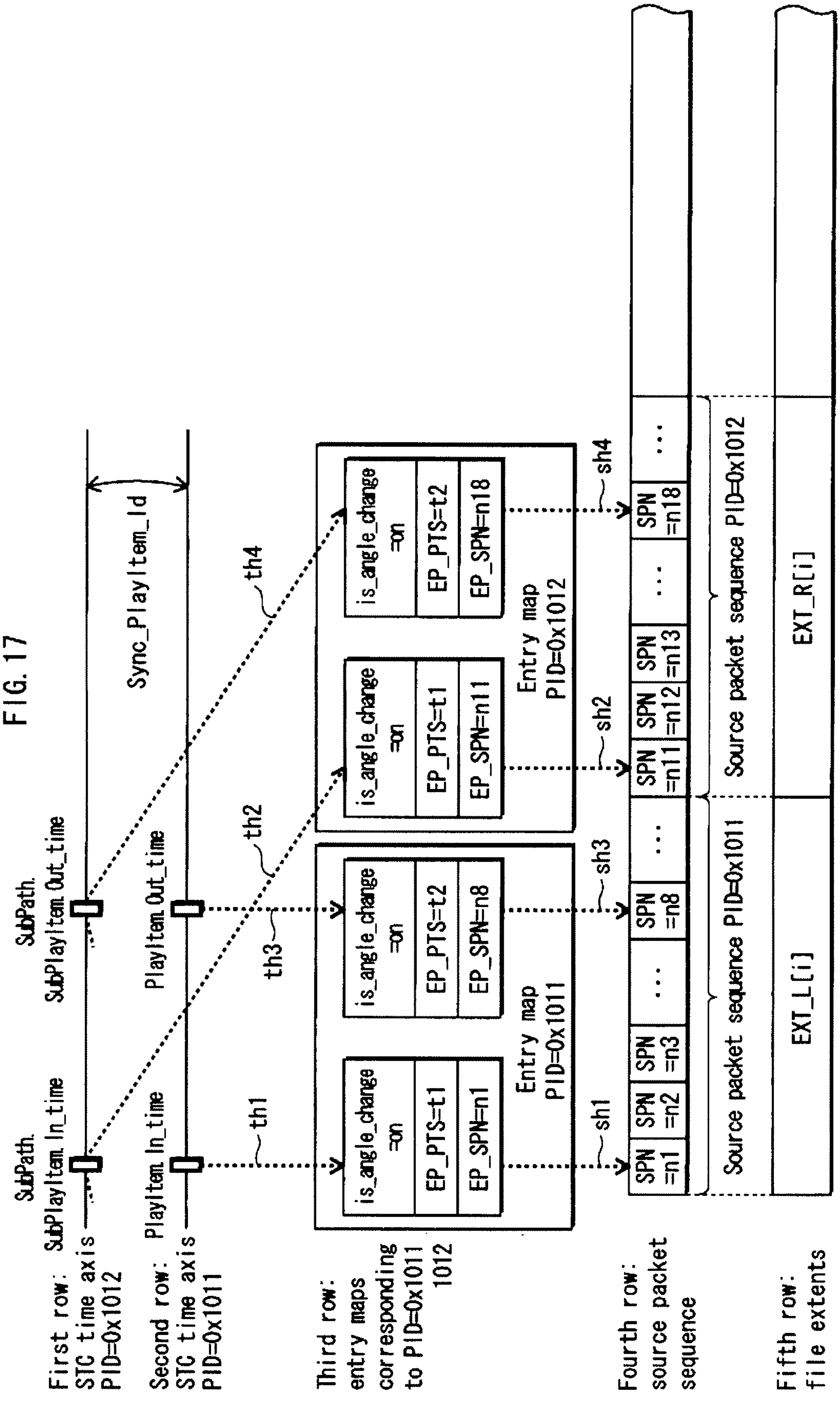
First row: STC time axis PID=0x1012
Second row: STC time axis PID=0x1011
Third row: entry maps corresponding to PID=0x1011 1012
Fourth row: source packet sequence
Fifth row: file extents
SubPath. SubPlayItem In_time
SubPath. SubPlayItem Out_time
PlayItem In_time
PlayItem Out_time
Sync_PlayItem_Id
th1
th2
th3
th4
is_angle_change =on
EP_PTS=t1
EP_SPN=n1
EP_PTS=t2
EP_SPN=n8
EP_SPN=n11
EP_SPN=n18
Entry map PID=0x1011
Entry map PID=0x1012
sh1
sh2
sh3
sh4
SPN =n1
SPN =n2
SPN =n3
SPN =n8
SPN =n11
SPN =n12
SPN =n13
SPN =n18
Source packet sequence PID=0x1011
Source packet sequence PID=0x1012
EXT_L[i]
EXT_R[i]

FIG. 18

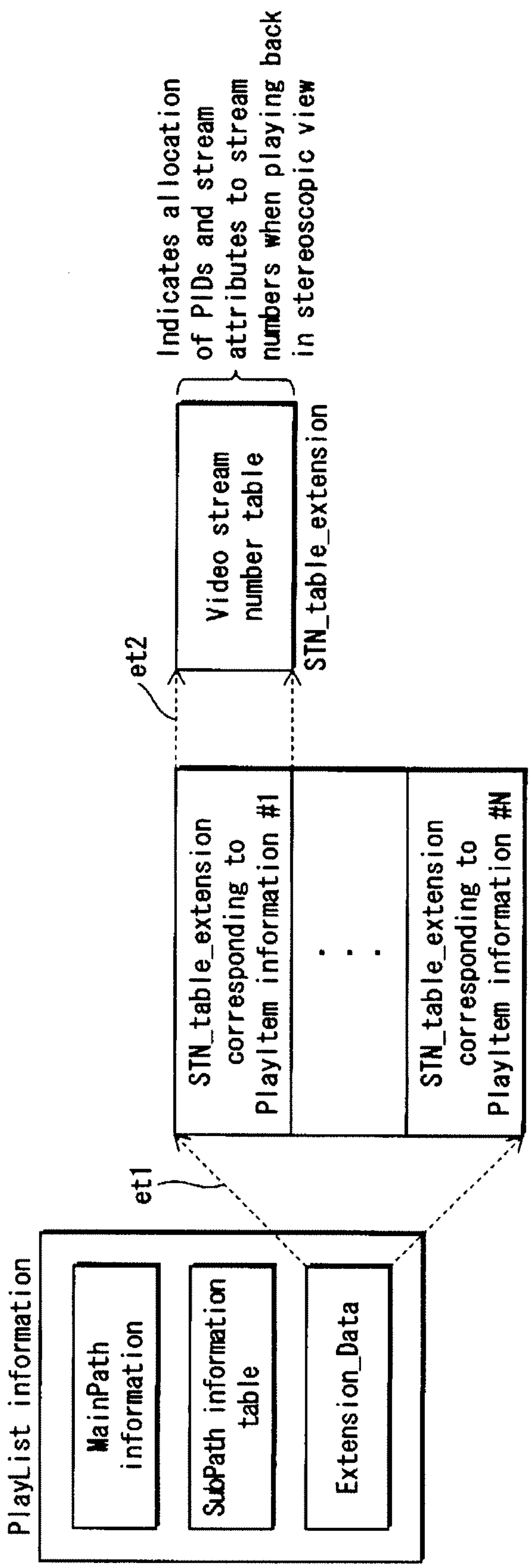
PlayList information
MainPath information
SubPath information table
Extension_Data
et1
STN_table_extension corresponding to PlayItem information #1
. . .
STN_table_extension corresponding to PlayItem information #N
et2
Video stream number table
STN_table_extension
Indicates allocation of PIDs and stream attributes to stream numbers when playing back in stereoscopic view

FIG. 19

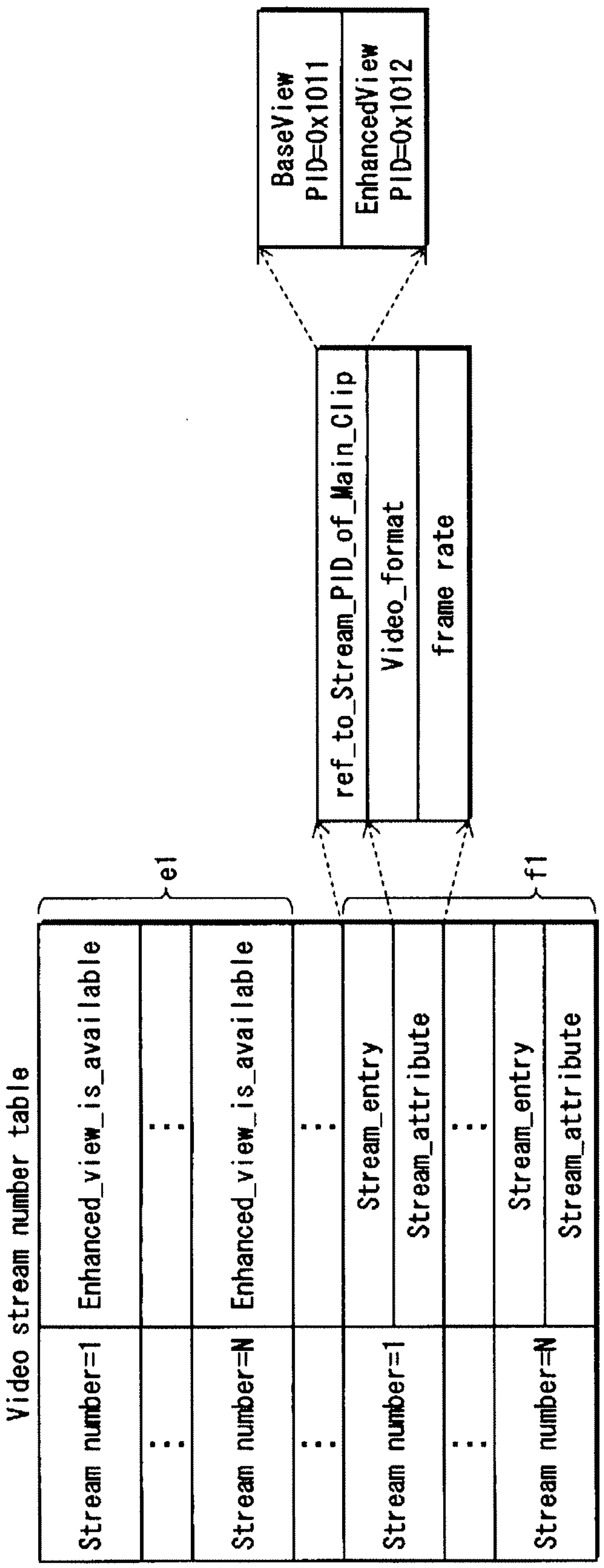
Video stream number table
Stream number=1
Enhanced_view_is_available
...
Stream number=N
Enhanced_view_is_available
e1
Stream number=1
Stream_entry
Stream_attribute
Stream number=N
Stream_entry
Stream_attribute
f1
ref_to_Stream_PID_of_Main_Clip
Video_format
frame rate
BaseView
PID=0x1011
EnhancedView
PID=0x1012

FIG. 20

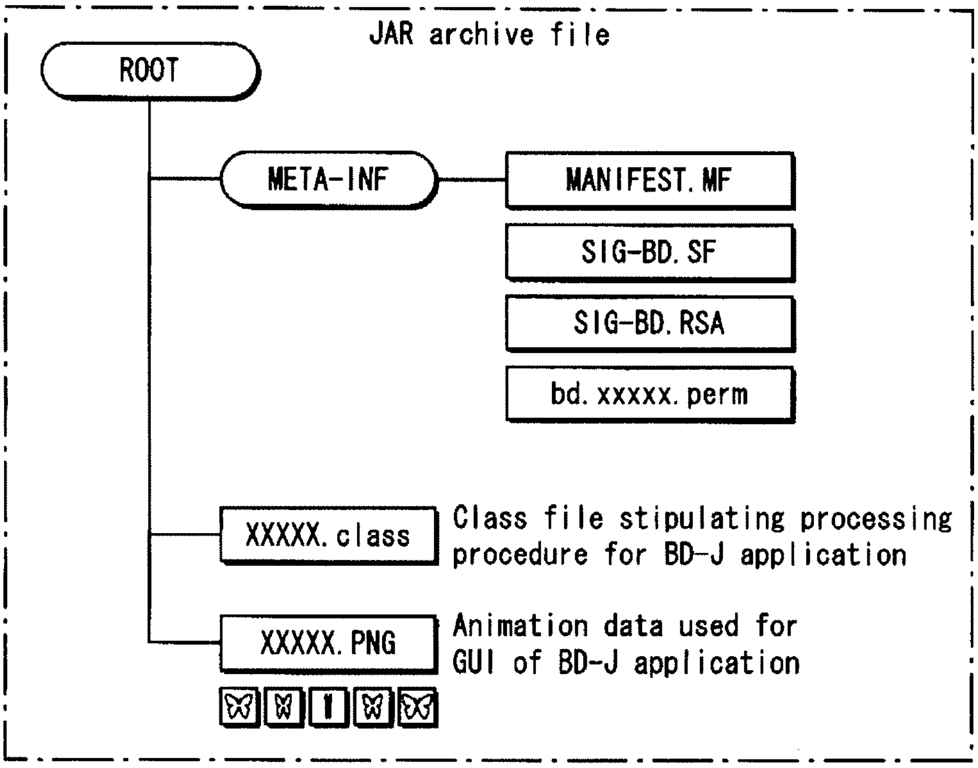
JAR archive file
ROOT
META-INF
MANIFEST. MF
SIG-BD. SF
SIG-BD. RSA
bd. xxxxx. perm
XXXXX. class
Class file stipulating processing procedure for BD-J application
XXXXX. PNG
Animation data used for GUI of BD-J application

FIG. 21

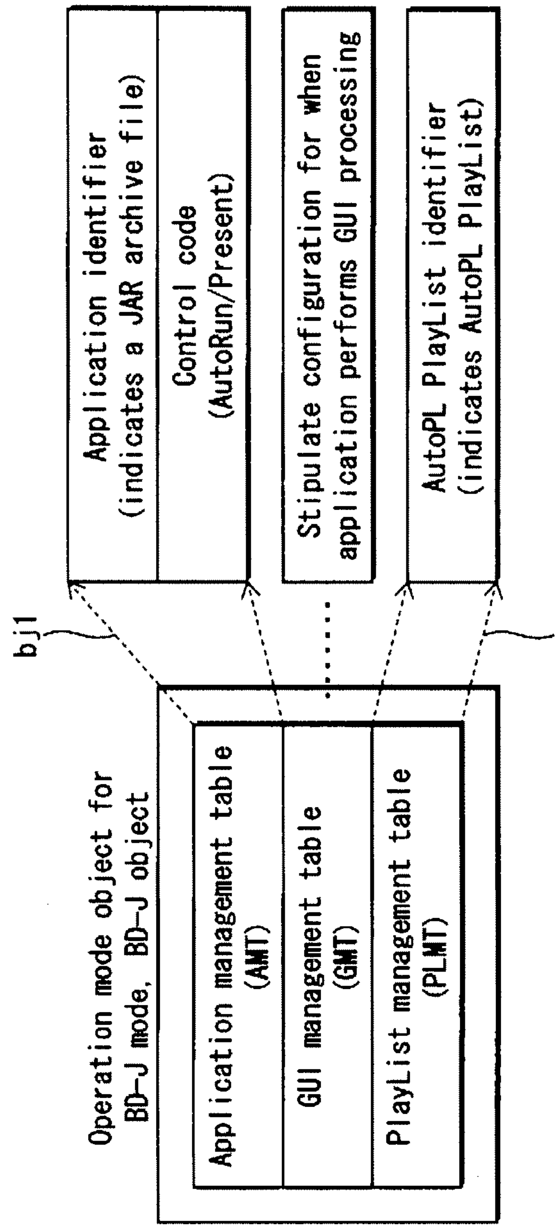
Operation mode object for BD-J mode, BD-J object
Application management table (AMT)
GUI management table (GMT)
PlayList management table (PLMT)
bj1
bj2
Application identifier (indicates a JAR archive file)
Control code (AutoRun/Present)
Stipulate configuration for when application performs GUI processing
AutoPL PlayList identifier (indicates AutoPL PlayList)

FIG. 22A

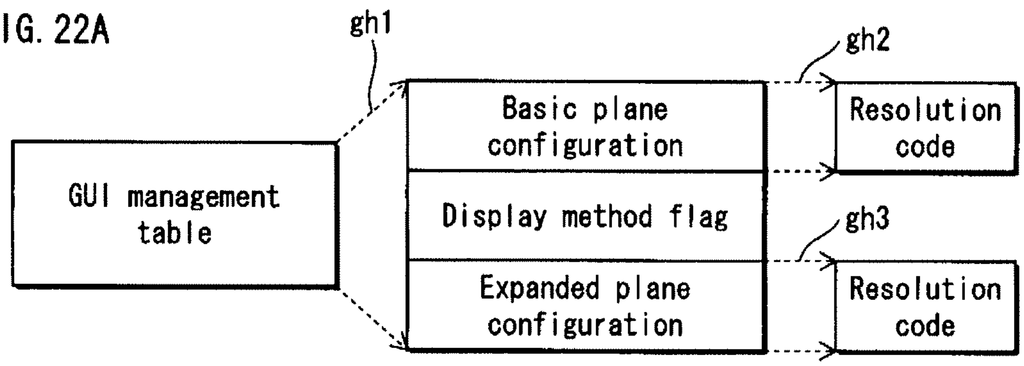


FIG. 22B

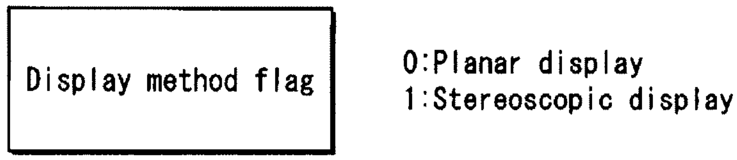


FIG. 22C

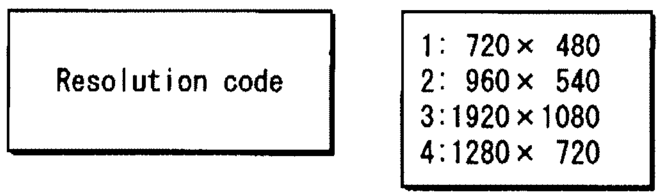

FIG. 23

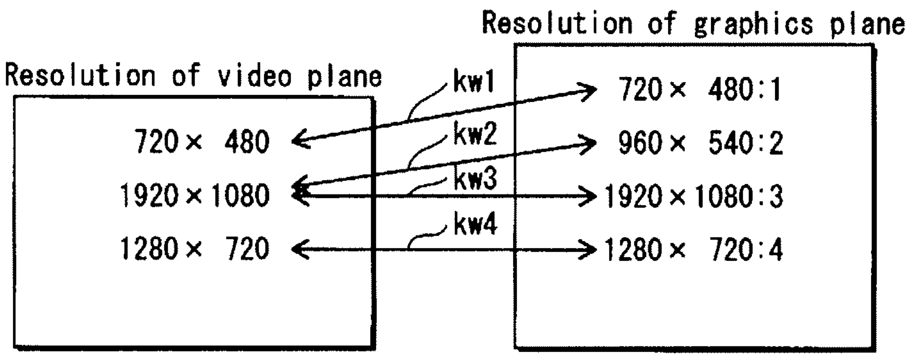
Resolution of graphics plane
Resolution of video plane
kw1
kw2
kw3
kw4
720× 480
1920×1080
1280× 720
720× 480:1
960× 540:2
1920×1080:3
1280× 720:4

FIG. 24A

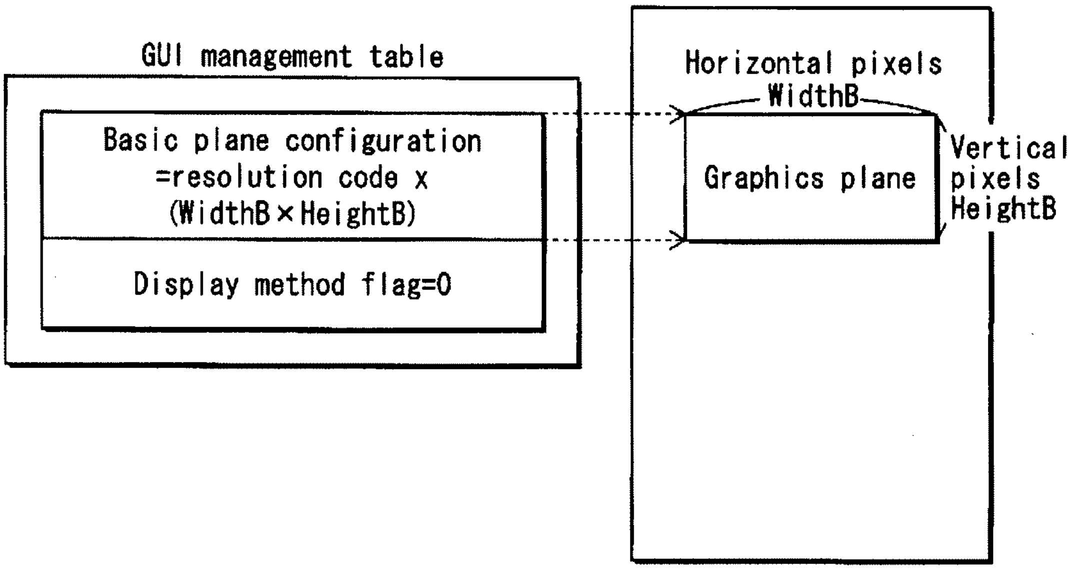


FIG. 24B

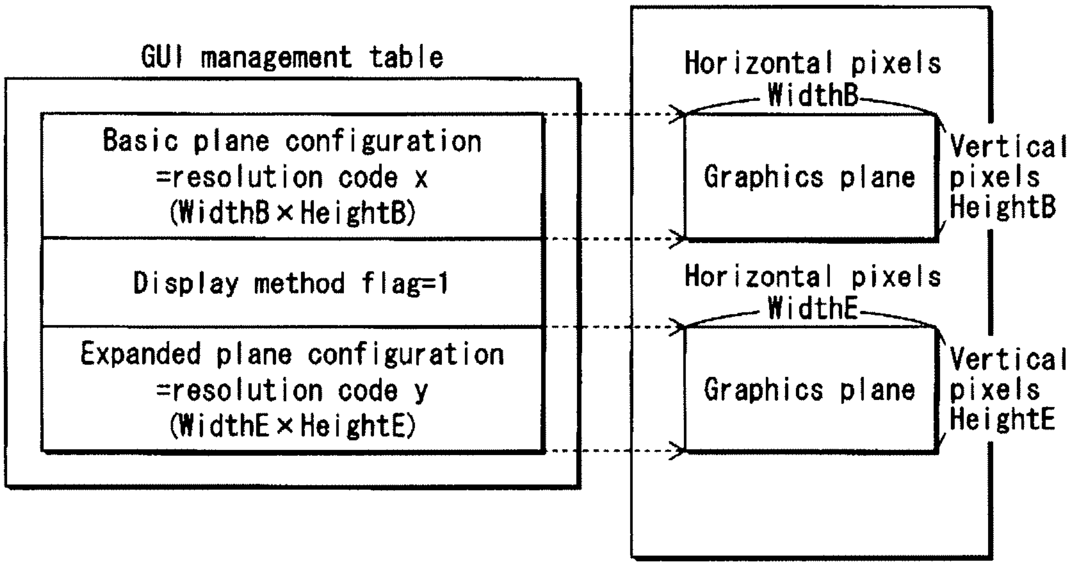

FIG. 25A

Graphics plane reserved when resolution code=2

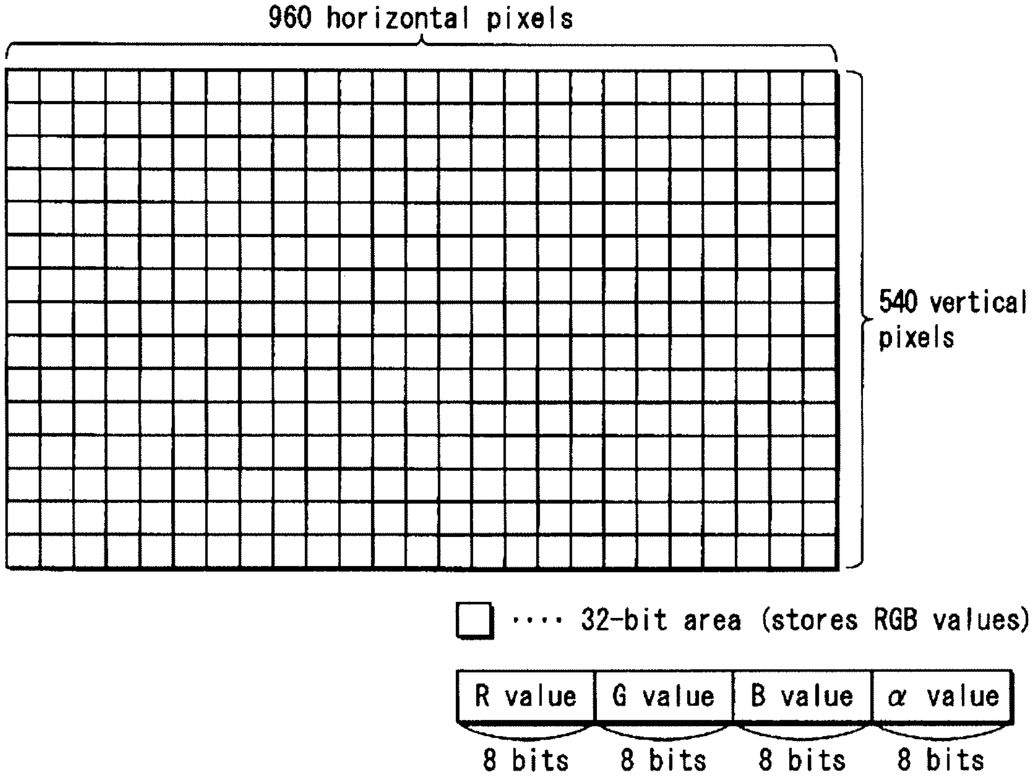


FIG. 25B

Graphics plane reserved when resolution code=3

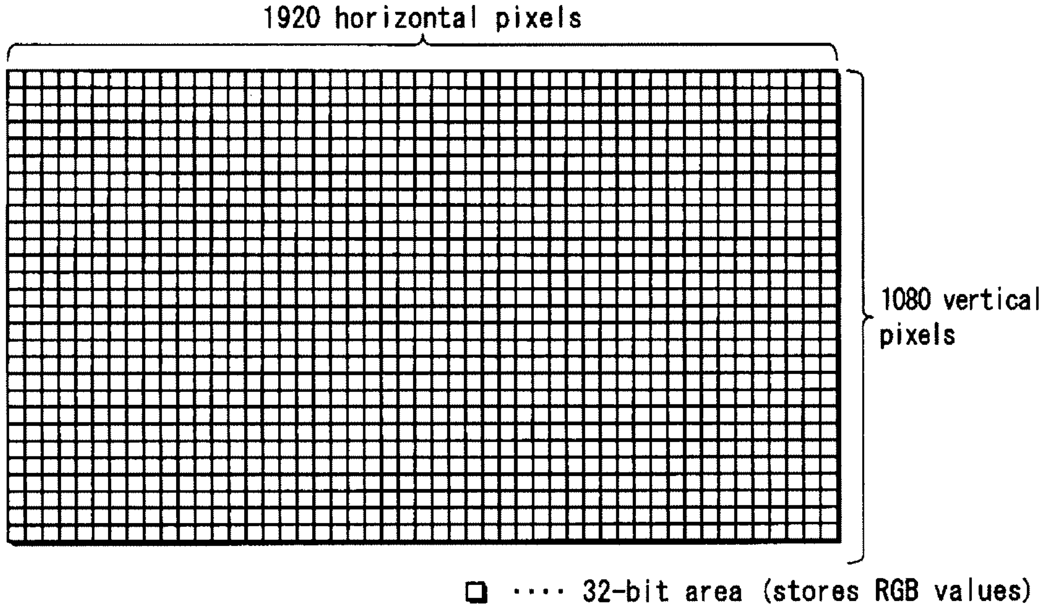

FIG. 26

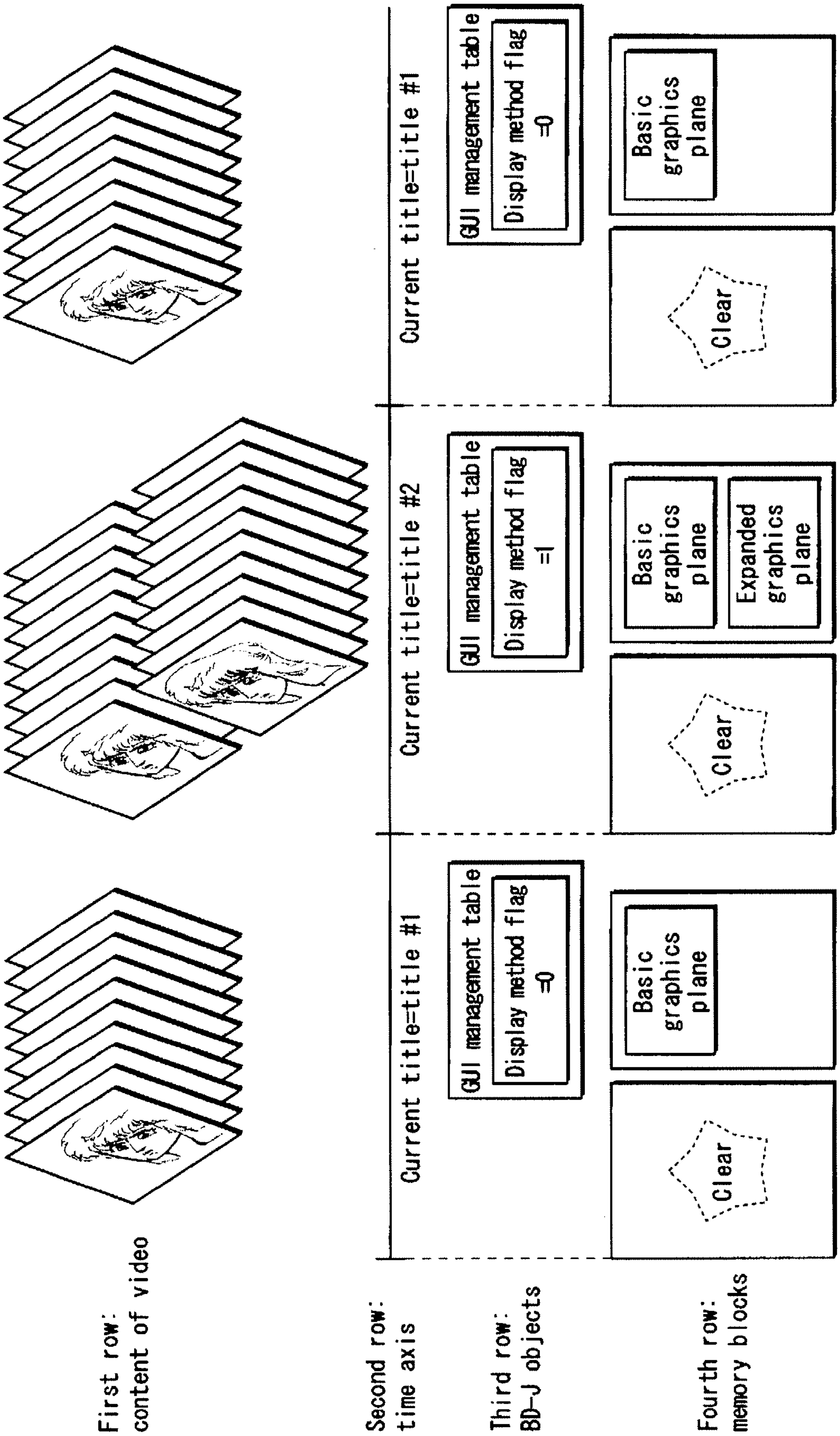
First row: content of video
Second row: time axis
Third row: BD-J objects
Fourth row: memory blocks
Planar view
Stereoscopic view
Planar view
Current title=title #1
Current title=title #2
Current title=title #1
GUI management table
Display method flag =0
GUI management table
Display method flag =1
GUI management table
Display method flag =0
Clear
Basic graphics plane
Clear
Basic graphics plane
Expanded graphics plane
Clear
Basic graphics plane

FIG. 27

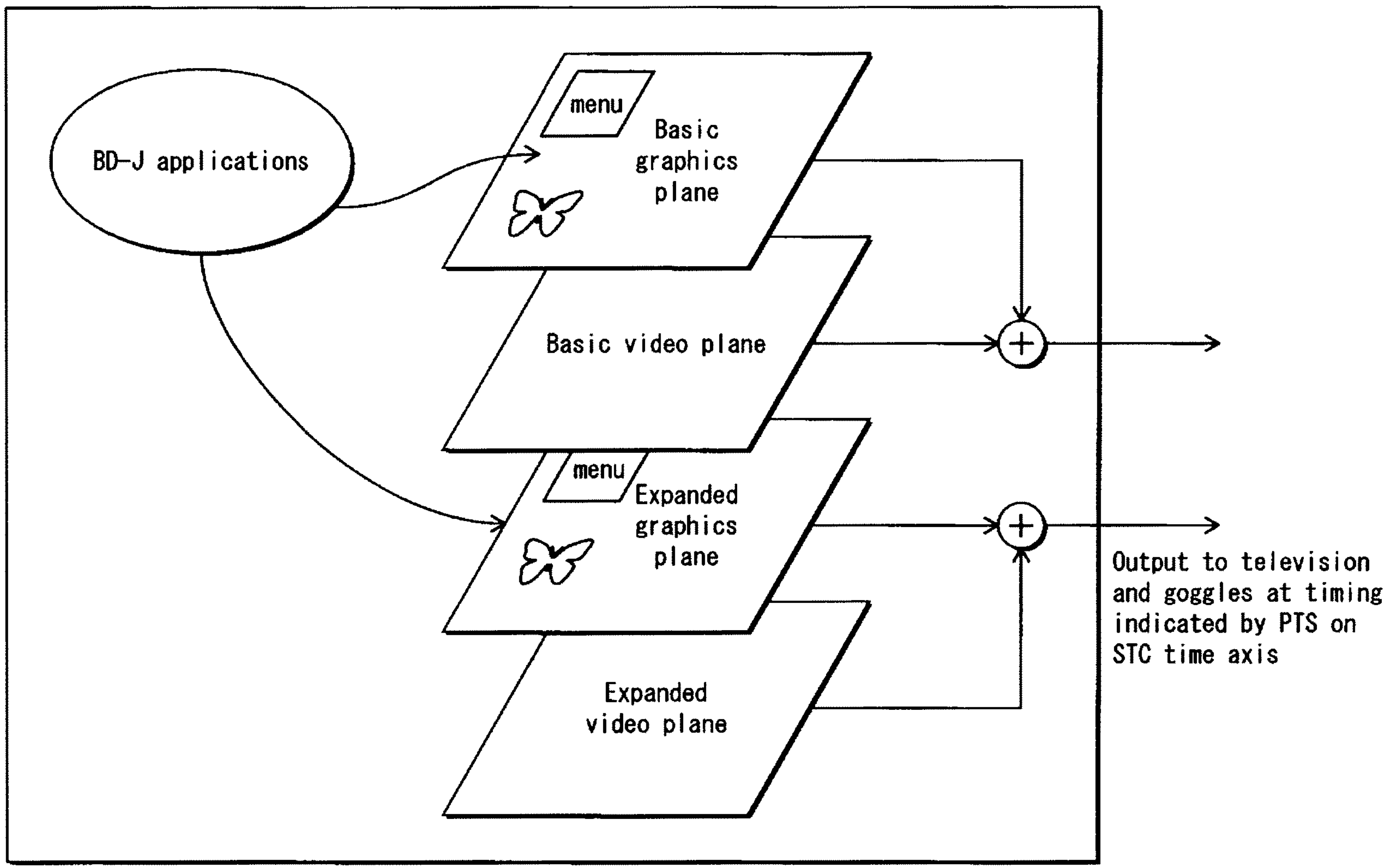
BD-J applications
menu
Basic graphics plane
Basic video plane
menu
Expanded graphics plane
Expanded video plane
Output to television and goggles at timing indicated by PTS on STC time axis

FIG. 28

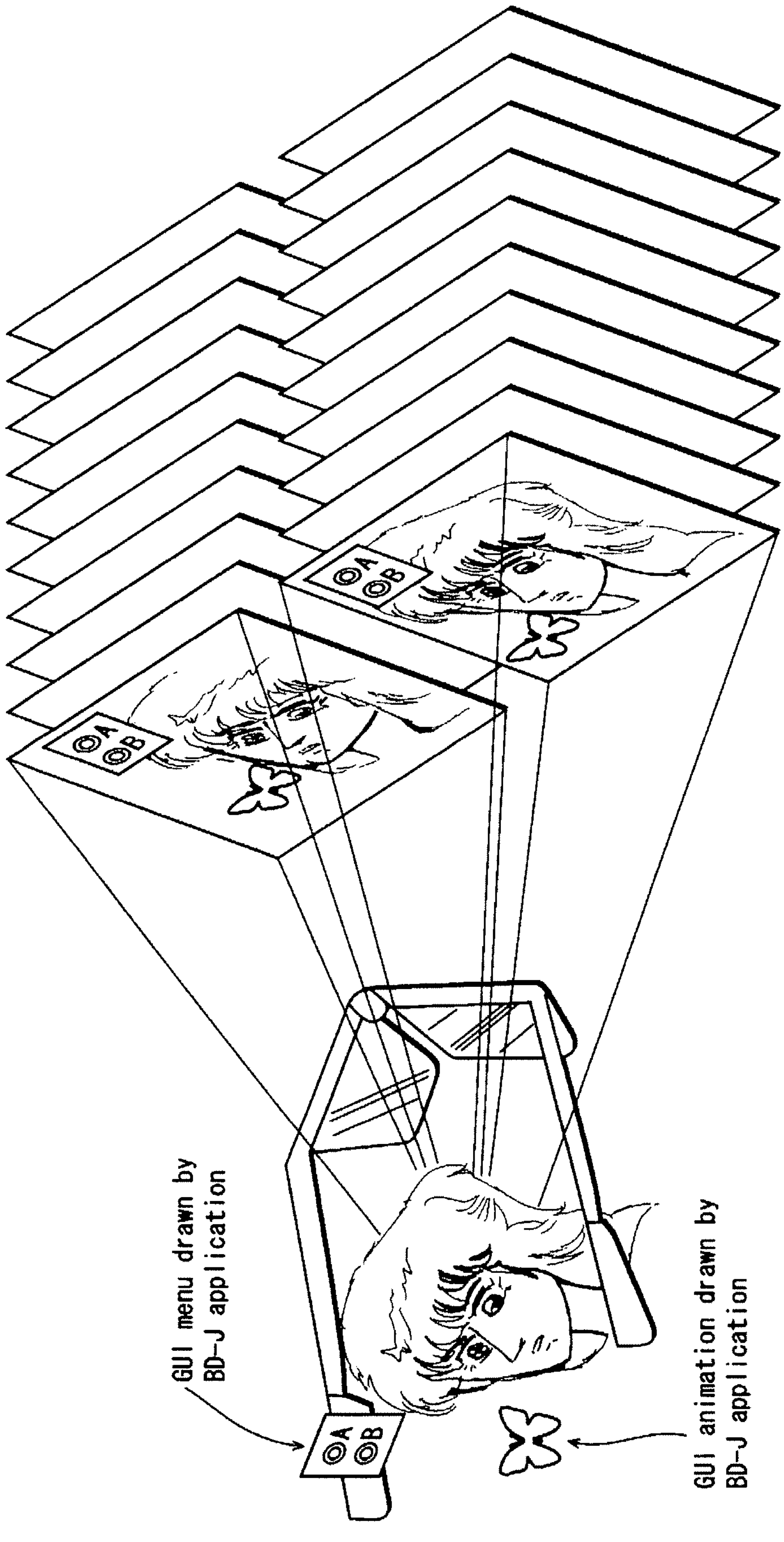
GUI menu drawn by
BD-J application
GUI animation drawn by
BD-J application

FIG. 29

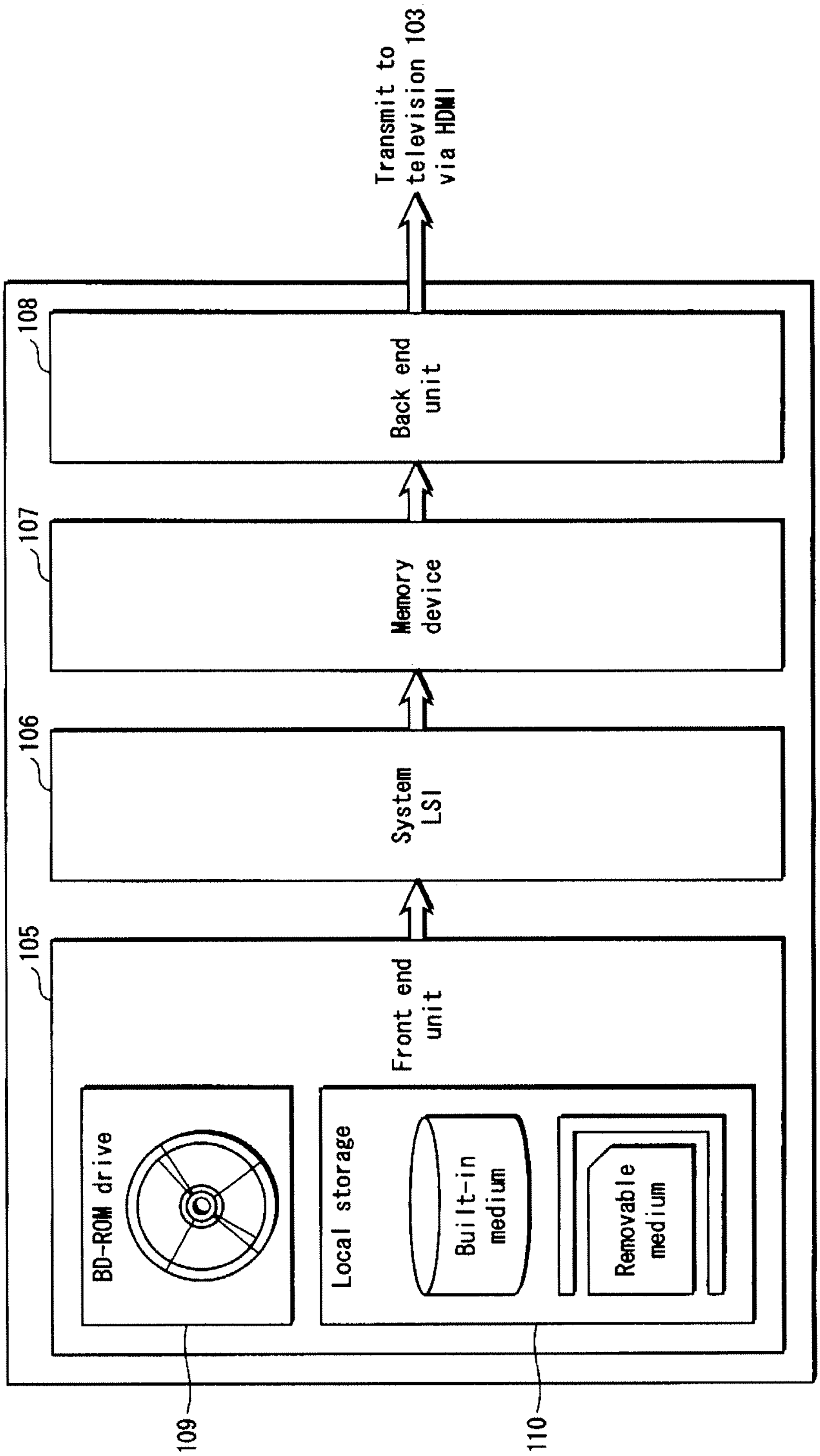

Transmit to television 103 via HDMI
108
Back end unit
107
Memory device
106
System LSI
105
Front end unit
BD-ROM drive
Local storage
Built-in medium
Removable medium
109
110

FIG. 30

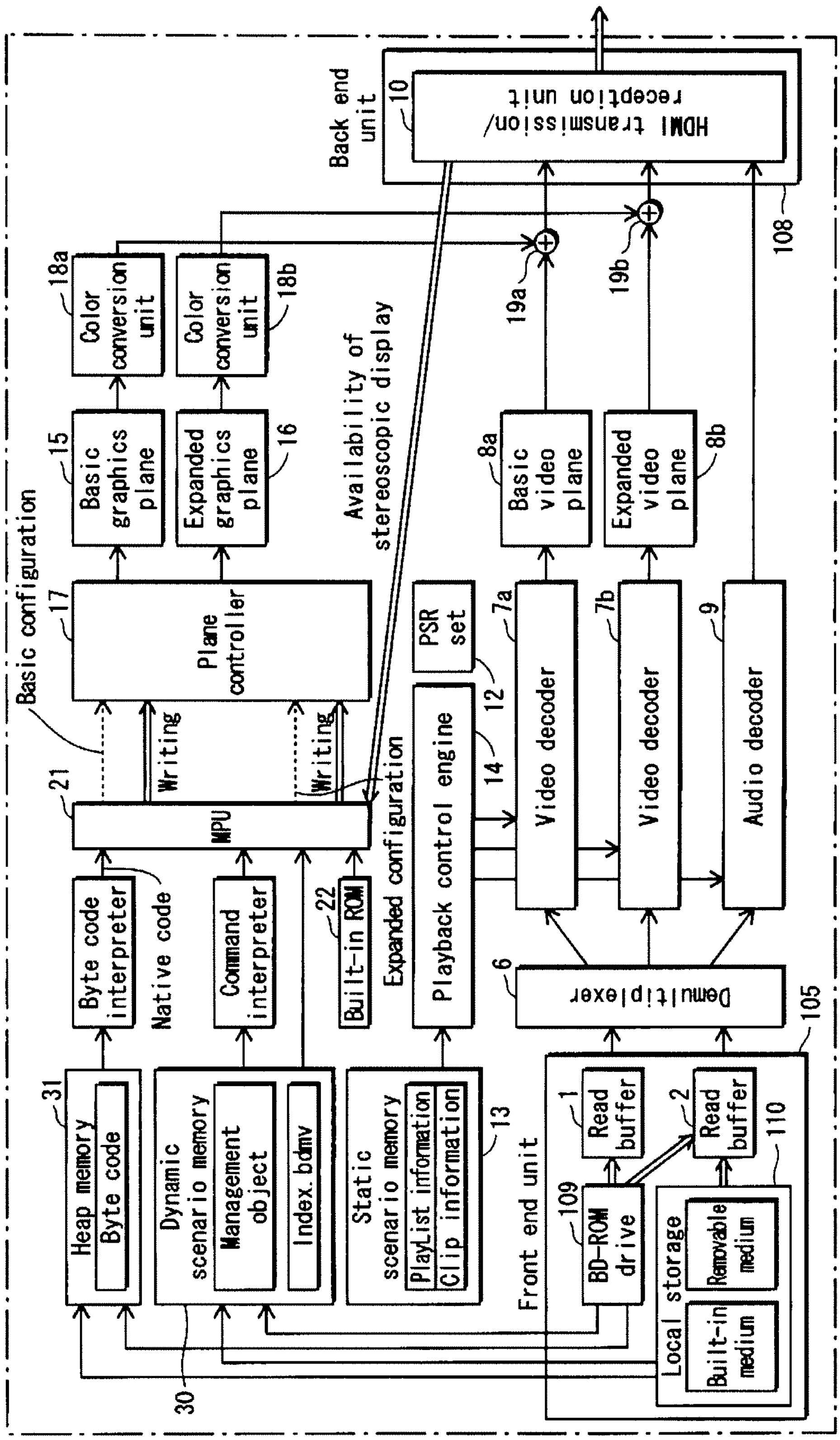
Basic configuration
17
Plane controller
15
Basic graphics plane
16
Expanded graphics plane
18a
Color conversion unit
18b
Color conversion unit
Availability of stereoscopic display
Back end unit
10
HDMI transmission/reception unit
108
19a
19b
8a
Basic video plane
8b
Expanded video plane
PSR set
12
7a
Video decoder
7b
Video decoder
9
Audio decoder
14
Playback control engine
21
MPU
Writing
Writing
Expanded configuration
22
Built-in ROM
Byte code interpreter
Native code
Command interpreter
6
Demultiplexer
105
31
Heap memory
Byte code
Dynamic scenario memory
Management object
Index.bdmv
30
Static scenario memory
PlayList information
Clip information
13
Front end unit
109
BD-ROM drive
1
Read buffer
2
Read buffer
110
Local storage
Removable medium
Built-in medium

FIG. 31

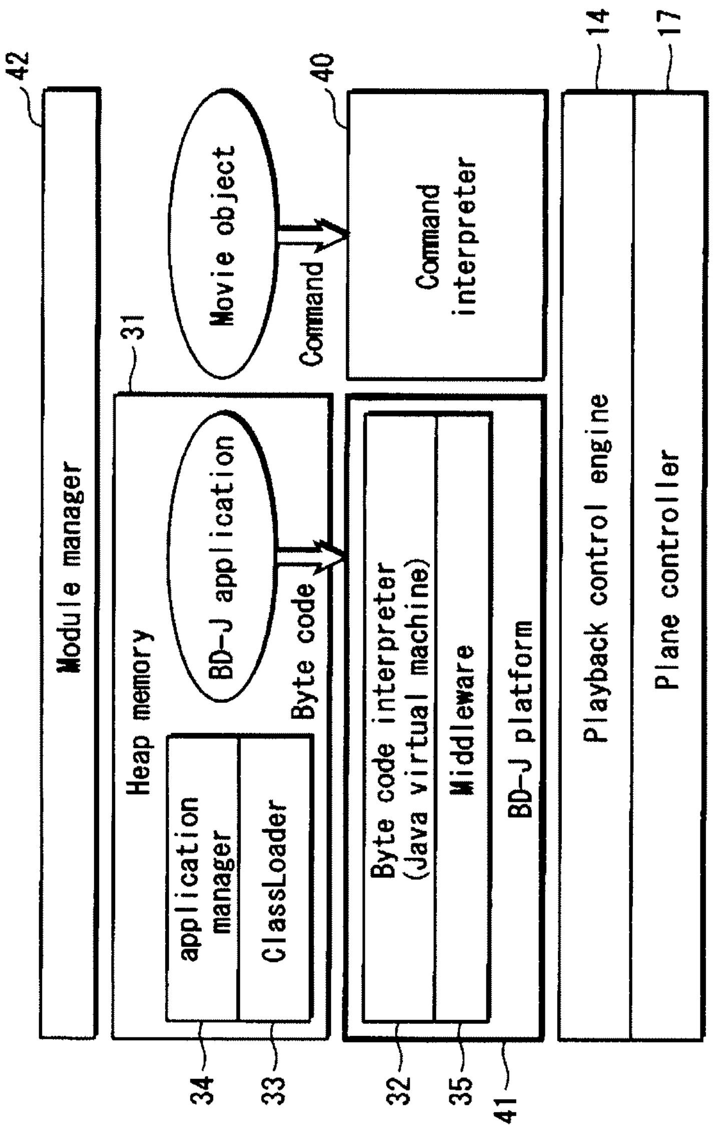

Module manager
42
Heap memory
31
application manager
ClassLoader
34
33
BD-J application
Byte code
Movie object
Command
40
Command interpreter
Byte code interpreter (Java virtual machine)
Middleware
BD-J platform
32
35
41
Playback control engine
Plane controller
14
17

FIG. 32

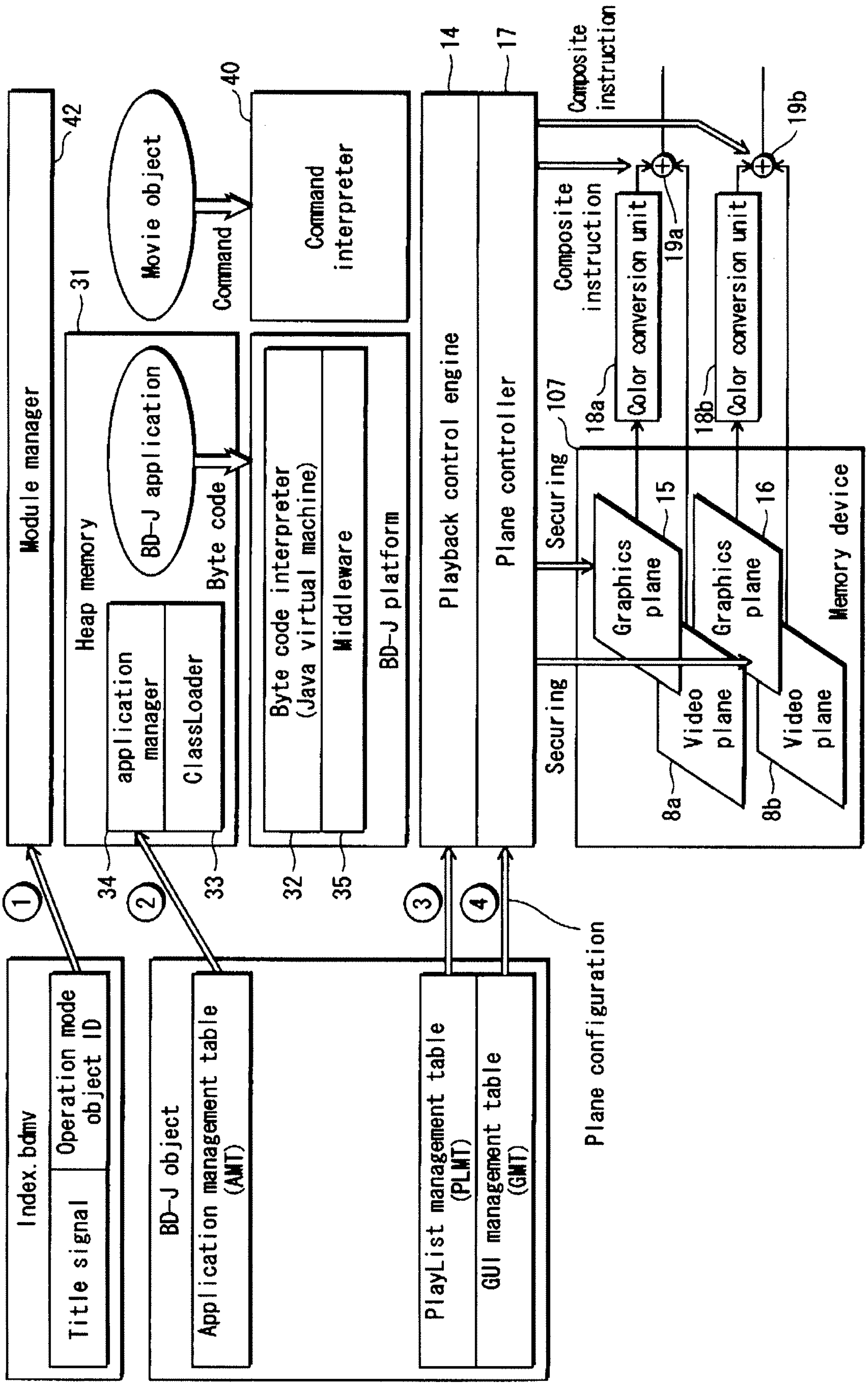
Index.bdmv
Title signal
Operation mode object ID
BD-J object
Application management table (AMT)
PlayList management table (PLMT)
GUI management table (GMT)
Plane configuration
1
2
3
4
Module manager
42
Heap memory
31
application manager
ClassLoader
34
33
BD-J application
Byte code
Movie object
Command
Command interpreter
40
Byte code interpreter (Java virtual machine)
Middleware
BD-J platform
32
35
Playback control engine
Plane controller
14
17
Securing
Securing
107
Graphics plane
15
Graphics plane
16
Video plane
Video plane
8a
8b
Memory device
Color conversion unit
18a
Color conversion unit
18b
19a
19b
Composite instruction
Composite instruction

FIG. 33

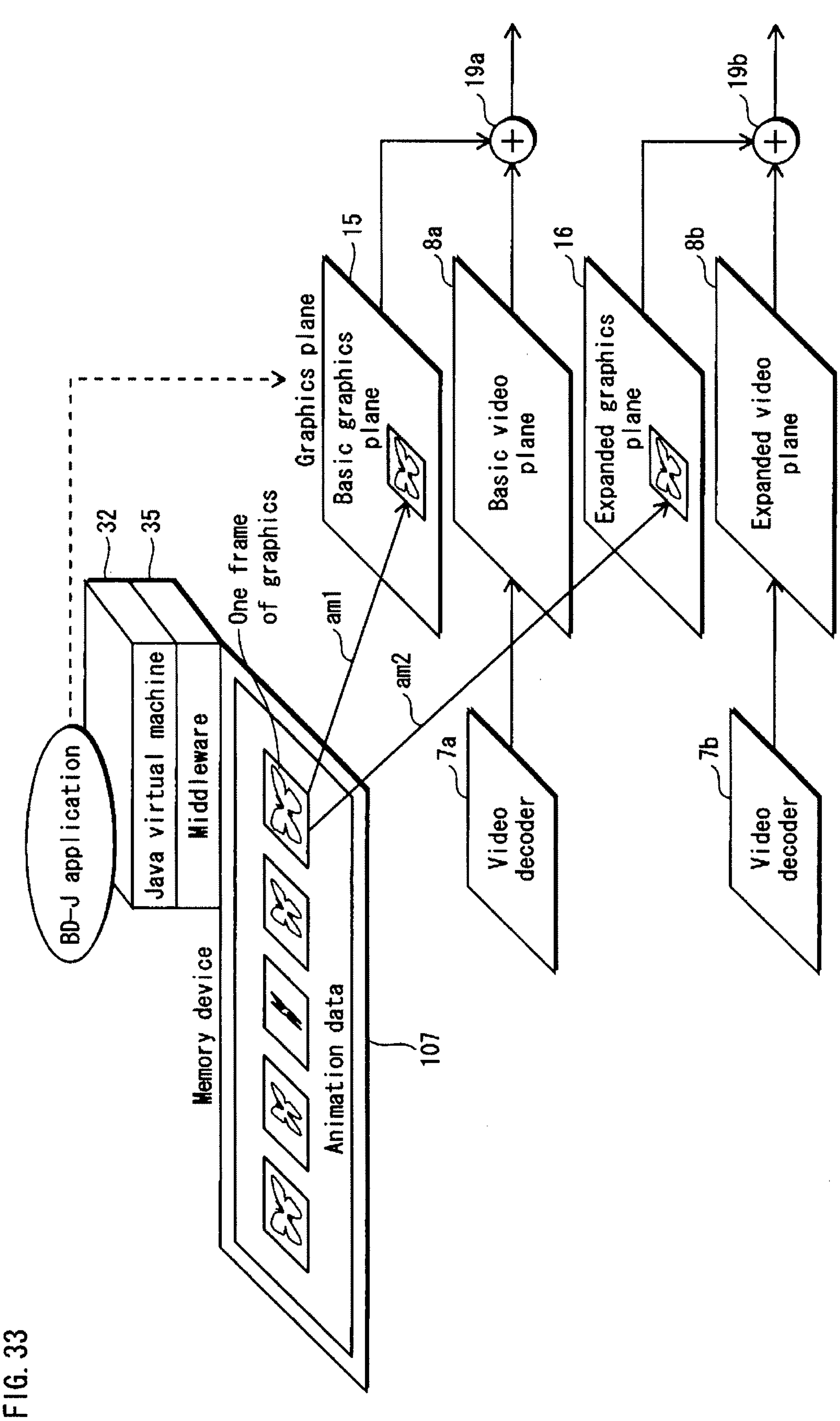
BD-J application
32
35
Java virtual machine
Middleware
Memory device
Animation data
107
One frame of graphics
am1
am2
Graphics plane
Basic graphics plane
15
Basic video plane
8a
Expanded graphics plane
16
Expanded video plane
8b
19a
19b
Video decoder
7a
Video decoder
7b

FIG. 34

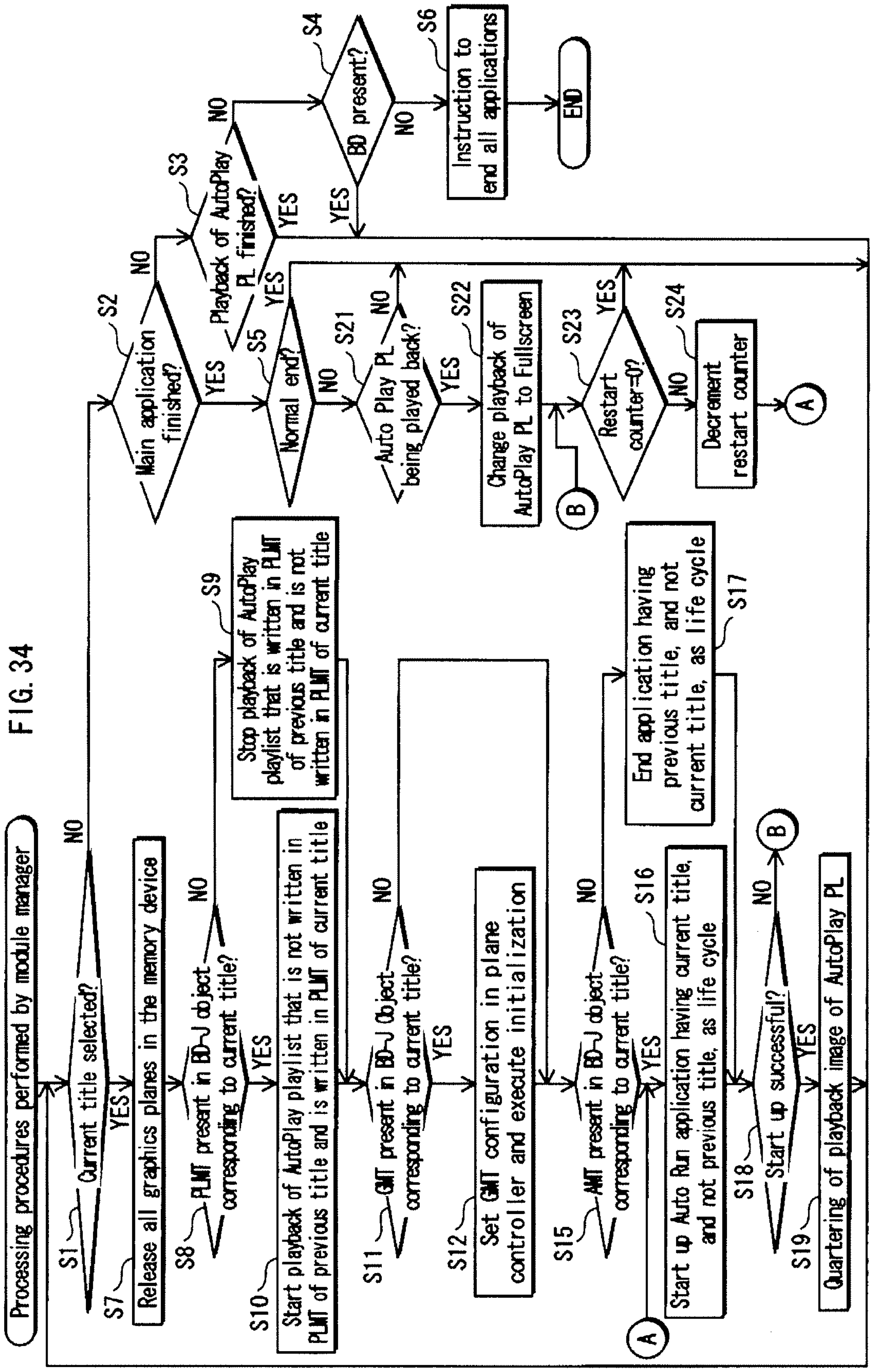

Processing procedures performed by module manager
S1
Current title selected?
YES
NO
S2
Main application finished?
YES
NO
S3
Playback of AutoPlay PL finished?
YES
NO
S4
BD present?
YES
NO
S6
Instruction to end all applications
END
S5
Normal end?
YES
NO
S21
Auto Play PL being played back?
YES
NO
S22
Change playback of AutoPlay PL to Fullscreen
S23
Restart counter=0?
YES
NO
S24
Decrement restart counter
A
B
S7
Release all graphics planes in the memory device
S8
PLMT present in BD-J object corresponding to current title?
YES
NO
S9
Stop playback of AutoPlay playlist that is written in PLMT of previous title and is not written in PLMT of current title
S10
Start playback of AutoPlay playlist that is not written in PLMT of previous title and is written in PLMT of current title
S11
GMT present in BD-J Object corresponding to current title?
YES
NO
S12
Set GMT configuration in plane controller and execute initialization
S15
AMT present in BD-J object corresponding to current title?
YES
NO
S16
Start up Auto Run application having current title, and not previous title, as life cycle
S17
End application having previous title, and not current title, as life cycle
S18
Start up successful?
YES
NO
S19
Quartering of playback image of AutoPlay PL

FIG. 35

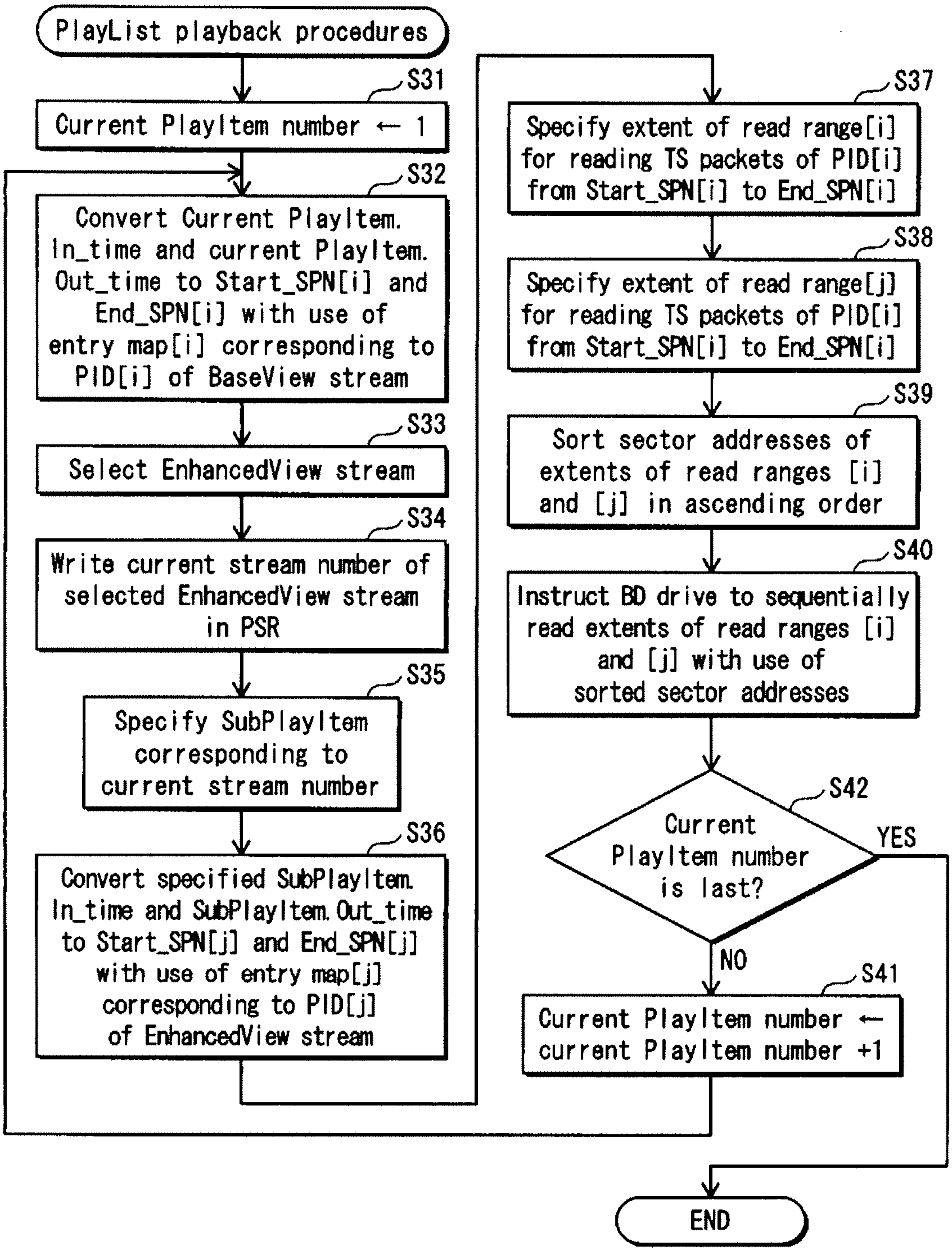
PlayList playback procedures
S31
Current PlayItem number ← 1
S32
Convert Current PlayItem.In_time and current PlayItem.Out_time to Start_SPN[i] and End_SPN[i] with use of entry map[i] corresponding to PID[i] of BaseView stream
S33
Select EnhancedView stream
S34
Write current stream number of selected EnhancedView stream in PSR
S35
Specify SubPlayItem corresponding to current stream number
S36
Convert specified SubPlayItem.In_time and SubPlayItem.Out_time to Start_SPN[j] and End_SPN[j] with use of entry map[j] corresponding to PID[j] of EnhancedView stream
S37
Specify extent of read range[i] for reading TS packets of PID[i] from Start_SPN[i] to End_SPN[i]
S38
Specify extent of read range[j] for reading TS packets of PID[i] from Start_SPN[i] to End_SPN[i]
S39
Sort sector addresses of extents of read ranges [i] and [j] in ascending order
S40
Instruct BD drive to sequentially read extents of read ranges [i] and [j] with use of sorted sector addresses
S42
Current PlayItem number is last?
YES
NO
S41
Current PlayItem number ← current PlayItem number +1
END

FIG. 36

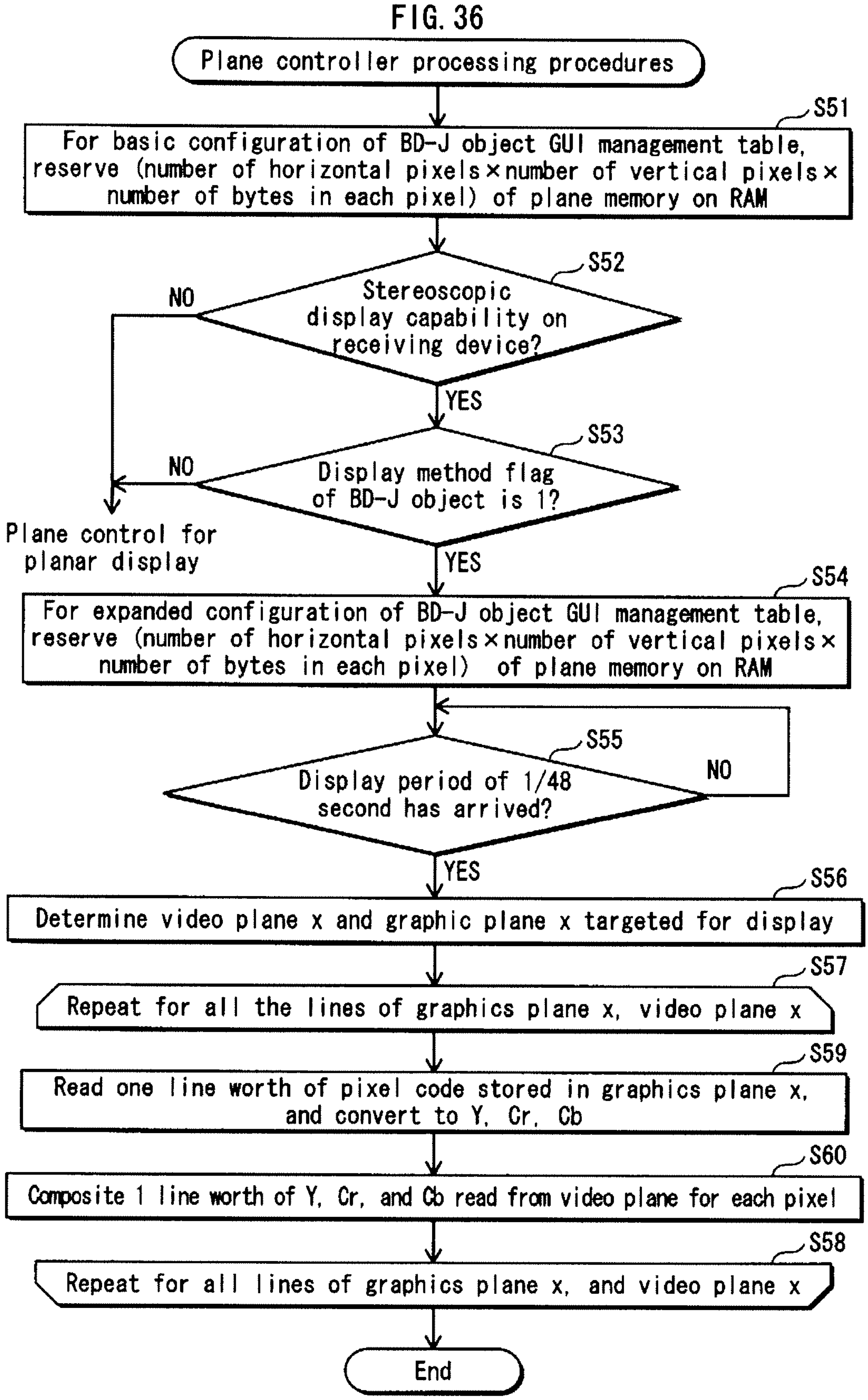
Plane controller processing procedures
S51
For basic configuration of BD-J object GUI management table, reserve (number of horizontal pixels×number of vertical pixels×number of bytes in each pixel) of plane memory on RAM
S52
Stereoscopic display capability on receiving device?
NO
YES
S53
Display method flag of BD-J object is 1?
NO
Plane control for planar display
YES
S54
For expanded configuration of BD-J object GUI management table, reserve (number of horizontal pixels×number of vertical pixels×number of bytes in each pixel) of plane memory on RAM
S55
Display period of 1/48 second has arrived?
NO
YES
S56
Determine video plane x and graphic plane x targeted for display
S57
Repeat for all the lines of graphics plane x, video plane x
S59
Read one line worth of pixel code stored in graphics plane x, and convert to Y, Cr, Cb
S60
Composite 1 line worth of Y, Cr, and Cb read from video plane for each pixel
S58
Repeat for all lines of graphics plane x, and video plane x
End

FIG. 37

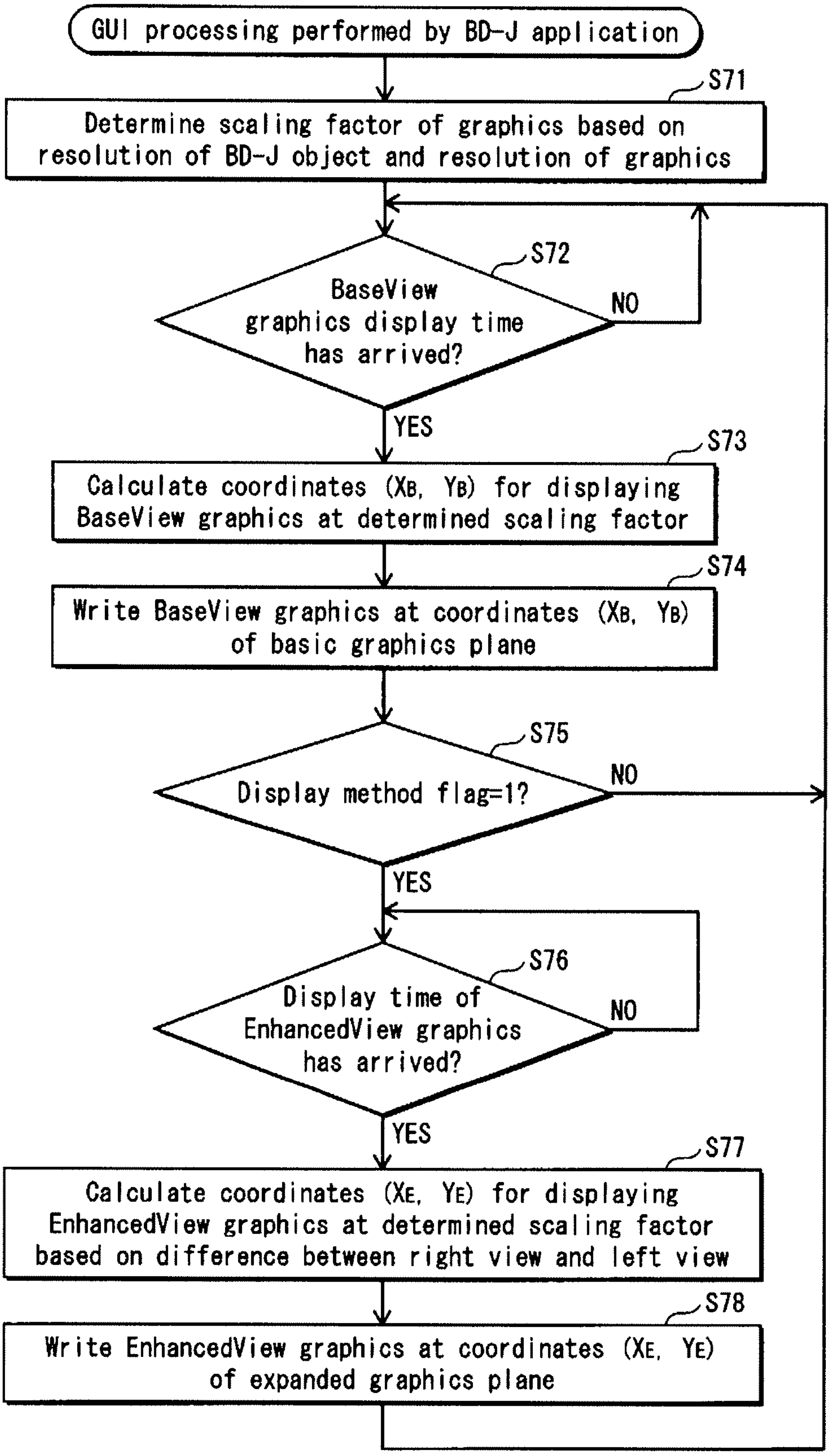
GUI processing performed by BD-J application
S71
Determine scaling factor of graphics based on resolution of BD-J object and resolution of graphics
S72
BaseView graphics display time has arrived?
NO
YES
S73
Calculate coordinates (XB, YB) for displaying BaseView graphics at determined scaling factor
S74
Write BaseView graphics at coordinates (XB, YB) of basic graphics plane
S75
Display method flag=1?
NO
YES
S76
Display time of EnhancedView graphics has arrived?
NO
YES
S77
Calculate coordinates (XE, YE) for displaying EnhancedView graphics at determined scaling factor based on difference between right view and left view
S78
Write EnhancedView graphics at coordinates (XE, YE) of expanded graphics plane

FIG. 38

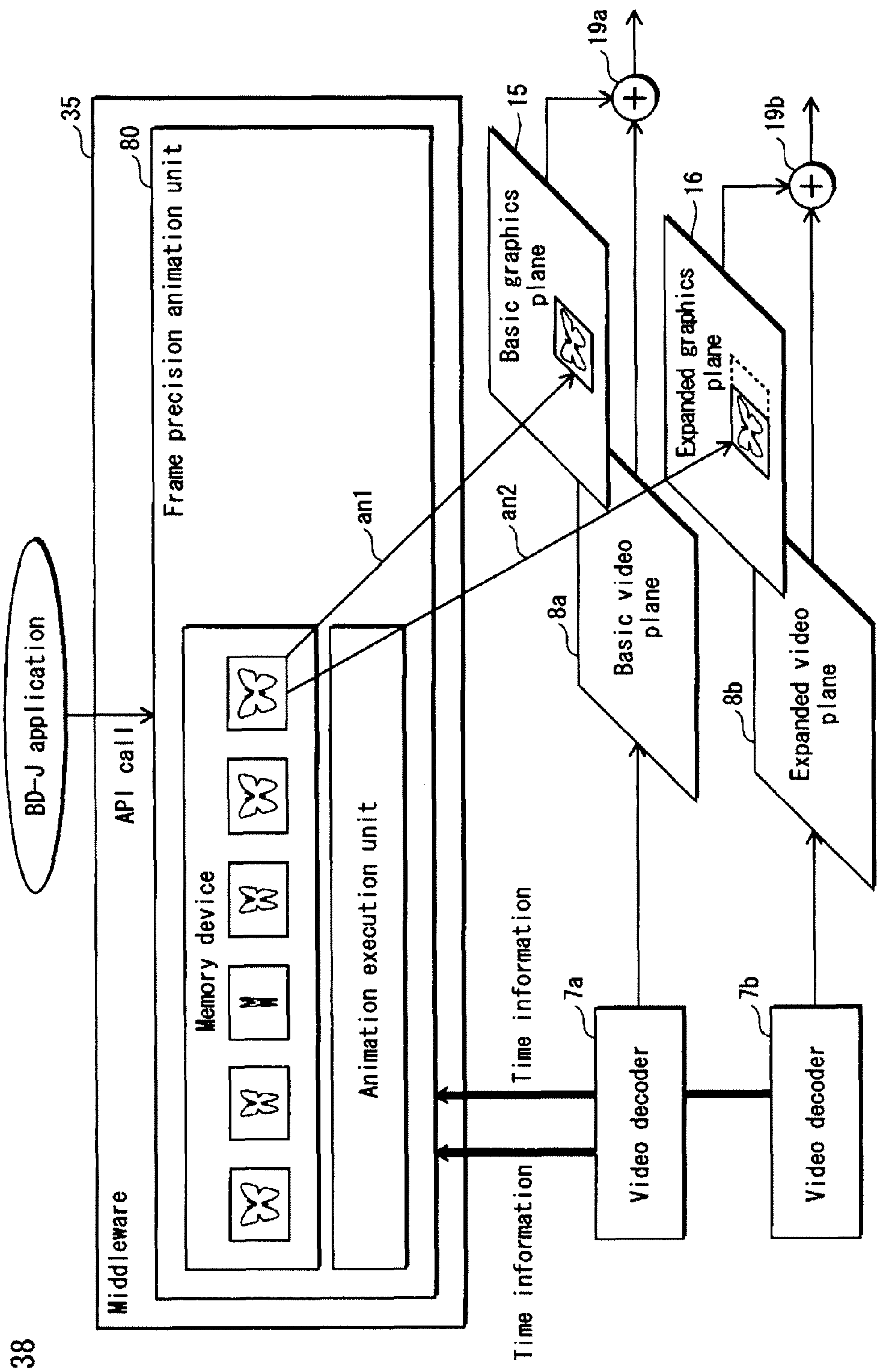
BD-J application
API call
35
Middleware
80
Frame precision animation unit
Memory device
Animation execution unit
an1
an2
Time information
Time information
7a
Video decoder
7b
Video decoder
8a
Basic video plane
8b
Expanded video plane
15
Basic graphics plane
16
Expanded graphics plane
19a
19b

## INTERNATIONAL SEARCH REPORT

International application No.
PCT/JP2009/002775

A. CLASSIFICATION OF SUBJECT MATTER
H04N13/00(2006.01)i, G06T15/00(2006.01)i, H04N5/93(2006.01)i

According to International Patent Classification (IPC) or to both national classification and IPC

B. FIELDS SEARCHED

Minimum documentation searched (classification system followed by classification symbols)
H04N13/00, G06T15/00, H04N5/93

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2006-244654 A (Matsushita Electric Industrial Co., Ltd.), 14 September, 2006 (14.09.06), Full text; all drawings (Family: none) | 5-12 |
| A | JP 2006-229768 A (Matsushita Electric Works, Ltd.), 31 August, 2006 (31.08.06), Par. Nos. [0012], [0018] (Family: none) | 5-12 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 September, 2009 (09.09.09) | 29 September, 2009 (29.09.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2009/002775

**Box No. II Observations where certain claims were found unsearchable (Continuation of item 2 of first sheet)**

This international search report has not been established in respect of certain claims under Article 17(2)(a) for the following reasons:

1. ☒ Claims Nos.: 1-4
because they relate to subject matter not required to be searched by this Authority, namely:
Claims 1-4 define "a recording medium". However, only the contents included in the information recorded on a recording medium have a feature. Therefore, the subject matter relates to mere presentation of information characterized only by the contents included (Continued to the extra sheet.)

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2009/002775

Continuation of Box No.II-1 of continuation of first sheet(2)

in the information. Consequently, the subject matter is not required to be searched by this International Searching Authority according to PCT Rule 17(2)(a)(i) and Rule 39.1.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004109330 A